(19) Europäisches Patentamt
European Patent Office
Office européen des brevets

(11) **EP 4 111 348 B1**

(12) **EUROPÄISCHE PATENTSCHRIFT**

(45) Veröffentlichungstag und Bekanntmachung des Hinweises auf die Patenterteilung:
**03.01.2024   Patentblatt 2024/01**

(21) Anmeldenummer: **21707978.9**

(22) Anmeldetag: **24.02.2021**

(51) Internationale Patentklassifikation (IPC):
**G06F 21/64** (2013.01)          **G06Q 20/36** (2012.01)
**G06Q 20/06** (2012.01)          **G06Q 20/02** (2012.01)
**G06Q 20/32** (2012.01)          **G06Q 20/38** (2012.01)

(52) Gemeinsame Patentklassifikation (CPC):
**G06F 21/64; G06Q 20/02; G06Q 20/0655;**
**G06Q 20/327; G06Q 20/3678; G06Q 20/3823;**
**G06Q 20/3825; G06Q 20/3827**

(86) Internationale Anmeldenummer:
**PCT/EP2021/054543**

(87) Internationale Veröffentlichungsnummer:
**WO 2021/170645 (02.09.2021 Gazette 2021/35)**

(54) **VERFAHREN ZUM DIREKTEN ÜBERTRAGEN VON ELEKTRONISCHEN MÜNZDATENSÄTZEN ZWISCHEN ENDGERÄTEN, BEZAHLSYSTEM, WÄHRUNGSSYSTEM UND ÜBERWACHUNGSEINHEIT**

METHOD FOR DIRECTLY TRANSMITTING ELECTRONIC COIN DATASETS BETWEEN TERMINALS, PAYMENT SYSTEM, PROTECTION SYSTEM, AND MONITORING UNIT

PROCÉDÉ DE TRANSMISSION DIRECTE DE JEUX DE DONNÉES DE PIÈCES DE MONNAIE ÉLECTRONIQUES ENTRE TERMINAUX, SYSTÈME DE PAIEMENT, SYSTÈME DE PROTECTION ET UNITÉ DE SURVEILLANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.02.2020   DE 102020104906**

(43) Veröffentlichungstag der Anmeldung:
**04.01.2023   Patentblatt 2023/01**

(73) Patentinhaber: **Giesecke+Devrient advance52 GmbH**
**81677 München (DE)**

(72) Erfinder:
• **FRITZHANNS, Tilo**
  **80639 München (DE)**
• **GAWLAS, Florian**
  **80805 München (DE)**
• **SEIDEMANN, Wolfram**
  **81827 München (DE)**
• **VELEVA, Maria**
  **80689 München (DE)**

(74) Vertreter: **Giesecke + Devrient IP**
**Prinzregentenstraße 161**
**81677 München (DE)**

(56) Entgegenhaltungen:
**EP-A2- 3 549 082      US-A1- 2016 358 165**

• **ISABELLE SIMPLOT-RYL ET AL: "Distributed architectures for electronic cash schemes: a survey1", INTERNATIONAL JOURNAL OF PARALLEL, EMERGENT AND DISTRIBUTED SYSTEMS, Bd. 24, Nr. 3, 1. Juni 2009 (2009-06-01), Seiten 243-271, XP055672436, United Kingdom ISSN: 1744-5760, DOI: 10.1080/17445760802441671**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

TECHNISCHES GEBIET DER ERFINDUNG

Die Erfindung betrifft ein Verfahren zum direkten Übertragen von elektronischen Münzdatensätzen zwischen Endgeräten. Weiter betrifft die Erfindung ein Bezahlsystem zum Austauschen von monetären Beträgen und ein Währungssystem.

TECHNISCHER HINTERGRUND DER ERFINDUNG

Sicherheit von Bezahltransaktionen und den dazugehörigen Bezahltransaktionsdaten bedeutet sowohl Schutz der Vertraulichkeit der ausgetauschten Daten; als auch Schutz der Integrität der ausgetauschten Daten; als auch Schutz der Verfügbarkeit der ausgetauschten Daten.

Herkömmliche Blockchain-basierte Bezahltransaktionen, wie beispielsweise Bitcoin, stellen einen hohen Schutz der Integrität dar. Wenn elektronische Münzdatensätze, auch "Coins" genannt, in einer Blockchain-Technologie den Besitzer wechseln, werden viele Informationen veröffentlicht. Somit sind derartige Bezahltransaktionen und insbesondere die ausgetauschten Daten nicht vollkommen vertraulich. Zudem sind die Bezahltransaktionen sehr rechenintensiv und damit energieaufwendig.

Daher werden herkömmlich oft anstelle der vertraulichen Daten nur die Hash-Werte der vertraulichen Daten in einem Blockchain-Ledger abgespeichert. Die korrespondierenden Klartext-Daten müssen dann außerhalb der Blockchain verwaltet werden. Für elektronische Münzdatensätze sind solche Konzepte bislang nicht anwendbar, weil sie grundlegende Kontrollfunktionen, insbesondere (1) das Erkennen von Mehrfachausgabe-Verfahren, auch Double-Spending, genannt und (2) das Erkennen von ungedeckten Zahlungen nicht aufweisen. Im Fall (1) versucht jemand denselben Münzdatensatz mehrfach auszugeben und im zweiten Fall versucht jemand einen Münzdatensatz auszugeben, obwohl er kein Guthaben (mehr) besitzt.

Aus der DE 10 2009 038 645 A1 und der DE 10 2009 034 436 A1 sind Systeme zum Übertragen von geldwerten Beträgen in Form elektronischer Datensätze, bei denen ein Bezahlen mit Duplikaten des Datensatzes verhindert und ein hoher Grad an Manipulationssicherheit gegeben ist, bekannt, wobei hier komplexe Strukturen und aufwendige Verschlüsselungs- und Signiervorgänge beim Austausch erforderlich sind. Die haben sich als wenig praxistauglich herausgestellt.

In der WO 2016/200885 A1 ist ein Verfahren zur Verschlüsselung eines in einem Blockchain-Ledger getätigten Betrags beschrieben, wobei die Verifizierbarkeit der Transaktion erhalten bleibt. Dabei wird ein Verschleierungsbetrag zu einem Eingangswert addiert. Dann wird ein Ausgangswert erzeugt und verschlüsselt. Sowohl der Eingangswert als auch der Ausgangswert liegen innerhalb eines Wertebereichs, wobei eine Summe von zwei beliebigen Werten innerhalb des Bereichs einen Schwellenwert nicht überschreitet. Die Summe aus dem verschlüsselten Eingangswert und dem verschlüsselten Ausgangswert kann gleich Null sein. Bereichsprüfungen, sogenannte Range-Proofs, sind jedem der Eingangswerte und dem Ausgangswert zugeordnet. Diese Bereichsprüfungen beweisen, dass der Eingangswert und der Ausgangswert in den Wertebereich fallen. Jeder öffentliche Schlüssel kann mit einer Ringsignatur signiert werden, die auf einem öffentlichen Schlüssel eines Empfängers in der Transaktion basiert. In diesem Verfahren ist eine Blockchain-Technologie notwendig, die nach Erhalt eines Münzdatensatzes angerufen werden muss, um den Münzdatensatz zu validieren.

Es ist Aufgabe der vorliegenden Erfindung, ein Verfahren und ein System zu schaffen, in denen eine Bezahltransaktion sicher aber dennoch einfach ausgestaltet ist. Dabei soll insbesondere eine direkte Bezahlung zwischen Geräten, wie Token, Smartphones aber auch Maschinen, wie Kassenterminals oder Automaten, geschaffen werden, die anonym ist. Die Münzdatensätze sollen nach dem Erhalt sofort weiterverwendet werden können, um eine Bezahlung auch ohne Verbindung zu einer Online-Einheit, beispielsweise einer DLT, zu ermöglichen. Mehrere Münzdatensätze sollen beim Benutzer beliebig miteinander kombiniert und/oder aufgeteilt werden können, um ein flexibles Austauschen zu ermöglichen. Die ausgetauschten Münzdatensätze sollen einerseits vertraulich gegenüber anderen Systemteilnehmern sein, aber andererseits jedem Systemteilnehmer erlauben, grundlegende Überwachungsprüfungen durchzuführen, insbesondere das Erkennen von Mehrfach-Ausgabe-Versuchen und das Erkennen von Versuchen mit nicht vorhandenen Beträgen zu zahlen. Es soll perspektivisch möglich sein, ganz auf Bargeld (Banknoten und analoge Münzen), zumindest aber auf analoge Münzen, zu verzichten.

Das Modifizieren, also beispielsweise das Aufteilen, das Verbinden (=Kombinieren) oder das Umschalten der elektronischen Münzdatensätze soll ohne hohen Rechenaufwand und mit minimalem Datenvolumen für die Übertragung der Münzdatensätze erfolgen. Das Verifizieren des Modifizierens soll ohne aufwendiges Nachweisen entsprechender Gültigkeit (Range-Proofs) sicher erfolgen können, um den Grad an Flexibilität und damit die Nutzerfreundlichkeit zu erhöhen.

In dem Artikel "Distributed architecture for electronic cash schemes: a survey" - International Journal of parallel, emergent and distributed systems, Bd. 24, Nr. 3, 1.Juni 2009, Seite 243-271 von Isabelle Simplot-Ryl et al - wird ein e-cash-Schema beschrieben, in welchem ein Kunde dem Händler direkt eine digitale Münze, die einem Betrag entspricht, sendet und die Münzen in einer zentralen Instanz registriert sind. EP 3549082 A2 beschreibt eine Form der Maskierung von Transaktionsdaten. US 2016/0358165 A1 zeigt ein Blockchain-System mit vorgegebenem Maskierungsmodus und offenbart die Merkmale des Oberbegriffs von Anspruch 1.

ZUSAMMENFASSUNG DER ERFINDUNG

Die gestellten Aufgaben werden mit den Merkmalen der unabhängigen Patentansprüche gelöst. Weitere vorteilhafte Ausgestaltungen sind in den abhängigen Patentansprüchen beschrieben.

Die Aufgabe wird insbesondere durch ein Verfahren zum direkten Übertragen von elektronischen Münzdatensätzen zwischen Endgeräten zum Bezahlen in einem Bezahlsystem gelöst, wobei ein erstes Endgerät zumindest einen elektronischen Münzdatensatz aufweist, wobei der zumindest eine elektronische Münzdatensatz einen monetären Betrag und einen Verschleierungsbetrag als Münzdatensatzelemente aufweist, mit den Schritten: Maskieren eines ersten Münzdatensatzelements des elektronischen Münzdatensatzes, bevorzugt im ersten Endgerät, durch Anwenden einer Einwegfunktion, die beispielsweise homomorph ist, auf das erste Münzdatensatzelement des elektronischen Münzdatensatzes, bevorzugt auf dessen Verschleierungsbetrag, zum Erhalten eines maskierten ersten elektronischen Münzdatensatzelements; Hinzufügen eines zweiten Münzdatensatzelements des elektronischen Münzdatensatzes zu dem maskierten ersten elektronischen Münzdatensatzelement, bevorzugt im ersten Endgerät, zum Erhalten eines quasi-maskierten elektronischen Münzdatensatzes; und Senden des quasi-maskierten elektronischen Münzdatensatzes an eine Überwachungsinstanz zum Registrieren des elektronischen Münzdatensatzes.

Somit wird in einem Zwischenergebnis ein maskiertes Münzdatensatzelement errechnet (erhalten) und dieses dann mit einem Münzdatensatzelement des Münzdatensatzes erweitert.

Das hinzuzufügende Münzdatensatzelement ist unmaskiert. Es kann in einer Ausgestaltung des Verfahrens direkt aus dem entsprechenden Münzdatensatz entnommen werden. Es wird dem vollständig maskierten Münzdatensatz hinzugefügt und kann ohne Demaskieren des Münzdatensatzes ausgelesen, entnommen und/oder interpretiert werden.

Das erste Münzdatensatzelement des Maskieren-Schritts ist vom zweiten Münzdatensatzelement des Hinzufügen-Schritts verschieden.

Mit diesem Verfahren wird sichergestellt, dass der elektronische Münzdatensatz nicht offengelegt an die Überwachungsinstanz gesendet wird, aber dennoch eine Überprüfung in der Überwachungsinstanz hinreichend sicher durchgeführt werden kann.

Das Hinzufügen wird durch eine entsprechende (logische) Operation durchgeführt. Diese Operation fügt das maskierte erste elektronische Münzdatensatzelement und das zweite Münzdatensatzelement des Münzdatensatzes zusammen. Es entsteht dadurch ein neuer Datensatz, nämlich der quasi-maskierte elektronische Münzdatensatz. Das Hinzufügen wird beispielsweise auch als Konkatenation oder Verkettung oder Anfügen bezeichnet. Auch eine Datenstruktur, wie TLV, kann vorgesehen sein, um das maskierte erste elektronische Münzdatensatzelement und das zweite Münzdatensatzelement des Münzdatensatzes zum quasi-maskierten elektronischen Münzdatensatz zusammenzuführen.

In einer bevorzugten Ausgestaltung ist das erste Münzdatensatzelement des Maskieren-Schritts der Verschleierungsbetrag des elektronischen Münzdatensatzes. Der Verschleierungsbetrag stellt ein Geheimnis für die Überwachungsinstanz dar und ist nur in einer Direkttransaktionsschicht zwischen denjenigen Teilnehmern bekannt, die sich den Münzdatensatz gegenseitig übertragen.

In einer bevorzugten Ausgestaltung ist das hinzugefügte (zweite) Münzdatensatzelement der monetäre Betrag des elektronischen Münzdatensatzes. Dadurch wird ein betragsteiloffener maskierter elektronischer Münzdatensatz als der quasi-maskierte elektronische Münzdatensatz erhalten. Mit einem derartigen quasi-maskierte elektronischen Münzdatensatz kann der monetäre Betrag sofort und ohne weitere Entschlüsselungs- oder Demaskieren-Schritte ausgelesen und interpretiert werden. Damit werden Teile des quasi-maskierten elektronischen Münzdatensatzes offen (betragsteiloffen) übertragen und registriert, andere Teile werden maskiert übertragen und registriert. Damit bleibt das Verfahren anonym und sicher, die übertragenen geldwerten Beträge können aber jederzeit verfolgt und registriert werden. Der Bezahlvorgang ist damit weiterhin anonym, obwohl die Betragstransfers transparent sind.

In einer bevorzugten Ausgestaltung ist das hinzugefügte (zweite) Münzdatensatzelement ein höherwertiger Betragsanteil des stellenweise in den höherwertigen und einen niederwertigen Betragsanteil aufgeteilten monetären Betrages des elektronischen Münzdatensatzes, wodurch ein nur hinsichtlich des höherwertigen Betragsanteils betragsteiloffener elektronischer Münzdatensatz als der quasi-maskierte elektronische Münzdatensatz erhalten wird. Mit einem derartigen elektronischen Münzdatensatz kann der höherwertige Betragsanteil sofort und ohne weitere Entschlüsselungs- oder Demaskieren-Schritte ausgelesen und interpretiert werden. Damit bleibt das Verfahren anonym und es ist zudem nicht offen verfügbar, welche Geldbeträge zwischen den Teilnehmereinheiten übertragen wird, die übertragenen geldwerten Beträge können dem Grunde nach jederzeit verfolgt und registriert werden. Der Bezahlvorgang ist damit weiterhin anonym, obwohl die Betragstransfers semi-transparent sind.

Bevorzugt ist der quasi-maskierte elektronische Münzdatensatz dann nur hinsichtlich des niederwertigen Betragsanteils maskiert.

Der höherwertige Betragsanteil repräsentiert einen Anteil des monetären Betrags der größer ist als der Anteil des monetären Betrags, der den niederwertigen Betragsanteil repräsentiert. Beispielsweise können höherwertige Stellen eines den monetären Betrag repräsentierenden (zweiten) Münzdatensatzelements, beispielsweise ein oder mehrere "most-significant bits, MSB", transparent übertragen werden. Übrige, niederwertige Stellen des, den monetären Betrag repräsentierenden Datenelements werden maskiert.

In einer bevorzugten Ausgestaltung umfasst das Verfahren weiter: Festlegen eines Maskierungsmodus aus zumindest zwei Maskierungsmodi, wobei in einem ersten Maskierungsmodus der quasi-maskierte elektronische Münzdatensatz an die Überwachungsinstanz zum Zweck des Registrierens gesendet wird und wobei in einem zweiten Maskierungsmodus der elektronische Münzdatensatz, bevorzugt im ersten Endgerät, durch Anwenden einer Einwegfunktion, die beispielsweise homomorph ist, auf den elektronischen Münzdatensatz zum Erhalten eines vollständig maskierten elektronischen Münzdatensatzes maskiert wird und der vollständig maskierte elektronische Münzdatensatz an die Überwachungsinstanz zum Zweck des Registrierens gesendet wird. Damit wird eine Maskierungsart auswählbar und konfigurierbar. Im Bezahlsystem kann damit pro Übertragungsvorgang und/oder generell festgelegt werden, mit welchem Grad an Anonymität die Münzdatensätze registriert werden sollen.

Bei Verwendung des zweiten Maskierungsmodus wird auf den Hinzufügen-Schritt verzichtet und es ist kein unmaskiertes Münzdatensatzelement im maskierten Münzdatensatz enthalten oder angefügt.

In einer bevorzugten Ausgestaltung umfasst das Verfahren einen dritten Maskierungsmodus mit: stellenwertweises Aufteilen des monetären Betrags des elektronischen Münzdatensatzes, bevorzugt im ersten Endgerät, in einen ersten monetären Betragsteil und in einen zweiten monetären Betragsteil, wobei die Basis des Stellenwerts beliebig ist: Maskieren des ersten monetären Betragsteils des monetären Betrags des elektronischen Münzdatensatzes, bevorzugt im ersten Endgerät, durch Anwenden der Einwegfunktion auf den ersten monetären Betragsteils des monetären Betrags des elektronischen Münzdatensatzes zum Erhalten eines maskierten ersten monetären Betragsteils und Hinzufügen (nur) des zweiten monetären Betragsteils zum Erhalten eines teilbetragsmaskierten (nachfolgend auch als teilmaskiert bezeichnet) elektronischen Münzdatensatzes. Die Auswahl des Stellenwerts erfolgt entweder anhand eines verfahrensweit vorgegebenen Vorgabewertes oder zufallsbasiert oder entsprechend einer Wahl des Endgeräts.

In einer Ausgestaltung des dritten Maskierungsmodus wird die Einwegfunktion auf eine Verknüpfung (Verkettung) von Verschleierungsbetrag und ersten monetären Betragsteils des elektronischen Münzdatensatzes angewendet, um eine maskierte Verknüpfung aus Verschleierungsbetrag und erstem monetären Betragsteil (als maskierten ersten Münzdatensatz) zu erhalten. Dieser maskierten Verknüpfung wird der zweite Betragsteil hinzugefügt, um den teilbetragsmaskierten elektronischen Münzdatensatz zu erhalten.

In einer bevorzugten Ausgestaltung ist der Schritt des Registrierens in Abhängigkeit des festgelegten Maskierungsmodus entweder das Registrieren des vollständig maskierten elektronischen Münzdatensatzes (für den zweiten Maskierungsmodus) oder des quasi-maskierten elektronischen Münzdatensatzes (für den ersten Maskierungsmodus)des teilbetragsmaskierten elektronischen Münzdatensatzes in der Überwachungsinstanz (für den dritten Maskierungsmodus).

Das Festlegen beziehungsweise das Auswählen des Maskierungsmodus kann im Verfahren fest vorgegeben sein, beispielsweise durch die Überwachungsinstanz oder einen Drittanbieter (Wallet-Anbieter). Damit wäre ein Verfahren vorgesehen, in welchem der Maskierungsmodus fest vorgegeben ist.

Alternativ könnte der Schritt des Festlegens durch ein Auswählen des Maskierungsmodus im ersten Endgerät erfolgen. Damit wäre ein agiles Verfahren vorgesehen, in welchem das jeweilige Endgerät den Maskierungsmodus selbst festlegt bzw. auswählt oder einem Benutzer des Endgeräts eine Möglichkeit zur Auswahl bereitstellt. Das Festlegen des Maskierungsmodus wäre dann beispielsweise pro Übertragungsvorgang möglich, sodass sich das Übertragen beispielsweise daran orientiert, ob der Empfänger des Münzdatensatzes im Bezahlsystem bekannt und validiert ist oder nicht.

In einer bevorzugten Ausgestaltung wird ein Parameter zum Festlegen des Maskierungsmodus von der Überwachungsinstanz oder einem Diensteanbieter vorgegeben. Bevorzugt wählt dann das Endgerät den Maskierungsmodus anhand dieses Parameters aus. Somit ist ein Endgerät eingerichtet, anhand des Parameters situationsbedingt zu entscheiden welcher Maskierungsmoduls ausgewählt beziehungsweise festgelegt wird. Ein Parameter zum Vorgeben des Maskierungsmodus könnte beispielsweise eine Mindestrechenleistung des Endgeräts oder eine maximale Zeitdauer zum Maskieren und Registrieren des Münzdatensatzes oder ein Grad an Geheimhaltung für den Münzdatensatz sein. Insbesondere kann dadurch ein vom ersten Endgerät verschiedenes anderes Endgerät möglicherweise einen anderen Maskierungsmodus auswählen, um den Vorgabeparameter einzuhalten.

In einer bevorzugten Ausgestaltung wird von einem (zuerst verwendeten) Maskierungsmodus in einen (darauffolgenden) anderen Maskierungsmodus für einen elektronischen Münzdatensatz durch das Endgerät gewechselt. Damit wird eine Interoperabilität zwischen einem vollständig maskierten, einem quasimaskierten und einem teilbetragsmaskierten elektronischen Münzdatensatz geschaffen, wodurch die Flexibilität des Übertragens vergrößert wird.

Beispielsweise kann ein quasi-maskierter Münzdatensatz mit einem vollständig maskierten elektronischen Münzdatensatz verbunden werden. Dazu könnte man den vollständig maskierten Münzdatensatz in einen quasi-maskierten Münzdatensatz umschalten ("switch") oder umgekehrt.

Die hier beschriebenen Schritte müssen nicht in der beschriebenen Reihenfolge durchgeführt werden. Die hier beschriebene Reihenfolge ist jedoch eine bevorzugte Ausgestaltung.

Ein elektronischer Münzdatensatz ist ein elektronischer Datensatz, der durch Münzdatensatzelemente repräsentiert ist. Er ist insbesondere ein elektronischer Datensatz, der einen geldwerten (=monetären) Betrag repräsentiert und umgangssprachlich auch als "digitale Münze" oder "elektronische Münze", englisch "digital/electronic coin" bezeichnet wird. Dieser geldwerte Betrag wechselt bei dem Verfahren von einem ersten Endgerät zu einem anderen Endgerät zum Bezahlen (eines Kaufpreises oder eines Rückgeldes) im Bezahlsystem. Als ein geldwerter Betrag als Münzdatensatzelement wird im Folgenden ein digitaler Betrag verstanden, der z.B. auf einem Konto eines Geldinstituts gutgeschrieben werden kann, oder gegen ein anderes Zahlungsmittel getauscht werden kann. Ein elektronischer Münzdatensatz repräsentiert also Bargeld in elektronischer Form.

Das Endgerät kann eine Vielzahl von elektronischen Münzdatensätzen aufweisen, beispielsweise kann in einem Datenspeicher des Endgeräts die Vielzahl von Münzdatensätzen hinterlegt sein. Der Datenspeicher stellt dann beispielsweise eine elektronische Geldbörse dar. Der Datenspeicher kann beispielsweise intern, extern oder virtuell sein. In einer Ausgestaltung kann beim Empfangen eines elektronischen Münzdatensatzes automatisch ein "Verbinden" stattfinden, sodass bevorzugt nur ein (oder eine bestimmte Anzahl an) elektronischer(n) Münzdatensatz/sätzen im Endgerät abgelegt sind.

Das Endgerät kann beispielsweise ein passives Gerät, wie z. B. ein Token, ein mobiles Endgerät, wie z.B. ein Smartphone, ein Tablet-Computer, ein Computer, ein Server oder eine Maschine sein.

Ein elektronischer Münzdatensatz zum Übertragen von geldwerten Beträgen unterscheidet sich wesentlich von einem elektronischen Datensatz zum Datenaustausch oder Datentransfer, da beispielsweise eine klassische Datentransaktion auf Basis eines Frage-Antwort-Prinzips bzw. auf einer Interkommunikation zwischen den Datentransferpartnern stattfindet. Ein elektronischer Münzdatensatz ist dementgegen einmalig, eindeutig und steht im Kontext eines Sicherheitskonzepts, welches beispielsweise Signaturen oder Verschlüsselungen umfassen kann. In einem elektronischen Münzdatensatz sind prinzipiell alle Daten enthalten, die für eine empfangende Instanz bezüglich Verifikation, Authentisierung und Weitergeben an andere Instanzen benötigt werden. Eine Interkommunikation zwischen den Endgeräten beim Austausch ist daher bei dieser Art Datensätze grundsätzlich nicht erforderlich.

Bevorzugt wird der elektronische Münzdatensatz vom ersten Endgerät an ein zweites Endgerät im Rahmen eines Bezahlvorgangs übertragen.

Erfindungsgemäß weist ein zum Übertragen zwischen zwei Endgeräten verwendeter elektronischer Münzdatensatz einen monetären Betrag als ein Münzdatensatzelement, das einen Geldwert des elektronischen Münzdatensatzes darstellt, und einen Verschleierungsbetrag, als Münzdatensatzelement, beispielsweise eine Zufallszahl, auf. Darüber hinaus kann der elektronische Münzdatensatz weitere Münzdatensatzelemente, wie Metadaten, aufweisen, welche beispielsweise eine Währung des monetären Betrags oder eine Kennung des Münzdatensatzes repräsentiert. Ein elektronischer Münzdatensatz wird durch diese wenigstens beiden Münzdatensatzelemente (monetärer Betrag und Verschleierungsbetrag) eindeutig repräsentiert. Jeder, der Zugriff auf diese zumindest zwei Münzdatensatzelemente eines gültigen elektronischen Münzdatensatzes hat, kann diesen elektronischen Münzdatensatz zum Bezahlen verwenden. Die Kenntnis dieser beiden Münzdatensatzelemente (monetärer Betrag und Verschleierungsbetrag) ist also gleichbedeutend mit dem Besitz des digitalen Geldes. Dieser elektronische Münzdatensatz wird zwischen zwei Endgeräten direkt übertragen. In einer Ausgestaltung der Erfindung besteht ein elektronischer Münzdatensatz aus diesen beiden Münzdatensatzelementen, es ist somit zum Austausch von digitalem Geld nur die Übertragung des monetären Betrags und der Verschleierungsbetrag notwendig.

Zu jedem elektronischen Münzdatensatz wird ein entsprechender maskierter elektronischer Münzdatensatz und/oder ein maskiertes erstes Münzdatensatzelement zugeordnet. Dieser maskierte elektronischer Münzdatensatz kann ein vollständig maskierter elektronischer Münzdatensatz (zweiter Maskierungsmodus) oder ein quasi-maskierter elektronischer Münzdatensatz (erster Maskierungsmodus) oder ein teilbetragsmaskierter elektronischer Münzdatensatz (dritter Maskierungsmodus) sein.

Ein vollständig maskierter elektronischer Münzdatensatz (zweiter Maskierungsmodus) ist ein maskierter elektronischer Münzdatensatz, dessen Gesamtheit von Münzdatensatzelementen maskiert ist. Der vollständig maskierte elektronische Münzdatensatz umfasst insbesondere kein unmaskiertes Datensatzelement. Aus dem vollständig maskierten elektronischen Münzdatensatz kann kein (unmaskiertes) Datensatzelement des elektronischen Münzdatensatz direkt entnommen, abgelesen und/oder interpretiert werden.

Ein quasimaskierter elektronischer Münzdatensatz (zweiter Maskierungsmodus) ist ein maskierter elektronischer Münzdatensatz, bei dem zumindest ein (erstes) Münzdatensatzelement des (nicht maskierten) elektronischen Münzdatensatzes in kryptografischer verschlüsselter Form enthalten ist. Der quasi-maskierte elektronische Münzdatensatz wird durch Anwenden einer Einwegfunktion, beispielsweise einer kryptografischen Verschlüsselungsfunktion, auf zumindest eines der Münzdatensatzelemente, bevorzugt den Verschleierungsbetrag, und Hinzufügen eines unmaskierten zweiten Münzdatensatzelements erhalten. Der quasimaskierte elektronische Münzdatensatz umfasst also neben dem verschlüsselten ersten Münzdatensatzelement insbesondere auch zumindest ein zweites unmaskiertes Münzdatensatzelement, insbesondere den monetären Betrag als zweites Münzdatensatzelement. Aus dem quasimaskierten elektronischen Münzdatensatz kann zumindest ein (unmaskiertes) Münzdatensatzelement des elektronischen Münzdatensatz direkt entnommen werden. Das unmaskierte Münzdatensatzelement kann dem maskierten Münzdatensatzelement hinzugefügt werden, um den quasi-maskierten Münzdatensatz zu erhalten.

Ein teilbetragsmaskierter elektronischer Münzdatensatz (dritter Maskierungsmodus) ist ein maskierter elektronischer Münzdatensatz, bei dem zumindest ein erster monetäre Betragsteil des monetären Betrags des elektronischen Münzdatensatz in maskierter, beispielsweise kryptografisch verschlüsselter, Form enthalten ist und ein zweiter Betragsteil des monetären Betrags des elektronischen Münzdatensatzes offen (unmaskiert) enthalten ist. Der teilbetragsmaskierte elektronische Münzdatensatz umfasst daher auch ein unmaskiertes Münzdatensatzteilelement, insbesondere den zweiten monetären Betragsteil. Der erste monetäre Betragsteil und der zweite monetäre Betragsteil wurden durch stellenwertweises Aufteilen des monetären Betrags des elektronischen Münzdatensatzes erhalten, siehe unten angegebene weiterführende Erläuterungen zum Stellenwert und der Basis. Der zweite monetäre Betragsteil wird unmaskiert zum maskierten ersten monetären Betragsteil des monetären Betrags hinzugefügt. Aus dem teilbetragsmaskierten elektronischen Münzdatensatz kann demnach zumindest der zweite monetäre Betragsteil des elektronischen Münzdatensatz direkt entnommen werden.

Beim teilbetragsmaskierten elektronischen Münzdatensatz wird bevorzugt das Festlegen des Stellenwerts zum Aufteilen des monetären Betrags in den ersten Betragsteil und den zweiten Betragsteil transaktionsabhängig variabel. Damit ist die Überprüfung eines empfangenes Münzdatensatzes abhängig von der Kenntnis über den festgelegten Stellenwert. Dieser festgelegte Stellenwert wird entweder bei der Transaktion zwischen den Endgeräten bzw. Teilnehmereinheiten mit übertragen oder im Register mit abgelegt.

Nachfolgend wird zur Vereinfachung immer der Begriff "maskierter elektronischer Münzdatensatz" verwendet, wenn eine Aussage sowohl für einen vollständig maskierten elektronischen Münzdatensatz als auch einen für einen quasimaskierten elektronischen Münzdatensatz als auch einen teilbetragsmaskierten elektronischen Münzdatensatz gleichermaßen zutrifft.

Die Kenntnis eines maskierten elektronischen Münzdatensatzes berechtigt nicht dazu, das digitale Geld, das durch den elektronischen Münzdatensatz repräsentiert wird, auszugeben. Dies stellt einen wesentlichen Unterschied zwischen den maskierten elektronischen Münzdatensätze und den (nicht maskierten) elektronischen Münzdatensätzen dar und ist ein Kern der hier vorliegenden Erfindung. Der maskierte elektronische Münzdatensatz ist einzigartig und eindeutig einem elektronischen Münzdatensatz zuzuordnen, es herrscht also eine 1-zu-1 Beziehung zwischen dem (nicht-maskierten) elektronischen Münzdatensatz und dem maskierten elektronischen Münzdatensatz. Das Maskieren des elektronischen Münzdatensatzes erfolgt bevorzugt durch eine Recheneinheit des Endgeräts innerhalb des Endgeräts, das auch den zumindest einen elektronische Münzdatensatz aufweist. Alternativ kann das Maskieren durch eine Recheneinheit des Endgeräts, das den elektronischen Münzdatensatz empfängt, erfolgen.

Der maskierte elektronische Münzdatensatz wird durch Anwenden einer Einwegfunktion, beispielsweise einer homomorphen Einwegfunktion, beispielsweise einer kryptographischen Funktion, erhalten. Diese Funktion ist eine Einwegfunktion, also eine mathematische Funktion, die komplexitätstheoretisch "leicht" berechenbar, aber "schwer" bis praktisch unmöglich umzukehren ist. Hierbei wird unter Einwegfunktion auch eine Funktion bezeichnet, zu der bislang keine in angemessener Zeit und mit vertretbarem Aufwand praktisch ausführbare Umkehrung bekannt ist. Somit ist die Berechnung eines maskierten elektronischen Münzdatensatzes aus einem elektronischen Münzdatensatz vergleichbar mit bzw. entspricht der Generierung eines öffentlichen Schlüssels in einem Verschlüsselungsverfahren über eine Restklassengruppe. Vorzugsweise wird eine Einwegfunktion verwendet, die auf eine Gruppe operiert, in der das diskrete Logarithmusproblem schwer zu lösen ist, wie z. B. ein kryptographisches Verfahren analog einer elliptischer-Kurve-Verschlüsselung, kurz ECC, aus einem privaten Schlüssel eines entsprechenden Kryptographie-Verfahrens. Die umgekehrte Funktion, also die Erzeugung eines elektronischen Münzdatensatzes (oder des Teils des elektronischen Münzdatensatzes) aus einem maskierten elektronischen Münzdatensatz ist dabei - äquivalent zur Erzeugung des privaten Schlüssels aus einem öffentlichen Schlüssel in einem Verschlüsselungsverfahren über eine Restklassengruppe - sehr zeitintensiv. Wenn im vorliegenden Dokument von Summen und Differenzen oder anderen mathematischen Operationen die Rede ist, dann sind dabei im mathematischen Sinn die jeweiligen Operationen auf der entsprechenden mathematischen Gruppe zu verstehen, beispielsweise der Gruppe der Punkte auf einer elliptischen Kurve.

Die Einwegfunktion ist in einer Ausgestaltung homomorph, also ein kryptographisches Verfahren, welches über Homomorphie-Eigenschaften verfügt. Somit können mit dem maskierten elektronischen Münzdatensatz mathematische Operationen durchgeführt werden, die parallel dazu auch auf dem (unmaskierten) elektronischen Münzdatensatz durchgeführt und somit nachvollzogen werden können. Mit Hilfe der homomorphen Einwegfunktion können Berechnungen mit maskierten elektronischen Münzdatensätzen in der Überwachungsinstanz nachvollzogen werden, ohne dass die entsprechenden (unmaskierten) elektronischen Münzdatensätze dort bekannt sind. Daher können bestimmte Berechnungen mit elektronischen Münzdatensätzen, beispielsweise für ein Modifizieren des (unmaskierten) elektronischen Münzdatensatzes (zum Beispiel Aufteilen oder Verbinden), auch parallel mit den dazugehörigen maskierten elektronischen Münzdatensätzen nachgewiesen werden, beispielsweise zu Validierungsprüfungen oder zur Überwachung über die Rechtmäßigkeit des jeweiligen elektronischen Münzdatensatzes. Die Homomorphie-Eigenschaften treffen zumindest auf Additions- und Subtraktionsoperationen zu, sodass ein Aufteilen oder Kombinieren (=Verbinden) von elektronischen Münzdatensätzen auch mittels der entsprechend maskierten elektronischen Münzdatensätze in der Überwachungsinstanz festgehalten und von anfragenden Endgeräten und/ oder von der Überwachungsinstanz nachvollzogen werden kann, ohne Kenntnis über den monetären Betrag und das durchführende Endgerät zu erlangen.

Die Homomorphie-Eigenschaft ermöglicht es also, eine Eintragung von gültigen und ungültigen elektronischen Münzdatensätzen auf Basis ihrer maskierten elektronischen Münzdatensätze in einer Überwachungsinstanz zu führen ohne Kenntnis der elektronischen Münzdatensätze, auch wenn diese elektronische Münzdatensätze modifiziert werden (aufgeteilt, verbunden, umschalten). Dabei wird sichergestellt, dass kein zusätzlicher monetärer Betrag geschaffen wurde oder dass eine Identität des Endgeräts in der Überwachungsinstanz festgehalten wird. Das Maskieren ermöglicht ein hohes Maß an Sicherheit, ohne einen Einblick in den monetären Betrag oder das Endgerät zu geben. Somit ergibt sich ein zweischichtiges Bezahlsystem. Zum einen existiert die Verarbeitungsschicht, in der maskierte elektronische Datensätze geprüft werden, und zum anderen die Direkttransaktionsschicht, in der zumindest zwei Endgeräte elektronische Münzdatensätze übertragen werden.

In einer weiteren Ausgestaltung ist die Einwegfunktion eine kryptographische Verschlüsselungsfunktion.

Das Anwenden der Einwegfunktion auf den elektronischen Münzdatensatz umfasst auch das Anwenden der Einwegfunktion auf einen Teil des elektronischen Münzdatensatzes, insbesondere auf den Verschleierungsbetrag und/oder einen Betragsteil des monetären Betrags, in einer Ausgestaltung nur auf den Verschleierungsbetrag (quasi-maskiert), in einer anderen Ausgestaltung nur auf den ersten Betragsteil des monetären Betrags (teilbetragsmaskiert), in einer kombinierten Ausgestaltung auf eine Verknüpfung von Verschleierungsbetrag und erstem Betragsteils des monetären Betrags.

Das Erhalten des quasi-maskierten elektronischen Münzdatensatzes erfolgt unter Anwendung einer kryptografischen Verschleierungsfunktion auf ein Münzdatensatzelement (bevorzugt den Verschleierungsbetrag) des (unmaskierten) elektronischen Münzdatensatz. Der Verschleierungsbetrag (als Geheimelement) kann als ein dynamischer Schlüssel für eine Verschlüsselung verwendet werden. Der Verschleierungsbetrag kann nicht als ein Schlüssel für eine Entschlüsselung verwendet werden.

Beim Übertragen eines elektronischen Münzdatensatzes vom ersten Endgerät auf das zweite Endgerät haben zwei Endgeräte Kenntnis über den elektronischen Münzdatensatz. Um zu verhindern, dass das sendende erste Endgerät den elektronischen Münzdatensatz bei einem anderen (dritten) Endgerät ebenfalls zum Bezahlen verwendet (sogenanntes Double-Spending), wird bevorzugt ein Umschalten ("Switch") des übertragenen elektronischen Münzdatensatzes vom ersten Endgerät auf das zweite Endgerät ausgeführt. Das Umschalten kann bevorzugt automatisch beim Empfangen eines elektronischen Münzdatensatzes im zweiten Endgerät geschehen. Zusätzlich kann es auch auf Anforderung, beispielsweise eines Befehls vom ersten und/ oder zweiten Endgerät, erfolgen. Zusätzlich kann ein elektronischer Münzdatensatz auch in zumindest zwei Münzteildatensätze aufgeteilt werden ("Split"). Zusätzlich können zwei elektronische Münzdatensätze zu einem Münzdatensatz verbunden werden ("Merge").

Das Umschalten, das Aufteilen und das Verbinden sind verschiedene Modifikationen an einem elektronischen Münzdatensatz. Diese Modifikationen bedingen ein Registrieren des maskierten Münzdatensatzes in einer Überwachungsinstanz. Dieses Registrieren im Zuge der Modifikationen führt dazu, dass der vom ersten Endgerät gesendete elektronische Münzdatensatz ungültig wird und bei einem zweiten Ausgeben-Versuch des ersten Endgeräts als entsprechend ungültig erkannt wird. Der vom zweiten Endgerät zu registrierende Münzdatensatz wird durch das Registrieren in der Überwachungsinstanz gültig. Das konkrete Durchführen der einzelnen Modifikationen wird später erläutert.

Das Umschalten erfolgt zudem, wenn ein elektronischer Münzdatensatz modifiziert, beispielsweise aufgeteilt oder mit anderen elektronischen Münzdatensätzen verbunden wurde, insbesondere um einen zu zahlenden monetären Betrag passend begleichen zu können.

Für das Modifizieren von elektronischen Münzdatensätzen (Umschalten, Aufteilen, Verbinden) wird in der Überwachungsinstanz geprüft, ob der (maskierte) elektronische Münzdatensatz einen gültigen Bereich aufweist. Dazu werden sogenannte "Zero-Knowledge-Range-Proofs" als Bereichsnachweise angewendet. Der Nachweis der Reichweite ermöglicht einerseits, dass ein geänderter monetärer Betrag (Aufteilen, Verbinden) innerhalb eines vordefinierten Bereichs gültiger monetärer Beträge ist und andererseits, dass das Eigentum an den zu ändernden monetären Beträgen nachgewiesen wird. Als ein Nachweis zählt die Darstellung des monetären Betrags im Binärformat und die darauf basierende Darstellung als Ringsignatur.

Diese Nachweis-Führung bedingt ein nicht geringes Datenvolumen auszutauschender Daten zwischen Endgerät und Überwachungsinstanz und einen Rechenaufwand. Wünschenswert ist es, dass derartige Nachweise wesentlich vereinfacht durchgeführt werden können.

Im erfindungsgemäßen Verfahren ist daher ein verbessertes Maskieren des zumindest einen elektronischen Münzdatensatzes vorgesehen, um die Bereichsnachweise zu vereinfachen.

Erfindungsgemäß wird vor dem Übertragen- und/oder vor dem Registrieren-Schritt eine Auswahl eines Maskierungsmodus getroffen beziehungsweise ein Maskierungsmodus festgelegt. Die Auswahl erfolgt beispielsweise durch einen Benutzer des ersten Endgeräts über eine entsprechende Menüsteuerung am Endgerät. Die Auswahl erfolgt beispielsweise aufgrund einer Systemvorgabe im Bezahlsystem oder einer Systemvorgabe durch einen Drittanbieter. Beispielsweise kann so eine Leistungsfähigkeit des Bezahlsystems optimal ausgenutzt werden, sodass ein Aufwand der Nachweisprüfung auf Basis eines aktuellen Registrier-Anfragevolumens in der Überwachungsinstanz durch entsprechende Auswahl des Maskierungsmodus gesteuert werden kann. Die Auswahl kann auch auf Basis einer Endgeräte-Eigenschaft gewählt werden. Beispielsweise bei fehlender Unterstützung eines der Maskierungsmodi, kann eine entsprechende Vorauswahl getroffen werden.

Entsprechend der Auswahl durch das Endgerät wird beim Registrieren in der Überwachungsinstanz eine Bereichsprüfung (= Range Proof) erstellt. Dazu gehört auch die stellenwertweise Darstellung des monetären Betrags zu einer beliebigen Basis, beispielsweise zur Basis 2 (binär) oder der Basis 3 (ternär), etc.

Durch die verschiedenen Maskierungsmodi lassen sich verschiedene Bereichsprüfungsoptionen realisieren: Beispielsweise erfolgt keine Vereinfachung (Verkürzung) des Bereichsnachweises, wenn diese Option im System, bei der Überwachungsinstanz oder dem Endgerät nicht implementiert ist. Sodann erfolgt der Nachweis über den gesamten Bereich des monetären Betrags.

Alternativ ist die Bereichsnachweisvereinfachung gemäß einem festen Vorgabewert bei einer Modifikation (Umschalten, Aufteilen, Verbinden) eines Münzdatensatzes zwingend im System vorgeschrieben.

Alternativ ist die Bereichsnachweisverkürzung optional mit einem festen Vorgabewert vorgesehen. Dabei kann die Überwachungsinstanz festlegen, ob ein vollständig maskierter elektronischer Münzdatensatz oder ein quasimaskierter elektronischer Münzdatensatz oder ein teilbetragsmaskierter elektronischer Münzdatensatz zu erzeugen ist und ob ein Wechsel von einer Maskierungsart in eine andere Maskierungsart vorgenommen werden soll.

Alternativ ist die Bereichsnachweisverkürzung optional mit einem variablen Vorgabewert. Dabei kann der Anwender innerhalb der erlaubten Systemvorgaben festlegen, wieviel von dem maskierten Münzdatensatz offengelegt werden soll. Der variable Vorgabewert kann mit jeder Modifikation am Münzdatensatz wieder geändert werden.

Um die Leistungsfähigkeit des Verfahrens zu verbessern, wird im dritten Maskierungsmodus der Bereichsnachweis zusätzlich verkürzt, indem eine Ringsignatur nur auf den ersten monetären Betragsteil angewendet wird, der einem Vorgabewert (Systemvorgabe oder Endgeräteauswahl) entspricht.

Die Entscheidung darüber, inwieweit Münzdatensatzelemente unmaskiert übertragen werden, also inwieweit beispielsweise Informationen über den elektronischen Münzdatensatz für eine Überwachungsinstanz transparent sind oder verborgen bleiben, könnte auf Basis einer Entscheidung der die jeweiligen Münzdatensätze übertragenden Endgeräte beruhen. Um dieses Aushandeln der Entscheidung zu beschreiben, werden die oben eingeführten Begriffe "vollständig maskierter Münzdatensatz" und "unvollständig maskierter Münzdatensatz verwendet.

Dem vollständig maskierten Münzdatensatz ist ein (unmaskierter) privater elektronischer Münzdatensatz zugeordnet, welcher alle Münzdatensatzelemente, insbesondere den monetären Betrag, gegenüber der Überwachungsinstanz verbirgt. Für derartige private elektronische Münzdatensätze ist der zweite Maskierungsmodus zu wählen.

Dem teilbetragsmaskierten Münzdatensatz (im dritten Maskierungsmodus) ist ein (unmaskierter) halbprivater elektronischer Münzdatensatz zugeordnet, welcher den zweiten monetären Betragsteil gegenüber der Verifizierungsebene (Überwachungsinstanz) offenlegt. Für derartige halbprivate elektronische Münzdatensätze kann der dritte Maskierungsmodus gewählt werden.

Die Verwendung von privaten elektronischen Münzdatensätzen in einem Modifizieren-Schritt zusammen mit halbprivaten elektronischen Münzdatensätzen ist unproblematisch. Eine entsprechende Umschaltung eines privaten elektronischen Münzdatensatzes in einen halbprivaten elektronischen Münzdatensatz wird mit einem Umschalten-Schritt ermöglicht, wie es weiter unten beschrieben ist.

Der umgekehrte Fall, also das Verwenden von semiprivaten elektronischen Münzdatensätzen in einem Modifizieren-Schritt zusammen mit privaten elektronischen Münzdatensätzen, bedarf eines zusätzlichen Maskierungsschritts, wie er in einem Verbinden oder Aufteilen Schritt im zweiten Maskierungsmodus beschrieben ist.

Beim Verbinden zum Überführen eines halbprivaten in einen privaten elektronischen Münzdatensatz ist ein zusätzlicher privater elektronischer Münzdatensatz erforderlich. Ist momentan kein zusätzlicher privater elektronischer Münzdatensatz in dem jeweiligen Endgerät vorhanden, so wird ein privater elektronischer Nullmünzdatensatz verwendet, der einen monetären Betrag von null aber einen Verschleierungsbetrag aufweist, also keinen geldwerten Betrag darstellt. Dieser private Nullmünzdatensatz kann jederzeit aus einem einzigen vorhandenen privaten elektronischen Münzdatensatz mit einem Aufteilen-Schritt erstellt werden. In diesem speziellen Aufteilen-Schritt wird ein erster privater Münzteildatensatz erzeugt, der den gleichen monetären Betrag aufweist, wie der einzig vorhandene private elektronische Münzdatensatz, und ein zweiter Münzteildatensatz wird erzeugt, der ein elektronischer Nullmünzdatensatz ist. Dieses Aufteilen zum Erhalten des privaten elektronischen Nullmünzdatensatz wird vor dem Überführen des halbprivaten in den privaten elektronischen Münzdatensatz durchgeführt und für die spätere Verwendung gespeichert.

Für das Registrieren im ersten oder dritten Maskierungsmodus wird beispielsweise der monetäre Betrag bzw. ein monetärer Betragsteil unmaskiert übertragen. Die entsprechenden Maskierungsmodi sind aber nicht auf das unmaskierte Übertragen des monetären Betrags(-teils) beschränkt, jedes andere Münzdatensatzelement(eteil) könnte alternativ oder zusätzlich unmaskiert übertragen werden. Dadurch wird das Senden zusätzlicher Datenpakete für komplexe Bereichsnachweise nicht mehr notwendig bezeihungsweise steigt die Leistungsfähigkeit im vierten Maskierungsmodus durch die Vewendung wesentlich kleinerer Datenpakete.

Wenn die monetären Beträge (bzw. Betragsteile) unmaskiert bzw. unverschleiert übertragen werden, vereinfacht sich der Bereichsnachweis zu nur noch zwei Prüfschritten, nämlich (1), ob der dem unvollständig maskierten elektronischen Münzdatensatz hinzugefügte monetäre Betrag zu diesem maskierten elektronischen Münzdatensatz gehört und (2) ob das Eigentum der modifizierten (unmaskierten) elektronischen Münzdatensatz bewiesen ist. Im dritten Maskierungsmodus muss nur ein verkürzter Bereichsnachweis geprüft werden.

Der Hinzufügen-Schritt im ersten oder dritten Maskierungsmodus ist bevorzugt eine einfache logische Operation, beispielsweise eine Verkettung (Konkatenation) oder das Verwenden einer erweiterbaren Datenstruktur, beispielsweise einer TLV-Datenstruktur.

Diese Vereinfachungen bewirken Veränderungen in der Bereichsprüfung für die Modifikationen (Aufteilen, Verbinden, Umschalten), wie nachfolgend erläutert wird.

In einer bevorzugten Ausgestaltung des Verfahrens sind im zweiten Endgerät nach dem Übertragen die weiteren Verfahrensschritte vorgesehen: Umschalten des elektronischen Münzdatensatzes unter Generieren eines umzuschaltenden elektronischen Münzdatensatzes im Endgerät aus dem elektronischen Münzdatensatzes, wobei ein Verschleierungsbetrag für den umzuschaltenden elektronischen Münzdatensatz unter Verwendung des Verschleierungsbetrags des elektronischen Münzdatensatzes im zweiten Endgerät erzeugt wird; und der monetäre Betrag des elektronischen Münzdatensatzes als ein monetärer Betrag für den umzuschaltenden elektronischen Münzdatensatz verwendet wird.

Alternativ oder zusätzlich wird vorgesehen: Ein Aufteilen des elektronischen Münzdatensatzes in einen ersten elektronischen Münzteildatensatz und einen zweiten elektronischen Münzteildatensatz im ersten Endgerät, wobei der monetäre Betrag in wenigstens einen ersten monetären Betrag und einen zweiten monetären Betrag aufgeteilt wird.

Alternativ oder zusätzlich wird vorgesehen: Verbinden eines ersten und eines zweiten elektronischen Münzdatensatzes zu einem verbundenen elektronischen Münzdatensatzes im ersten Endgerät mit den Schritten: Berechnen eines Verschleierungsbetrags für den zu verbindenden elektronischen Münzdatensatz durch Bilden der Summe aus den jeweiligen Verschleierungsbeträgen des ersten und des zweiten elektronischen Münzdatensatzes; und Berechnen des monetären Betrags für den zu verbindenden elektronischen Münzdatensatz durch Bilden der Summe aus den jeweiligen monetären Beträgen des ersten und des zweiten elektronischen Münzdatensatzes.

Bei allen drei beschriebenen Verfahrensschritten, also dem Umschalten, dem Aufteilen und dem Verbinden, umfasst das Maskieren des elektronischen Münzdatensatzes im Maskieren-Schritt des zweiten Maskierungsmodus das Maskieren des umzuschaltenden Münzdatensatzes des ersten und/oder zweiten Münzteildatensatzes und/oder des verbundenen Münzdatensatzes.

Beim Maskieren des elektronischen Münzdatensatzes im Maskieren-Schritt des ersten oder dritten Maskierungsmodus wird ein Münzdatensatzelement, beispielsweise der Verschleierungsbetrag des jeweiligen elektronischen Münzdatensatzes als dynamischer privater Schlüssel genutzt, mit dem aber kein Entschlüsseln möglich ist.

Anschließend erfolgt für alle Maskierungsmodi ein Senden des vollständig maskierten elektronischen Münzdatensatzes oder des quasimaskierten elektronischen Münzdatensatzes oder des teilbetragsmaskierten elektronischen Münzdatensatzes an die Überwachungsinstanz zum Prüfen der Validität des elektronischen Münzdatensatzes durch die Überwachungsinstanz. Das Prüfen der Validität wird weiter unten im Detail erläutert.

In einer bevorzugten Ausgestaltung hat das Verfahren die weiteren Verfahrensschritte: Erzeugen einer Signatur unter Verwendung des Verschleierungsbetrags des elektronischen Münzdatensatzes; Hinzufügen der Signatur zu dem quasi-maskierten elektronischen Münzdatensatz oder dem vollständig maskierten elektronischen Münzdatensatz, wobei in der Überwachungsinstanz der vollständig maskierten elektronischen Münzdatensatz oder der quasimaskierte elektronische Münzdatensatz mit der Signatur registriert wird. In dieser Ausgestaltung wird die erstellte Signatur in der Überwachungsinstanz mit registriert.

In einer alternativen Ausgestaltung hat das Verfahren die weiteren Verfahrensschritte: Erzeugen einer Signatur unter Verwendung des Verschleierungsbetrags des elektronischen Münzdatensatzes; und Senden der Signatur zusammen mit dem quasi-maskierten elektronischen Münzdatensatz oder dem teilbetragsmaskierten elektronischen Münzdatensatz, wobei in der Überwachungsinstanz nur der teilbetragsmaskierte elektronische Münzdatensatz oder der quasimaskierte elektronische Münzdatensatz registriert wird.

In einer bevorzugten Ausgestaltung dieser Alternative hat das Verfahren registriert die Überwachungsinstanz nur teilbetragsmaskierte oder quasimaskierte elektronische Münzdatensatz und/oder nur elektronische Münzdatensätze, die zumindest für einen Betragsanteil betragsoffen sind.

In dieser alternativen Ausgestaltung wird die erstellte Signatur zum Übertragen des maskierten Münzdatensatzes zwischen Endgerät und Überwachungsinstanz verwendet, die Signatur wird aber nicht in der Überwachungsinstanz registriert - die Signatur ist kein Bestandteil des registrierten maskierten Münzdatensatzes. Die Signatur ist hier eine Transportsicherung und wird nach der Überprüfung verworfen, um den maskierten Münzdatensatz ohne Signatur zu registrieren.

Bevorzugt umfasst - nach dem Schritt des Umschaltens - der Registrieren-Schritt in der Überwachungsinstanz für den ersten Maskierungsmodus: Empfangen des quasimaskierten umzuschaltenden elektronischen Münzdatensatzes in der Überwachungsinstanz; Prüfen des quasimaskierten elektronischen Münzdatensatzes auf Validität in der Überwachungsinstanz; Prüfen, ob der monetäre Betrag des elektronischen Münzdatensatzes gleich dem monetären Betrags des umzuschaltenden elektronischen Münzdatensatzes ist; Berechnen der Differenz aus dem quasimaskierten umzuschaltenden Münzdatensatzes und dem quasimaskierten elektronischen Münzdatensatzes; Prüfen mit Hilfe einer Hinzugefügten Signatur, die durch Erzeugen eines öffentlichen Verifikationsschlüssels erstellt wurde; und Registrieren des quasimaskierten umzuschaltenden elektronischen Münzdatensatzes in der Überwachungsinstanz, wenn alle Prüfen-Schritte erfolgreich sind, wodurch der umzuschaltende elektronische Münzdatensatz als gültig gilt.

Bevorzugt umfasst - nach dem Schritt des Aufteilens - der Registrieren-Schritt in der Überwachungsinstanz für den zweiten und/oder dritten Maskierungsmodus: Empfangen der vollständig maskierten elektronischen Münzteildatensätze oder der teilbetragsmaskierten elektronischen Münzteildatensätze in der Überwachungsinstanz; Prüfen des maskierten umzuschaltenden elektronischen Münzdatensatzes auf Validität in der Überwachungsinstanz; Prüfen einer, den teilbetragsmaskierten elektronischen Münzteildatensätzen hinzugefügten Ringsignatur unter Verwendung des monetären Betrags des elektronischen Münzdatensatzes in der Überwachungsinstanz; Berechnen der Differenz aus der Summe der vollständig maskierten elektronischen Münzdatensätze oder der Summe der teilbetragsmaskierten elektronischen Münzteildatensätze und dem maskierten Münzdatensatz zum Prüfen, ob der monetäre Betrag des elektronischen Münzdatensatzes gleich der Summe aus erstem und zweitem monetären Betrag der jeweiligen elektronischen Münzteildatensätze ist - zum Prüfen, ob der monetäre Betrag des elektronischen Münzdatensatzes gleich dem monetären Betrags des umzuschaltenden elektronischen Münzdatensatzes ist; und Registrieren der maskierten elektronischen Münzteildatensätze in der Überwachungsinstanz, wenn alle Prüfen-Schritte erfolgreich sind und ein vereinfachter Bereichsnachweis erfolgt ist, wodurch die elektronischen Münzteildatensätze als gültig gelten.

Bevorzugt umfasst - nach dem Schritt des Verbindens - der Registrieren-Schritt in der Überwachungsinstanz für den zweiten und/oder den dritten Maskierungsmodus: Empfangen des teilbetragsmaskierten verbundenen elektronischen Münzdatensatz oder des vollständig maskierten verbundenen elektronischen Münzdatensatz in der Überwachungsinstanz; Prüfen der maskierten ersten und zweiten elektronischen Münzdatensätze auf Validität in der Überwachungsinstanz; Prüfen einer ersten, dem teilbetragsmaskierten elektronischen Münzdatensatz oder dem vollständig maskierten elektronischen Münzdatensatz hinzugefügten Ringsignatur unter Verwendung des ersten monetären Betrags des ersten elektronischen Münzdatensatzes in der Überwachungsinstanz; Prüfen einer zweiten, dem teilbetragsmaskierten elektronischen Münzdatensatz oder dem vollständig maskierten elektronischen Münzdatensatz hinzugefügten Ringsignatur unter Verwendung des zweiten monetären Betrags des zweiten elektronischen Münzdatensatzes in der Überwachungsinstanz; Berechnen der Differenz aus dem teilbetragsmaskierten verbundenen elektronischen Münzdatensatz oder dem vollständig maskierten verbundenen elektronischen Münzdatensatz und der Summe aus maskiertem ersten elektronischen Münzdatensatz und maskiertem zweiten elektronischen Münzdatensatz zum Prüfen, ob der monetäre Betrag des verbundenen elektronischen Münzdatensatzes gleich der Summe aus dem ersten und dem zweiten monetären Betrag der ersten und zweiten elektronischen Münzdatensätze ist; Registrieren des maskierten verbundenen elektronischen Münzdatensatzes in der Überwachungsinstanz, wenn alle Prüfen-Schritte erfolgreich sind und ein vereinfachter Bereichsnachweis erfolgt ist, wodurch der verbundene elektronische Münzdatensatz als gültig gilt.

Bevorzugt umfasst - nach dem Schritt des Verbindens - der Registrieren-Schritt in der Überwachungsinstanz für den ersten Maskierungsmodus: Empfangen des quasi-maskierten verbundenen elektronischen Münzdatensatz in der Überwachungsinstanz; Prüfen der maskierten ersten und zweiten elektronischen Münzdatensätze auf Validität in der Überwachungsinstanz; Prüfen einer ersten, dem quasi-maskierten elektronischen Münzdatensatz hinzugefügten Signatur durch Erzeugen eines ersten öffentlichen Verifikationsschlüssels in der Überwachungsinstanz; Prüfen einer zweiten, dem quasi-maskierten elektronischen Münzdatensatz hinzugefügten Signatur durch Erzeugen eines zweiten öffentlichen Verifikationsschlüssels in der Überwachungsinstanz; Berechnen der Differenz aus dem monetären Betrag des gültig zu setzenden Münzdatensatzes und der Summe aus den monetären Beträge des zu verbindenden ersten elektronischen Münzdatensatzes und des zweiten elektronischen Münzdatensatzes; Registrieren des quasi-maskierten verbundenen elektronischen Münzdatensatzes in der Überwachungsinstanz, wenn alle Prüfen-Schritte erfolgreich sind und ein vereinfachter Bereichsnachweis erfolgt ist, wodurch der verbundene elektronische Münzdatensatz als gültig gilt.

Bevorzugt umfasst das Verfahren gemäß dem dritten Maskierungsmodus einen Schritt des Erstellens eines Nachweises im ersten Endgerät, wobei der Nachweis eine Information umfasst, dass der monetäre Betrag des elektronischen Münzdatensatzes positiv ist und dem Ersteller des Nachweises bekannt ist, nachfolgend auch vereinfachter Bereichsnachweis genannt, mit: Aufteilen des elektronischen Münzdatensatzes im ersten Endgerät entsprechend eines festen oder variablen Vorgabewertes, in einen ersten elektronischen Münzteildatensatz und einen zweiten elektronischen Münzteildatensatz; stellenwertweises Aufteilen des zweiten elektronischen Münzteildatensatzes im ersten Endgerät, wobei ein Stellenwert des aufgeteilten zweiten elektronischen Münzteildatensatzes ein Stellenwert des zweiten monetären Betrags des elektronischen Münzdatensatzes repräsentiert und die Summe aller Verschleierungsbeträge des stellenwertweise aufgeteilten zweiten elektronischen Münzdatensatzes den Verschleierungsbetrag des elektronischen Münzdatensatzes ergibt, wobei die Basis des Stellenwerts beliebig ist.

Basierend auf der stellenwertweisen Aufteilung des zweiten elektronischen Münzdatensatzes erstellt das Endgerät eine Ringsignatur, die zusammen mit dem teilbetragsmaskierten elektronischen Münzdatensatz an die Überwachungseinheit gesendet wird und dort geprüft wird.

Bevorzugt ist die Basis des Stellenwerts zwei oder drei. Mit Stellenwert wird eine Potenz der Basis eines Stellenwertsystems bezeichnet. So ist ein Binärsystem, ein Stellenwertsystem mit der Basis 2, ein Ternärsystem ist ein Stellenwertsystem mit der Basis 3 und ein Dezimalsystem ist ein Stellenwertsystem mit der Basis 10. Der Wert der Basis ist dabei nicht festgelegt, um ein möglichst flexibles stellenwertbasiertes Aufteilen für eine vereinfachte Nachweisprüfung zu ermöglichen.

Beispielsweise erfolgt das stellenwertweise Aufteilen auf Basis eines Vorgabewerts. Dieser Vorgabewert gibt beispielsweise die Stelle an, an der der monetäre Betrag aufzuteilen ist. Er entspricht dann beispielsweise einer Anzahl von "least significant bits, LSB", wenn der Stellenwert die Basis 2 hat. Diese Anzahl LSB wird dann als zweiter monetärer Betragsteil dem teilmaskierten Münzdatensatz hinzugefügt. Die übrigen Stellen des monetären Betrags bilden den ersten monetären Betragsteil und ersetzen für den Maskieren-Schritt den monetären Betrag.

Dieser Vorgabewert entspricht alternativ beispielsweise einer Anzahl von "most significant bits, MSB", wenn der Stellenwert die Basis 2 hat. Diese Anzahl MSB wird dann als zweiter monetärer Betragsteil dem teilmaskierten Münzdatensatz hinzugefügt. Die übrigen Stellen des monetären Betrags bilden den ersten monetären Betragsteil und ersetzen für den Maskieren-Schritt den monetären Betrag.

Dieser Vorgabewert entspricht alternativ beispielsweise einer zufälligen Anzahl von Bits, wenn der Stellenwert die Basis 2 hat. Diese Anzahl von Bits wird dann als zweiter monetärer Betragsteil dem teilmaskierten Münzdatensatz hinzugefügt. Die übrigen Stellen des monetären Betrags bilden den ersten monetären Betragsteil und ersetzen für den Maskieren-Schritt den monetären Betrag.

Dieser Vorgabewert entspricht alternativ beispielsweise einer konkreten Auswahl von Bits, wenn der Stellenwert die Basis 2 hat. Diese Auswahl von Bits wird dann als zweiter monetärer Betragsteil dem teilmaskierten Münzdatensatz hinzugefügt. Die übrigen Stellen des monetären Betrags bilden den ersten monetären Betragsteil und ersetzen für den Maskieren-Schritt den monetären Betrag.

Der Überprüfungen werden bevorzugt Ringsignaturen zu Grunde gelegt, deren Parameter das Erzeugen von Zufallszahlen und dem Ableiten von Streuwerten (Hash) in den Endgeräten erfordert.

Ein für das Nachweisen definierter Vorgabewert kann - wie oben beschrieben - ein systembedingter Parameter oder das Ergebnis einer Aushandlung zwischen zwei Systemteilnehmern (Endgeräte oder Überwachungsinstanz) sein.

Nachfolgende Erläuterungen erfolgen in Bezug auf den ersten Maskierungsmodus und den dabei erstellten quasimaskierten Münzdatensätzen. Eine Voraussetzung zur Auswahl des ersten Maskierungsmodus könnte sein, dass im System keine Notwendigkeit besteht, ein Münzdatensatzelement, beispielsweise den monetären Betrag, zu maskieren (zu verstecken). Diese fehlende Notwendigkeit vereinfacht das gesamte Bezahlsystem und das Verfahren zum direkten Austausch von elektronischen Münzdatensätzen zwischen Endgeräten enorm. Einem elektronischen Münzdatensatz, wie oben beschrieben und mindestens einen monetären Betrag und einen Verschleierungsbetrag als Datenelemente umfassend, kann dann ein quasimaskierter elektronischer Münzdatensatz zugeordnet werden, der beispielsweise aus dem unmaskierten monetären Betrag und dem verschlüsselten Verschleierungsbetrag (=maskiertes Münzdatensatzelement) besteht. Alle Modifizierungen (Aufteilen, Umschalten, Verbinden) können auch auf diese quasimaskierten elektronischen Münzdatensätze angewendet werden und werden im Rahmen des ersten Maskierungsmodus hiernach abgehandelt. Die Ausführungen zum ersten Maskierungsmodus können alternative Ausgestaltungen zum zweiten oder dritten Maskierungsmodus darstellen, sie können aber hinsichtlich Signaturerstellung, Wahl der Verschlüsselungen, Wahl der Nachweisprüfungen beliebig miteinander kombiniert werden.

Generelles Ziel auch bei einer Kombination ist es, eine wesentliche Vereinfachung der Bereichsprüfungen (range-proofs) zu erhalten.

Bevorzugt erfolgt - nach dem Schritt des Umschaltens - der Registrieren-Schritt in der Überwachungsinstanz für den ersten Maskierungsmodus mit: Empfangen des quasi-maskierten umzuschaltenden elektronischen Münzdatensatzes in der Überwachungsinstanz; Prüfen des quasimaskierten elektronischen Münzdatensatzes auf Validität in der Überwachungsinstanz; Prüfen einer, dem quasi-maskierten elektronischen Münzdatensatz hinzugefügten Signatur unter Verwendung des verschlüsselten Verschleierungsbetrags (=maskiertes Münzdatensatzelement) des elektronischen Münzdatensatzes in der Überwachungsinstanz; und Registrieren des quasimaskierten umzuschaltenden elektronischen Münzdatensatzes in der Überwachungsinstanz wenn die beiden Prüfen-Schritte erfolgreich sind, wodurch der umzuschaltende elektronische Münzdatensatz als gültig gilt.

Bevorzugt erfolgt - nach dem Schritt des Aufteilens - der Registrieren-Schritt in der Überwachungsinstanz für den ersten Maskierungsmodus mit: Empfangen der quasi-maskierten elektronischen Münzteildatensätze in der Überwachungsinstanz; Prüfen des quasi-maskierten elektronischen Münzdatensatzes auf Validität in der Überwachungsinstanz; Prüfen einer, dem quasi-maskierten elektronischen Münzdatensatz hinzugefügten Signatur unter Verwendung des maskierten Verschleierungsbetrags in der Überwachungsinstanz; Prüfen, ob der monetäre Betrag des elektronischen Münzdatensatzes gleich der Summe aus ersten und zweiten monetären Betrag der elektronischen Münzteildatensätze ist; Registrieren der quasimaskierten elektronischen Münzteildatensätze in der Überwachungsinstanz, wenn die drei Prüfen-Schritte erfolgreich sind, wodurch die elektronischen Münzteildatensätze als gültig gelten und der aufzuteilende elektronische Münzdatensatz als ungültig.

Bevorzugt erfolgt - nach dem Schritt des Verbindens - der Registrieren-Schritt in der Überwachungsinstanz für den ersten Maskierungsmodus mit: Empfangen des quasi-maskierten verbundenen elektronischen Münzdatensatz in der Überwachungsinstanz; Prüfen der quasimaskierten ersten und zweiten elektronischen Münzdatensätze auf Validität in der Überwachungsinstanz; Prüfen zweier, den zu verbindenden quasi-maskierten verbundenen elektronischen Münzdatensätzen hinzugefügten Signaturen unter Verwendung der maskierten Verschleierungsbeträge in der Überwachungsinstanz; Prüfen, ob der monetäre Betrag des verbundenen elektronischen Münzdatensatzes gleich der Summe aus dem ersten und dem zweiten monetären Betrag der ersten und zweiten elektronischen Münzdatensätze ist; Registrieren des quasi-maskierten verbundenen elektronischen Münzdatensatzes in der Überwachungsinstanz, wenn die drei Prüfen-Schritte erfolgreich sind, wodurch der verbundene elektronische Münzdatensatz als gültig gilt und die zwei zu verbindenden elektronischen Münzdatensätze als ungültig.

Der Schritt des Prüfens der quasi-maskierten Münzdatensätze im Umschalten,- Aufteilen, - oder Verbinden-Schritt erfolgt entsprechend dem Prüfen der Validität.

Bevorzugt wird zu jedem quasi-maskierten elektronischen Münzdatensatz eine Signatur erstellt. Der private Signaturschlüssel ist bevorzugt der (unmaskierte) Verschleierungsbetrag des (unmaskierten) Münzdatensatzes.

Die Signatur wird beim Umschalten-Schritt bevorzugt über dem quasi-maskierten elektronischen Münzdatensatzes und dem verschlüsselten Verschleierungsbetrag des quasimaskierten umzuschaltenden elektronischen Münzdatensatzes erstellt.

Die Signatur wird beim Aufteilen-Schritt bevorzugt über den quasi-maskierten elektronischen Münzdatensatz, den quasi-maskierten ersten elektronischen Münzteildatensatz und den quasimaskierten zweiten elektronischen Münzteildatensatz erstellt.

Die Signatur wird beim Verbinden-Schritt bevorzugt über den quasi-maskierten ersten elektronischen Münzdatensatz, den quasi-maskierten zweiten elektronischen Münzdatensatz und den quasimaskierten verbundenen elektronischen Münzdatensatz erstellt.

Für das Erstellen eines unmaskierten elektronischen Münzdatensatz für den ersten Maskierungsmodus wird eine Signatur des Herausgebers über den quasi-maskierten elektronischen Münzdatensatz in der Überwachungsinstanz hinterlegt.

Das Löschen eines quasi-maskierten elektronischen Münzdatensatzes erfolgt, wenn die Überwachungsinstanz die Signatur einer Herausgeberinstanz geprüft hat.

Die in diesem Verfahren erzeugten Signatur ersetzen eine ansonsten benötigte zusätzliche Informationen zum Führen eines Bereichsnachweis über den maskierten aufzuteilenden elektronischen Münzdatensatz bzw. einen Bereichsnachweis über jeweilig maskierte elektronische Münzteildatensätze.

Zum Erzeugen der Signatur wird bevorzugt ein asymmetrisches Kryptosystem, bei dem das Endgerät mit Hilfe eines geheimen Signaturschlüssels, nachfolgend auch privater Signaturschlüssel oder "Private Key" bezeichnet, zu einem Münzdatensatz einen Wert berechnet. Dieser Wert ermöglicht es jedem, mit Hilfe eines öffentlichen Verifikationsschlüssels, dem Public Key, die Urheberschaft und Integrität des Münzdatensatzes zu prüfen.

Die in diesem Verfahren für den ersten Maskierungsmodus hinzugefügte Signatur ist beispielsweise eine erste Signatur und ein privater Signaturschlüssel zum Erzeugen der ersten Signatur ist der Verschleierungsbetrag des entsprechenden elektronischen Münzdatensatzes. Dementgegen werden für den zweiten Maskierungsmodus nur zwei Signaturen verwendet, nämlich die Signatur der Zentralbank zum Erzeugen und Löschen (=fixer privater Schlüssel) und die Signatur für das Umschalten (Verschleierungsbetrag als privater Schlüssel).

Die in diesem Verfahren (aller Maskierungsmodi) hinzugefügte Signatur ist beispielsweise eine zweite Signatur und ein privater Signaturschlüssel zum Erzeugen der zweiten Signatur wird aus einer Differenz aus dem Verschleierungsbetrag des elektronischen Münzdatensatzes und dem Verschleierungsbetrag für den umzuschaltenden elektronischen Münzdatensatz gebildet.

Ein öffentlicher Verifikationsschlüssel zum Prüfen der ersten Signatur wird bevorzugt aus einer Differenz aus dem maskierten elektronischen Münzdatensatz und einem Anwenden der kryptografischen Verschlüsselungsfunktion auf den monetären Betrag des elektronischen Münzdatensatzes gebildet.

Ein öffentlicher Verifikationsschlüssel zum Prüfen der zweiten Signatur wird bevorzugt aus einer Differenz aus dem umzuschaltenden maskierten elektronischen Münzdatensatz und dem maskierten elektronischen Münzdatensatz gebildet.

Das Verfahren weist bevorzugt die weiteren folgenden Schritte auf Umschalten des übertragenen elektronischen Münzteildatensatzes; und/oder Verbinden des übertragenen elektronischen Münzdatensatzes mit einem zweiten elektronischen Münzdatensatz zu einem weiteren elektronischen Münzdatensatz, nämlich verbundenen elektronischen Münzdatensatz.

Beim Umschalten ergibt der vom ersten Endgerät erhaltene elektronische Münzteildatensatz einen neuen elektronischen Münzdatensatz, bevorzugt mit gleichem monetärem Betrag, dem sogenannten umzuschaltenden elektronischen Münzdatensatz. Der neue elektronische Münzdatensatz wird vom zweiten Endgerät generiert, vorzugsweise indem der monetäre Betrag des erhaltenen elektronischen Münzdatensatzes als monetärer Betrag des umzuschaltenden elektronischen Münzdatensatzes verwendet wird. Dabei wird ein neuer Verschleierungsbetrag, beispielsweise eine Zufallszahl, generiert. Der neue Verschleierungsbetrag wird beispielsweise zum Verschleierungsbetrag des erhaltenen elektronischen Münzdatensatzes addiert, damit die Summe beider Verschleierungsbeträge (neu und erhalten) als Verschleierungsbetrag des umzuschaltenden elektronischen Münzdatensatzes dient. Nach dem Umschalten wird bevorzugt der erhaltene elektronische Münzteildatensatz und der umzuschaltende elektronische Münzteildatensatz im Endgerät durch Anwenden der Einwegfunktion auf jeweils den erhaltenen elektronischen Münzteildatensatz und den umzuschaltenden elektronischen Münzteildatensatz maskiert, um entsprechend einen maskierten erhaltenen elektronischen Münzteildatensatz und einen maskierten umzuschaltenden elektronischen Münzteildatensatz zu erhalten.

Neu geschaffene Verschleierungsbeträge müssen eine hohe Entropie aufweisen, da sie als Blendungsfaktor für die entsprechenden maskierten elektronischen Münzteildatensätze verwendet werden. Bevorzugt wird dazu ein Zufallszahlengenerator auf dem Endgerät verwendet.

Bislang wurden im Rahmen des Umschaltens bevorzugt zusätzliche Informationen, die zum Registrieren des Umschaltens des maskierten elektronischen Münzdatensatzes in der entfernten Überwachungsinstanz benötigt werden, im Endgerät berechnet. Bevorzugt beinhalten die zusätzlichen Informationen einen Bereichsnachweis über den maskierten umzuschaltenden elektronischen Münzdatensatz und einen Bereichsnachweis über den maskierten erhaltenen elektronischen Münzdatensatz. Bei dem Bereichsnachweis handelt es sich um einen Nachweis, dass der monetäre Betrag des elektronischen Münzdatensatzes nicht negativ ist, der elektronische Münzdatensatz gültig erstellt und/ oder der monetäre Betrag und der Verschleierungsbetrag des elektronischen Münzdatensatzes dem Ersteller des Bereichsnachweises bekannt sind. Insbesondere dient der Bereichsnachweis dazu, diese(n) Nachweis(e) zu führen, ohne den monetären Wert und/oder den Verschleierungsbetrag des maskierten elektronischen Münzdatensatzes zu offenbaren. Diese Bereichsnachweise werden auch "Zero-Knowledge-Range-Proofs" genannt. Bevorzugt werden als Bereichsnachweis Ringsignaturen verwendet. Anschließend erfolgt ein Registrieren des Umschaltens des maskierten elektronischen Münzdatensatzes in der entfernten Überwachungsinstanz.

Das Umschalten wird also durch Hinzufügen eines neuen Verschleierungsbetrags zum Verschleierungsbetrag des erhaltenen elektronischen Münzdatensatz abgesichert, wodurch ein Verschleierungsbetrag erhalten wird, den nur das zweite Endgerät kennt. Neu geschaffene Verschleierungsbeträge müssen aber eine hohe Entropie aufweisen, da sie als Blendungsfaktor für die entsprechenden maskierten elektronischen Münzteildatensätze verwendet werden. Bevorzugt wird dazu ein Zufallszahlengenerator auf dem Endgerät verwendet. Diese Absicherung kann in der Überwachungsinstanz nachverfolgt werden.

Weiterhin umfasst das Verfahren die nachfolgenden Schritte: Maskieren des umzuschaltenden elektronischen Münzteildatensatzes im zweiten Endgerät durch Anwenden der beispielsweise homomorphen Einwegfunktion auf den umzuschaltenden elektronischen Münzteildatensatz zum Erhalten eines maskierten elektronischen Münzdatensatzes; und Registrieren des maskierten elektronischen Münzdatensatzes in einer entfernten Überwachungsinstanz.

Die hier beschriebenen Schritte müssen nicht in der beschriebenen Reihenfolge durchgeführt werden. Die hier beschriebene Reihenfolge ist jedoch eine bevorzugte Ausgestaltung.

Der Schritt des Registrierens wird vorzugsweise dann ausgeführt, wenn das zweite Endgerät mit der Überwachungsinstanz verbunden ist. Während die elektronischen Münzdatensätze für direktes Bezahlen zwischen zwei Endgeräten verwendet werden, werden die maskierten Münzdatensätze in der Überwachungsinstanz registriert, wodurch Modifikationen an den maskierten elektronischen Münzdatensätzen in der Überwachungsinstanz registriert werden können.

In einer weiter bevorzugten Ausgestaltung des Verfahrens wird für ein Verbinden von elektronischen Münzteildatensätzen ein weiterer elektronischer Münzdatensatz (verbundener elektronischer Münzdatensatz) aus einem ersten und einem zweiten elektronischen Münzteildatensatz bestimmt. Dabei wird der Verschleierungsbetrag für den zu verbindenden elektronischen Münzdatensatz durch Bilden der Summe aus den jeweiligen Verschleierungsbeträgen des ersten und des zweiten elektronischen Münzdatensatzes berechnet. Weiterhin wird vorzugsweise der monetäre Betrag für den verbundenen elektronischen Münzdatensatz durch Bilden der Summe aus den jeweiligen monetären Beträgen des ersten und des zweiten elektronischen Münzdatensatzes berechnet.

Nach dem Verbinden wird der erste elektronische Münzteildatensatz, der zweite elektronische Münzteildatensatz, sowie der zu verbindende elektronische Münzdatensatz im (ersten und/ oder zweiten) Endgerät durch Anwenden der beispielsweise homomorphen Einwegfunktion auf jeweils den ersten elektronischen Münzteildatensatz, den zweiten elektronischen Münzteildatensatz, sowie den zu verbindenden elektronischen Münzdatensatz maskiert, um entsprechend einen maskierten ersten elektronischen Münzteildatensatz, einen maskierten zweiten elektronischen Münzteildatensatz, sowie einen maskierten zu verbindenden elektronischen Münzdatensatz zu erhalten. Des Weiteren werden zusätzliche Informationen, die zum Registrieren des Verbindens der maskierten elektronischen Münzdatensätze in der entfernten Überwachungsinstanz benötigt werden, im Endgerät berechnet. Bevorzugt beinhalten die zusätzlichen Informationen einen Bereichsnachweis über den maskierten ersten elektronischen Münzteildatensatz und einen Bereichsnachweis über den maskierten zweiten elektronischen Münzteildatensatz. Bei dem Bereichsnachweis handelt es sich um einen Nachweis, dass der monetäre Betrag des elektronischen Münzdatensatzes nicht negativ ist, der elektronische Münzdatensatz gültig erstellt und/ oder der monetäre Betrag und der Verschleierungsbetrag des elektronischen Münzdatensatzes dem Ersteller des Bereichsnachweises bekannt sind. Insbesondere dient der Bereichsnachweis dazu, diese(n) Nachweis zu führen ohne den monetären Wert und/oder den Verschleierungsbetrag des maskierten elektronischen Münzdatensatzes zu offenbaren. Diese Bereichsnachweise werden auch "Zero-Knowledge-Range-Proofs" genannt. Bevorzugt werden als Bereichsnachweis Ringsignaturen verwendet. Anschließend erfolgt ein Registrieren des Verbindens der beiden maskierten elektronischen Münzteildatensätze in der entfernten Überwachungsinstanz.

Mit dem Schritt des Verbindens können zwei elektronische Münzdatensätze bzw. zwei elektronische Münzteildatensätze zusammengefasst werden. Dabei werden die monetären Beträge sowie auch die Verschleierungsbeträge addiert. Wie beim Aufteilen kann somit auch beim Verbinden eine Validität der beiden ursprünglichen Münzdatensätze durchgeführt werden.

In einer bevorzugten Ausgestaltung umfasst der Registrieren-Schritt das Empfangen des maskierten umzuschaltenden elektronischen Münzteildatensatzes in der Überwachungsinstanz, das Prüfen des maskierten umzuschaltenden elektronischen Münzteildatensatzes auf Validität; und das Registrieren des maskierten umzuschaltenden elektronischen Münzdatensatzes in der Überwachungsinstanz, wenn der Prüfen-Schritt erfolgreich ist, wodurch der umzuschaltende elektronische Münzteildatensatz als überprüft gilt.

Bevorzugt wird im Prüfen-Schritt festgestellt, ob die Differenz aus maskiertem elektronischem Münzdatensatz und maskiertem umzuschaltenden elektronischen Münzteildatensatz gleich einem öffentlichen Verifikationsschlüssel der Signatur ist. Dies ermöglicht das einfache Prüfen der Gültigkeit des Münzteildatensatzes ohne aufwendige Zero-Knowledge-Nachweise. Der Zero-Knowledge-Proof wird aber dennoch benötigt, um einen Besitz des elektronischen Münzdatensatzes zu beweisen (außer im ersten Maskierungsmodus).

Ein Hauptunterscheidungsmerkmal dieses Erfindungskonzepts gegenüber bekannten Lösungen ist, dass die Überwachungsinstanz nur (also ausschließlich) Kenntnis über die maskierten elektronischen Münzdatensätze/Münzteildatensätze und eine Liste mit Verarbeitungen bzw. Änderungen an dem maskierten elektronischen Münzdatensatz/Münzteildatensatz führt. Der tatsächliche Zahlungsverkehr mit den (unmaskierten) Münzdatensätzen/Münzteildatensätzen wird in der Überwachungsinstanz nicht registriert und findet in einer Direkttransaktionsschicht direkt zwischen Endgeräten statt.

Erfindungsgemäß ist auch ein zweischichtiges Bezahlsystem aus einer Direktbezahltransaktionsschicht, zum direkten Austauschen von (unmaskierten) elektronischen Münzdatensätzen und einer Überwachungsschicht, welche die Datenbank umfasst, vorgesehen. In der Überwachungsinstanz, der Überwachungsschicht, werden keine Bezahltransaktionen festgehalten, sondern ausschließlich maskierte elektronische Münzdatensätze und deren Verarbeitungen zum Zweck der Verifizierung der Gültigkeit von (unmaskierten) elektronischen Münzdatensätzen. So wird die Anonymität der Teilnehmer des Bezahlsystems gewährleistet. Die Überwachungsinstanz gibt Auskunft über gültige und ungültige elektronische Münzdatensätze, um beispielsweise eine Mehrfach-Ausgabe des gleichen elektronischen Münzdatensatzes zu vermeiden oder die Echtheit des elektronischen Münzdatensatzes als gültig herausgegebenes elektronisches Geld zu verifizieren.

Das Endgerät kann also in der Direktbezahltransaktionsschicht einem anderen Endgerät elektronische Münzdatensätze übertragen ohne Verbindung zur Überwachungsinstanz, insbesondere wenn das Endgerät offline ist, also keine Kommunikationsverbindung zu der Überwachungsinstanz vorhanden ist.

Das Endgerät kann vorliegend ein Sicherheitselement aufweisen, in dem die elektronischen Münzdatensätze sicher abgelegt sind. Ein Sicherheitselement ist bevorzugt ein spezielles Computerprogrammprodukt, insbesondere in Form einer abgesicherten Laufzeitumgebung innerhalb eines Betriebssystems eines Endgeräts, englisch Trusted Execution Environments, TEE, gespeichert auf einem Datenspeicher, beispielsweise eines mobilen Endgeräts, einer Maschine, vorzugsweise Bankautomat. Alternativ ist das Sicherheitselement beispielsweise als spezielle Hardware, insbesondere in Form eines gesicherten Hardware-Plattform-Moduls, englisch Trusted Platform Module, TPM oder als ein eingebettetes Sicherheitsmodul, eUICC, eSIM, ausgebildet. Das Sicherheitselement stellt eine vertrauenswürdige Umgebung bereit.

Die Kommunikation zwischen zwei Endgeräten kann drahtlos oder drahtgebunden, oder z.B. auch auf optischem Weg, bevorzugt über QR-Code oder Barcode, erfolgen und kann als ein gesicherter Kanal ausgebildet sein. Der optische Weg kann beispielsweise die Schritte des Generierens einer optischen Codierung, insbesondere einer 2D-Codierung, vorzugsweise ein QR-Code, und des Einlesens der optischen Codierung umfassen. Somit ist der Austausch des elektronischen Münzdatensatzes beispielsweise durch kryptografische Schlüssel gesichert, beispielsweise einem für einen elektronischen Münzdatensatz-Austausch ausgehandelten Sitzungsschlüssel oder einem symmetrischen oder asymmetrischen Schlüsselpaar.

Durch das Kommunizieren zwischen Endgeräten, beispielsweise über ihre Sicherheitselemente, werden die ausgetauschten elektronischen Münzdatensätze vor Diebstahl oder Manipulation geschützt. Die Ebene der Sicherheitselemente ergänzt so die Sicherheit etablierter Blockchain-Technologie.

In einer bevorzugten Ausgestaltung erfolgt das Übertragen der Münzdatensätze als APDU Kommandos. Dazu ist der Münzdatensatz bevorzugt in einer (embedded) UICC als Sicherheitselement abgelegt und wird dort verwalten. Ein APDU ist ein kombinierter Kommando/Datenblock eines Verbindungsprotokolls zwischen der UICC und einem Gerät. Die Struktur der APDU ist durch den Standard ISO-7816-4 definiert. APDUs stellen ein Informationselement der Anwendungsebene (Schicht 7 des OSI-Schichtenmodels) dar.

Darüber hinaus ist es vom Vorteil, dass die elektronischen Münzdatensätze in beliebiger Formatierung übertragen werden können. Dies impliziert, dass sie auf beliebigen Kanälen kommuniziert, also übertragen werden können. Sie müssen nicht in einem festgelegten Format oder in einem bestimmten Programm gespeichert werden.

Als ein Endgerät wird insbesondere ein mobiles Telekommunikationsendgerät, beispielsweise ein Smartphone angesehen. Alternativ oder zusätzlich kann das Endgerät auch ein Gerät, wie Wearable, Smartcard, Maschine, Werkzeug, Automat oder auch Behälter bzw. Fahrzeug sein. Ein erfindungsgemäßes Endgerät ist somit entweder stationär oder mobil. Das Endgerät ist vorzugsweise ausgebildet, das Internet und/ oder andere öffentliche oder private Netze zu nutzen. Dazu verwendet das Endgerät eine geeignete Verbindungstechnologie, beispielsweise Bluetooth, Lora, NFC und/ oder WiFi und weist wenigstens eine entsprechende Schnittstelle auf. Das Endgerät kann auch ausgebildet sein, mittels Zugangs zu einem Mobilfunknetz mit dem Internet und/ oder anderen Netzen verbunden zu werden.

In einer Ausgestaltung kann vorgesehen sein, dass das erste und/ oder zweite Endgerät bei dem aufgezeigten Verfahren die empfangenen elektronischen Münzdatensätze bei Vorliegen oder Empfang mehrerer elektronischer Münzdatensätze diese entsprechend ihrer monetären Wertigkeit abarbeitet. So kann vorgesehen sein, dass elektronische Münzdatensätze mit höherer monetärer Wertigkeit vor elektronische Münzdatensätze mit niedriger monetärer Wertigkeit verarbeitet. In einer Ausgestaltung kann das erste und/ oder zweite Endgerät ausgebildet sein, nach Empfang eines elektronischen Münzdatensatzes diesen in Abhängigkeit von beigefügter Information, beispielsweise einer Währung oder Denomination, mit bereits im zweiten Endgerät vorhandenem elektronischen Münzdatensatz zu verbinden und entsprechend einen Schritt des Verbindens auszuführen. Weiterhin kann das zweite Endgerät auch zum automatisierten Ausführen eines Umschaltens nach Empfang des elektronischen Münzdatensatzes vom ersten Endgerät ausgebildet sein.

In einer Ausgestaltung werden beim Übertragen weitere Informationen, insbesondere Metadaten, vom ersten Endgerät auf das zweite Endgerät übermittelt, beispielsweise eine Währung. Diese Information kann in einer Ausgestaltung vom elektronischen Münzdatensatz umfasst sein.

In einer bevorzugten Ausgestaltung weist das Verfahren die folgenden weiteren Schritte auf: Maskieren des übertragenen elektronischen Münzdatensatzes im zweiten Endgerät durch Anwenden der beispielsweise homomorphen Einwegfunktion auf den übertragenen elektronischen Münzdatensatz; und Senden des maskierten übertragenen elektronischen Münzdatensatzes an die entfernte Überwachungsinstanz zum Prüfen der Validität des übertragenen elektronischen Münzdatensatzes durch die entfernte Überwachungsinstanz. In diesem Fall wurde beispielsweise der gesamte monetäre Betrag im Rahmen des elektronischen Münzdatensatzes an das zweite Endgerät übertragen. Bevor ein Zahlungsempfänger diesen elektronischen Münzdatensatz akzeptiert, überprüft er gegebenenfalls dessen Gültigkeit. Zu diesem Zweck erzeugt das zweite Endgerät den maskierten übertragenen elektronischen Münzdatensatz, sendet diesen zur Überwachungsinstanz und fragt dabei bei der Überwachungsinstanz die Gültigkeit des elektronischen Münzdatensatzes ab. Die Überwachungsinstanz prüft nun, ob der maskierte übertragene elektronische Münzdatensatz überhaupt vorhanden ist und ob er weiterhin gültig ist, also nicht bereits durch ein anderes Endgerät verbraucht ist, um so Doppelausgaben zu vermeiden.

In einer Ausgestaltung wird im zweiten Endgerät ein Nachweis erstellt. Der Nachweist umfasst eine Information über die Übereinstimmung des monetären Betrags des übertragenen elektronischen Münzdatensatzes mit dem monetären Betrags des umzuschaltenden elektronischen Münzdatensatzes. Vorzugsweise umfasst der Nachweis lediglich eine Information über die Übereinstimmung, nicht aber einen der monetären Beträge.

Bevorzugt erfolgt während des Registrieren-Schrittes ein Verifizieren der elektronischen Münzdatensätze des ersten und/ oder zweiten Endgeräts in der bzw. durch die Überwachungsinstanz. Die Prüfung erfolgt in Abhängigkeit der der Verifikation vorangehenden Schritte, beispielsweise ob ein Schritt des Umschaltens, des Verbindens und/ oder des Aufteilens erfolgt ist. Dabei kann die Überwachungsinstanz beispielsweise die Gültigkeit der (maskierten) übertragenen und/oder aufzuteilenden und/oder ersten und zweiten elektronischen Münzdatensätzen prüfen. Dies ermöglicht es, festzustellen, ob die elektronischen Münzdatensätze zum ersten Mal verarbeitet werden. Falls die (maskierten) elektronischen Münzdatensätze nicht gültig sind (also insbesondere falls sie nicht in der Überwachungsinstanz vorliegen) kann das Registrieren nicht erfolgreich ausgeführt werden, zum Beispiel weil das Endgerät versucht einen elektronischen Münzdatensatz mehrfach auszugeben.

In einer weiter bevorzugten Ausgestaltung umfasst der Registrieren-Schritt nach dem Ausführen des Umschalten-Schritts beispielsweise das Versenden des vom Endgerät vorbereiteten Umschalten-Befehls an die Überwachungsinstanz. Bevorzugt teilt die Überwachungsinstanz das Ergebnis des Ausführens des Umschalten-Befehls dem "befehlenden" Endgerät mit, d.h. welche der involvierten maskierten elektronischen Münzdatensätze nach Ausführen des Umschalten-Befehls gültig sind.

In einer bevorzugten Ausgestaltung ist die Überwachungsinstanz eine entfernte Instanz. Damit ist beispielsweise zum Registrieren des elektronischen Münzdatensatzes der Aufbau einer Kommunikationsverbindung zu der Überwachungsinstanz vorgesehen.

Die Überwachungsinstanz ist als übergeordnete Instanz ausgebildet. Die Überwachungsinstanz ist demnach nicht zwingend in der Ebene bzw. in der Schicht der Endgeräte (Direkttransaktionsschicht) angeordnet. Vorzugsweise ist die Überwachungsinstanz zur Verwaltung und Prüfung von maskierten elektronischen Münzdatensätzen vorgesehen und einer Herausgeberschicht, in welcher auch eine Herausgeberinstanz angeordnet ist, und/ oder einer Überwachungsschicht angeordnet. Es ist denkbar, dass die Überwachungsinstanz zusätzlich Transaktionen zwischen Endgeräten verwaltet und prüft.

Die Überwachungsinstanz ist bevorzugt eine Datenbank, in der die maskierten elektronischen Münzdatensätze mit entsprechender Verarbeitung des maskierten elektronischen Münzdatensatzes registriert sind. Die Datenbank kann als dezentral gesteuerte Datenbank, englisch Distributed Ledger Technology (DLT), ausgestaltet sein. In einer bevorzugten Ausgestaltung lässt sich daraus ein Gültigkeitsstatus des (maskierten) elektronischen Münzdatensatzes ableiten. Bevorzugt wird die Gültigkeit der (maskierten) elektronischen Münzdatensätze in der und durch die Überwachungsinstanz vermerkt. Die Registrierung der Verarbeitung bzw. der Verarbeitungsschritte kann auch das Registrieren von Prüfergebnissen und Zwischenprüfergebnissen betreffend die Gültigkeit eines elektronischen Münzdatensatzes betreffen. Ist eine Verarbeitung endgültig, wird dies beispielsweise durch entsprechende Markierungen oder einer abgeleiteten Gesamtmarkierung angezeigt. Eine endgültige Verarbeitung entscheidet sodann, ob ein elektronischer Münzdatensatz gültig oder ungültig ist.

Diese Datenbank ist weiter bevorzugt eine nicht-öffentliche Datenbank, kann aber auch als öffentliche Datenbank realisiert werden. Diese Datenbank ermöglicht es auf einfache Weise, Münzdatensätze bezüglich ihrer Gültigkeit zu prüfen und "Double-Spending", also Mehrfachausgaben, zu verhindern, ohne dass die Bezahltranskation selbst registriert oder protokolliert wird. Die Datenbank beschreibt dabei eine Technik für vernetzte Computer, die zu einer Übereinkunft über die Reihenfolge von bestimmten Transaktionen kommen und darüber, dass diese Transaktionen Daten aktualisieren. Es entspricht einem dezentral geführten Verwaltungssystem oder einer dezentral geführten Datenbank.

In einer weiteren Ausgestaltung kann die Datenbank auch als öffentliche Datenbank ausgebildet sein.

Alternativ ist die Überwachungsinstanz eine zentral geführte Datenbank, beispielsweise in Form eines öffentlich zugänglichen Datenspeichers oder als Mischform aus zentraler und dezentraler Datenbank.

Bevorzugt wird der zumindest eine initiale elektronische Münzdatensatz ausschließlich von der Herausgeberinstanz erstellt, wobei vorzugsweise die aufgeteilten elektronischen Münzdatensätze, insbesondere elektronischen Münzteildatensätze, auch durch ein Endgerät generiert werden können. Das Erstellen und das Wählen eines monetären Betrags beinhalten bevorzugt auch das Wählen eines Verschleierungsbetrags mit hoher Entropie. Die Herausgeberinstanz ist ein Rechensystem, welches bevorzugt entfernt vom ersten und/ oder zweiten Endgerät ist. Nach dem Erstellen des neuen elektronischen Münzdatensatzes wird der neue elektronische Münzdatensatz in der Herausgeberinstanz durch Anwenden der beispielsweise homomorphen Einwegfunktion auf den neuen elektronischen Münzdatensatz maskiert, um entsprechend einen maskierten neuen elektronischen Münzdatensatz zu erhalten. Des Weiteren werden zusätzliche Informationen, die zum Registrieren des Erstellens des maskierten neuen elektronischen Münzdatensatzes in der entfernten Überwachungsinstanz benötigt werden, im der Herausgeberinstanz berechnet. Bevorzugt sind diese weiteren Informationen ein Nachweis, dass der (maskierte) neue elektronische Münzdatensatz von der Herausgeberinstanz stammt, beispielsweise durch eine signieren des maskierten neuen elektronischen Münzdatensatzes. In einer Ausgestaltung kann vorgesehen sein, dass die Herausgeberinstanz einen maskierten elektronischen Münzdatensatz beim Erzeugen des elektronischen Münzdatensatzes mit ihrer Signatur signiert. Die Signatur der Herausgeberinstanz wird dazu in der Überwachungsinstanz hinterlegt. Die Signatur der Herausgeberinstanz ist von der erzeugten Signatur des ersten Endgeräts verschieden.

Bevorzugt kann die Herausgeberinstanz einen elektronischen Münzdatensatz, der sich in ihrem Besitz befindet (also von dem sie den monetären Betrag und den Verschleierungsbetrag kennt) deaktivieren, indem sie den maskierten zu deaktivierenden elektronischen Münzdatensatz mit der beispielsweise homomorphen Einwegfunktion maskiert und einen Deaktivieren-Befehl für die Überwachungsinstanz vorbereitet. Teil des Deaktivieren-Befehls ist bevorzugt neben dem maskierten zu deaktivierenden elektronischen Münzdatensatzes auch der Nachweis, dass der Deaktivieren Schritt von der Herausgeberinstanz initiiert wurde, beispielsweise in Form des signierten maskierten zu deaktivierenden elektronischen Münzdatensatzes. Als zusätzliche Information könnten im Deaktivieren-Befehl Bereichsprüfungen für den maskierten zu deaktivierenden elektronischen Münzdatensatz enthalten sein. Anschließend erfolgt ein Registrieren des Deaktivierens des maskierten elektronischen Münzdatensatzes in der entfernten Überwachungsinstanz. Mit dem Deaktivieren-Befehl wird der Schritt des Deaktivierens ausgelöst.

Die Schritte Erstellen und Deaktivieren erfolgen bevorzugt an gesicherten Orten, insbesondere nicht in den Endgeräten. In einer bevorzugten Ausgestaltung werden die Schritte des Erstellens und Deaktivierens nur von der Herausgeberinstanz durchgeführt bzw. angestoßen. Vorzugsweise finden diese Schritte an einen gesicherten Ort statt, beispielsweise in einer Hard- und Software-Architektur, die zur Verarbeitung von sensiblem Datenmaterial in unsicheren Netzen entwickelt wurde. Das Deaktivierendes entsprechenden maskierten elektronischen Münzdatensatz bewirkt, dass der entsprechende maskierte elektronische Münzdatensatz nicht mehr für weitere Verarbeitung, insbesondere Transaktionen, verfügbar ist, da er in und von der Überwachungsinstanz als ungültig markiert wurde. Jedoch kann in einer Ausführungsform vorgesehen sein, dass der deaktivierte maskierte elektronische Münzdatensatz bei der Herausgeberinstanz archivarisch bestehen bleibt. Dass der deaktivierte maskierte elektronische Münzdatensatz nicht mehr gültig ist, kann beispielsweise mithilfe eines Flags oder einer anderen Codierung gekennzeichnet oder der deaktivierte maskierte elektronische Münzdatensatz kann zerstört und/ oder gelöscht werden. Selbstverständlich kann der deaktivierte maskierte elektronische Münzdatensatz auch physisch vom Endgerät entfernt werden.

Durch das erfindungsgemäße Verfahren werden verschiedene Verarbeitungsoperationen für die elektronischen Münzdatensätze und die entsprechenden maskierten elektronischen Münzdatensätze ermöglicht. Jeder der Verarbeitungsoperationen (insbesondere das Erstellen, Deaktivieren, Aufteilen, Verbinden und Umschalten) wird dabei in der Überwachungsinstanz registriert und dort in unveränderlicher Form an die Liste der vorherigen Verarbeitungsoperationen für den jeweiligen maskierten elektronischen Münzdatensatz angehängt. Die Registrierung ist dabei vom Bezahlvorgang zwischen den Endgeräten sowohl zeitlich als auch örtlich (räumlich) unabhängig. Die Verarbeitungsoperationen "Erstellen" und "Deaktivieren", die die Existenz des monetären Betrags an sich betreffen, also die Schaffung und die Vernichtung bis hin der Zerstörung von Geld bedeuten, bedürfen einer zusätzlichen Genehmigung, beispielsweise in Form einer Signatur, durch die Herausgeberinstanz, um in der Überwachungsinstanz registriert (also protokolliert) zu werden. Die übrigen Verarbeitungsoperationen (Aufteilen, Verbinden, Umschalten bedürfen keiner Autorisierung durch die Herausgeberinstanz oder durch den Befehlsinitiator (= Zahler, bspw. das erste Endgerät).

Eine Verarbeitung in der Direkttransaktionsschicht betrifft nur die Besitzverhältnisse und/ oder die Zuordnung der Münzdatensätze zu Endgeräten der jeweiligen elektronischen Münzdatensätze. Eine Registrierung der jeweiligen Verarbeitung in der Überwachungsinstanz wird beispielsweise durch entsprechende Listeneinträge in einer Datenbank realisiert, die eine Reihe von Markierungen umfasst, die von der Überwachungsinstanz durchgeführt werden müssen. Eine mögliche Struktur für einen Listeneintrag umfasst beispielsweise Spalte(n) für einen Vorgänger-Münzdatensatz, Spalte(n) für einen Nachfolger-Münzdatensatz, eine Signatur-Spalte für die Herausgeberinstanz, eine Signatur-Spalte für Münzteilungsvorgänge und zumindest eine Markierungsspalte. Eine Änderung des Status der Markierung bedarf der Genehmigung durch die Überwachungsinstanz und muss sodann unveränderlich gespeichert werden. Eine Änderung ist endgültig, wenn und nur wenn die erforderlichen Markierungen durch die Überwachungsinstanz validiert wurden, d.h. nach der entsprechenden Prüfung beispielsweise vom Status "0" in den Status "1" gewechselt wurden. Scheitert eine Prüfung oder dauert zu lang, so wird sie stattdessen beispielsweise vom Status "-" in den Status "0" gewechselt. Weitere Statuswerte sind denkbar und/oder die hier genannten Statuswerte sind austauschbar. Bevorzugt wird die Gültigkeit der jeweiligen (maskierten) elektronischen Münzdatensätze aus den Statuswerten der Markierungen zusammengefasst jeweils in einer Spalte für jeden maskierten elektronischen Münzdatensatz, der im Registrieren der Verarbeitung involviert ist, dargestellt.

In einem weiteren Ausführungsbeispiel können wenigstens zwei vorzugsweise drei oder sogar alle der vorhergenannten Markierungen auch durch eine einzige Markierung ersetzt werden, die dann gesetzt wird, wenn alle Prüfungen erfolgreich abgeschlossen wurden. Des Weiteren lassen sich die je zwei Spalten für Vorgänger-Datensätze und Nachfolger-Datensätze zu jeweils einem zusammenfassen, in welchem alle Münzdatensätze gemeinsam ausgelistet sind. Dadurch könnten dann auch mehr als zwei elektronische Münzdatensätze je Feldeintrag verwaltet werden, und somit z.B. eine Aufspaltung in mehr als zwei Münzen realisiert werden.

Die Prüfungen durch die Überwachungsinstanz, um zu prüfen, ob eine Verarbeitung endgültig ist sind bereits oben beschrieben und sind insbesondere:

- Sind die maskierten elektronischen Münzdatensätze der Vorgänger-Spalte(n) gültig?
- Ergibt eine Überwachung den korrekten Prüfwert?
- Sind die Bereichsnachweise für die maskierten elektronischen Münzdatensätze erfolgreich?
- Ist die Signatur des maskierten elektronischen Münzdatensatzes eine gültige Signatur der Herausgeberinstanz?

Bevorzugt gilt zudem, dass ein maskierter elektronischer Münzdatensatz ungültig ist, wenn einer der folgenden Prüfungen zutrifft, also wenn:

(1) der maskierte elektronische Münzdatensatz nicht in der Überwachungsinstanz registriert ist;

(2) die letzte Verarbeitung des maskierten elektronischen Münzdatensatzes angibt, dass es für ihn Vorgänger-Münzdatensätze gibt, diese letzte Verarbeitung aber nicht endgültig ist; oder

(3) die letzte Verarbeitung des maskierten elektronischen Münzdatensatzes angibt, dass es für ihn Nachfolger-Münzdatensätze gibt und diese letzte Verarbeitung endgültig ist;

(4) der maskierte elektronische Münzdatensatz nicht der Nachfolger von einem gültigen maskierten elektronischen Datensatz ist, es sei denn er ist von der Herausgeberinstanz signiert

In einem Aspekt der Erfindung ist ein Bezahlsystem zum Austausch von monetären Beträgen vorgesehen mit einer Überwachungsschicht mit einer Datenbank in der maskierte elektronische Münzdatensätze abgelegt sind; und einer Direkttransaktionsschicht mit zumindest zwei Endgeräten, in welche das vorhergehend beschriebene Verfahren durchführbar ist; und/oder eine Herausgeberinstanz zum Erzeugen eines elektronischen Münzdatensatzes. Dabei kann die Herausgeberinstanz nachweisen, dass der maskierte erzeugte elektronische Münzdatensatz von ihr erzeugt wurde, bevorzugt kann sich die Herausgeberinstanz durch das Signieren ausweisen und die Überwachungsinstanz kann die Signatur der Herausgeberinstanz prüfen.

In einer bevorzugten Ausgestaltung umfasst das Bezahlsystem eine Herausgeberinstanz zum Erzeugen eines elektronischen Münzdatensatzes. Dabei kann die Herausgeberinstanz nachweisen, dass der maskierte erzeugte elektronische Münzdatensatz von ihr erzeugt wurde, bevorzugt kann sich die Herausgeberinstanz durch das Signieren ausweisen und die Überwachungsinstanz kann die Signatur der Herausgeberinstanz prüfen.

Bevorzugt ist das Bezahlsystem zum Durchführen des oben genannten Verfahrens und/ oder wenigstens einer der Ausführungsvarianten ausgebildet.

Ein weiterer Aspekt der Erfindung betrifft ein Währungssystem umfassend eine Herausgeberinstanz, eine Überwachungsinstanz, ein erstes Endgerät und ein zweites Endgerät, wobei die Herausgeberinstanz ausgebildet ist, einen elektronischen Münzdatensatzes zu erstellen. Der maskierte elektronische Münzdatensatz ist ausgebildet, nachweisbar durch die Herausgeberinstanz erstellt zu sein. Die Überwachungsinstanz ist zum Ausführen eines Registrierschritts wie in dem oben genannten Verfahren ausgeführt, ausgebildet Vorzugsweise sind die Endgeräte, d.h. wenigstens das erste und zweite Endgerät zum Ausführen eines des oben genannten Verfahrens zum Übertragen geeignet.

In einer bevorzugten Ausführung des Währungssystems ist lediglich die Herausgeberinstanz berechtigt, einen elektronischen Münzdatensatz initial zu erstellen. Eine Verarbeitung, beispielsweise der Schritt des Verbindens, des Aufteilens und/ oder des Umschaltens, kann und wird vorzugsweise durch ein Endgerät durchgeführt. Der Verarbeitungsschritt des Deaktivierens kann vorzugsweise nur von der Herausgeberinstanz ausgeführt werden. Somit wäre lediglich die Herausgeberinstanz berechtigt, den elektronischen Münzdatensatzes und/ oder den maskierten elektronischen Münzdatensatz zu invalidieren.

Bevorzugt sind die Überwachungsinstanz und die Herausgeberinstanz in einer Serverinstanz angeordnet oder liegen als Computerprogrammprodukt auf einem Server und/ oder einem Computer vor.

Ein elektronischer Münzdatensatz kann dabei in einer Vielzahl von unterschiedlichen Erscheinungsformen vorliegen und damit über verschiedene Kommunikationskanäle, nachfolgend auch Schnittstellen genannt, ausgetauscht werden. Ein sehr flexibler Austausch von elektronischen Münzdatensätzen ist damit geschaffen.

Der elektronische Münzdatensatz ist beispielsweise in Form einer Datei darstellbar. Eine Datei besteht dabei aus inhaltlich zusammengehörigen Daten, die auf einem Datenträger, Datenspeicher oder Speichermedium gespeichert sind. Jede Datei ist zunächst eine eindimensionale Aneinanderreihung von Bits, die normalerweise in Byte-Blöcken zusammengefasst interpretiert werden. Ein Anwendungsprogramm (Applikation) oder ein Betriebssystem selbst interpretieren diese Bit- oder Bytefolge beispielsweise als einen Text, ein Bild oder eine Tonaufzeichnung. Das dabei verwendete Dateiformat kann unterschiedlich sein, beispielsweise kann es eine reine Textdatei sein, die den elektronischen Münzdatensatz repräsentiert. Dabei werden insbesondere der monetäre Betrag und die blinde Signatur als Datei abgebildet.

Der elektronische Münzdatensatz ist beispielsweise eine Folge von American Standard Code for Information Interchange, kurz ASCII, Zeichen. Dabei werden insbesondere der monetäre Betrag und die blinde Signatur als diese Folge abgebildet.

Der elektronische Münzdatensatz kann in einem Gerät auch von einer Darstellungsform in eine andere Darstellungsform umgewandelt werden. So kann beispielsweise der elektronische Münzdatensatz als QR-Code im Gerät empfangen werden und als Datei oder Zeichenfolge vom Gerät ausgegeben werden.

Diese unterschiedlichen Darstellungsformen von ein und demselben elektronischen Münzdatensatz ermöglichen einen sehr flexiblen Austausch zwischen Geräten unterschiedlicher technischer Ausrüstung unter Verwendung unterschiedlicher Übertragungsmedien (Luft, Papier, drahtgebunden) und unter Berücksichtigung der technischen Ausgestaltung eines Geräts. Die Wahl der Darstellungsform der elektronischen Münzdatensätze erfolgt bevorzugt automatisch, beispielsweise aufgrund erkannter oder ausgehandelter Übertragungsmedien und Gerätekomponenten. Zusätzlich kann auch ein Benutzer eines Gerät die Darstellungsform zum Austausch (=Übertragen) eines elektronischen Münzdatensatzes wählen.

In einem Aspekt der Erfindung wird die Aufgabe durch ein Gerät gelöst, das zum direkten Übertragen von elektronischen Münzdatensätzen an ein anderes Gerät eingerichtet ist. Das Gerät umfasst Mittel zum Zugreifen auf einen Datenspeicher, wobei im Datenspeicher zumindest ein elektronischer Münzdatensatz abgelegt ist; eine Schnittstelle zumindest zum Ausgaben des zumindest einen elektronischen Münzdatensatzes an das andere Gerät; und eine Recheneinheit, die zum Maskieren des elektronischen Münzdatensatzes im Gerät durch Anwenden der beispielsweise homomorphen (Verschlüsselungs-)Einwegfunktion auf den elektronischen Münzdatensatz zum Erhalten eines maskierten elektronischen Münzdatensatzes zum Registrieren des maskierten elektronischen Münzdatensatzes in einer Überwachungsinstanz; und zum Ausgeben des elektronischen Münzdatensatzes mittels der Schnittstelle eingerichtet ist.

Ein Gerät ist dabei ein zuvor beschriebenes Endgerät bzw. eine zuvor beschriebene Maschine.

In einem einfachen Fall ist der Datenspeicher ein interner Datenspeicher des Geräts. Hier werden die elektronischen Münzdatensätze abgelegt. Ein einfacher Zugriff auf elektronische Münzdatensätze ist somit gewährleistet.

Der Datenspeicher ist insbesondere ein externer Datenspeicher, auch Online-Speicher genannt. Somit weist das Gerät nur ein Zugriffsmittel auf die extern und damit sicher abgelegten Münzdatensätze auf. Insbesondere bei einem Verlust des Geräts oder bei Fehlfunktionen des Geräts sind die elektronischen Münzdatensätze nicht verloren. Da der Besitz der (unmaskierten) elektronischen Münzdatensätze gleich dem Besitz des monetären Betrags entspricht, kann durch Verwendung externer Datenspeicher Geld sicherer aufbewahrt werden.

Ist die Überwachungsinstanz eine entfernte Überwachungsinstanz, so verfügt das Gerät bevorzugt über eine Schnittstelle zur Kommunikation mittels einem üblichen Internet-Kommunikationsprotokoll, beispielsweise TCP, IP, UDP oder HTTP. Die Übertragung kann eine Kommunikation über das Mobilfunknetz beinhalten.

In einer bevorzugten Ausgestaltung ist das Gerät dazu eingerichtet, die bereits beschriebenen Verarbeitungen, insbesondere das Aufteilen, Verbinden und Umschalten an einem elektronischen Münzdatensatz durchzuführen. Dazu ist die Recheneinheit dazu eingerichtet, einen umzuschaltenden elektronischen Münzdatensatz als den elektronischen Münzdatensatz zu maskieren, den die Überwachungsinstanz als maskierten elektronischen Münzdatensatz zum Registrieren des Umschalten-Befehls bzw. im Umschalten-Schritt braucht. Auf diese Weise kann ein elektronischer Münzdatensatz - wie oben beschrieben - umgeschaltet werden.

Zudem oder alternativ ist die Recheneinheit bevorzugt eingerichtet, einen in eine Anzahl von Münzteildatensätzen aufgeteilten elektronischen Münzdatensatz zu maskieren, um einen maskierten elektronischen Münzdatensatz und ggf. maskierte elektronischen Münzteildatensätze zu erhalten, die in der Überwachungsinstanz registriert werden können. Auf diese Weise kann ein elektronischer Münzdatensatz - wie oben beschrieben - aufgeteilt werden.

Zudem oder alternativ ist die Recheneinheit bevorzugt eingerichtet, einen aus einem ersten und einem zweiten elektronischen Münzdatensatz zu verbindenden elektronischen Münzteildatensatzes als den elektronischen Münzdatensatz zu maskieren, um einen maskierten zu verbindenden Münzdatensatzes als den maskierten elektronischen Münzdatensatz zu erhalten, der in der Überwachungsinstanz registriert wird. Auf diese Weise kann ein elektronischer Münzdatensatz - wie oben beschrieben - verbunden werden.

In einer bevorzugten Ausgestaltung ist die Schnittstelle zum Ausgeben des zumindest einen elektronischen Münzdatensatzes eine elektronische Anzeigeeinheit des Geräts, die zum Anzeigen des elektronischen Münzdatensatzes und dadurch (auch) zum Ausgeben des elektronischen Münzdatensatzes in visueller Form eingerichtet ist. Wie bereits beschrieben wurde, ist der elektronische Münzdatensatz dann beispielsweise in Form eines optoelektronisch erfassbaren Codes, einem Bild, etc. zwischen Geräten austauschbar.

In einer bevorzugten Ausgestaltung ist die Schnittstelle zum Ausgeben des zumindest einen elektronischen Münzdatensatzes eine Protokollschnittstelle zum drahtlosen Senden des elektronischen Münzdatensatzes an das andere Gerät mittels eines Kommunikationsprotokolls für Drahtloskommunikation. Dabei ist insbesondere eine Nahfeldkommunikation, beispielsweise mittels Bluetooth-Protokoll oder NFC-Protokoll oder IR-Protokoll vorgesehen, alternativ oder zusätzlich sind WLAN-Verbindungen oder Mobilfunkverbindungen denkbar. Der elektronische Münzdatensatz wird dann gemäß den Protokolleigenschaften angepasst und übertragen.

In einer bevorzugten Ausgestaltung ist die Schnittstelle zum Ausgeben des zumindest einen elektronischen Münzdatensatzes eine Datenschnittstelle zum Bereitstellen des elektronischen Münzdatensatzes an das andere Gerät mittels einer Applikation. Im Unterschied zur Protokollschnittstelle wird hier der elektronische Münzdatensatz mittels einer Applikation übertragen. Diese Applikation überträgt sodann den Münzdatensatz in einem entsprechenden Dateiformat. Es kann ein für elektronische Münzdatensätze spezifisches Dateiformat verwendet werden. In einfachster Form wird der Münzdatensatz als ASCII-Zeichenfolge oder als Textnachricht, beispielsweise SMS, MMS, Instant-Messenger-Nachricht (wie Threema oder WhatsApp) übertragen. In einer alternativen Form wird der Münzdatensatz als APDU-Zeichenfolge übertragen. Es kann auch eine Geldbörsen-Applikation vorgesehen sein. Hierbei stellen die austauschenden Geräte bevorzugt sicher, dass ein Austausch mittels der Applikation möglich ist, also dass beide Geräte die Applikation aufweisen und austauschbereit sind.

In einer bevorzugten Ausgestaltung weist das Gerät weiter eine Schnittstelle zum Empfangen von elektronischen Münzdatensätzen auf.

In einer bevorzugten Ausgestaltung ist die Schnittstelle zum Empfangen des zumindest einen elektronischen Münzdatensatzes ein elektronisches Erfassungsmodul des Geräts, eingerichtet zum Erfassen eines, in visueller Form dargestellten elektronischen Münzdatensatzes. Das Erfassungsmodul ist dann beispielsweise eine Kamera oder ein Barcode bzw. QR-Code Scanner.

In einer bevorzugten Ausgestaltung ist die Schnittstelle zum Empfangen des zumindest einen elektronischen Münzdatensatzes eine Protokollschnittstelle zum drahtlosen Empfangen des elektronischen Münzdatensatzes von einem anderen Gerät mittels eines Kommunikationsprotokolls für Drahtloskommunikation. Dabei ist insbesondere eine Nahfeldkommunikation, beispielsweise mittels Bluetooth-Protokoll oder NFC-Protokoll oder IR-Protokoll, vorgesehen. Alternativ oder zusätzlich sind WLAN-Verbindungen oder Mobilfunkverbindungen denkbar.

In einer bevorzugten Ausgestaltung ist die Schnittstelle zum Empfangen des zumindest einen elektronischen Münzdatensatzes eine Datenschnittstelle zum Empfangen des elektronischen Münzdatensatzes von dem anderen Gerät mittels einer Applikation. Diese Applikation empfängt sodann den Münzdatensatz in einem entsprechenden Dateiformat. Es kann ein für Münzdatensätze spezifisches Dateiformat verwendet werden. In einfachster Form wird der Münzdatensatz als ASCII-Zeichenfolge oder als Textnachricht, beispielsweise SMS, MMS, Threema oder WhatsApp übertragen. In einer alternativen Form wird der Münzdatensatz als APDU-Zeichenfolge übertragen. Zusätzlich kann die Übertragung mittels einer Geldbörsen-Applikation erfolgen.

In einer bevorzugten Ausgestaltung ist die Schnittstelle zum Empfangen des zumindest einen elektronischen Münzdatensatzes auch die Schnittstelle zum Ausgeben des elektronischen Münzdatensatzes, sodass eine Schnittstelle sowohl zum Senden als auch zum Empfangen des Münzdatensatzes vorgesehen ist.

In einer bevorzugten Ausgestaltung umfassend das Gerät zumindest ein Sicherheitselement-Lesegerät, eingerichtet zum Lesen eines Sicherheitselements; einen Zufallszahlengenerator; und/oder eine Kommunikationsschnittstelle zu einem Tresormodul und/ oder Bankinstitut mit zu autorisierendem Zugriff auf ein Bankkonto.

In einer bevorzugten Ausgestaltung ist der Datenspeicher ein gemeinsamer Datenspeicher, auf den zumindest noch ein anderes Gerät zugreifen kann, wobei jedes der Endgeräte eine Applikation aufweist, wobei diese Applikation zum Kommunizieren mit der Überwachungsinstanz zum entsprechenden Registrieren von elektronischen Münzteildatensätzen eingerichtet ist.

Vorgeschlagen wird hierbei also eine Lösung, die digitales Geld in Form von elektronischen Münzdatensätzen herausgibt, die an die Verwendung von konventionellen (analogen) Banknoten und/oder Münzen angelehnt ist. Das digitale Geld wird hierbei durch elektronische Münzdatensätze abgebildet. Wie bei (analogen) Banknoten werden auch diese elektronischen Münzdatensätze für alle Formen von Zahlungen, einschließlich Peer-to-Peer-Zahlungen und/oder POS-Zahlungen, verwendbar. Die Kenntnis aller Bestandteile (insbesondere monetärer Betrag und Verschleierungsbetrag) eines gültigen elektronischen Münzdatensatzes ist gleichbedeutend mit dem Besitz (Eigentum) des digitalen Geldes. Es ist daher ratsam, diese gültigen elektronischen Münzdatensätze vertraulich zu behandeln, also beispielsweise in einem Sicherheitselement/ Tresormodul eines Endgeräts aufzubewahren und dort zu verarbeiten. Um über die Authentizität eines elektronischen Münzdatensatzes zu entscheiden und Doppelausgaben zu verhindern, werden in der Überwachungsinstanz maskierte elektronische Münzdatensätze als einzigartige, korrespondierende öffentliche Darstellung des elektronischen Münzdatensatzes vorgehalten. Die Kenntnis oder der Besitz eines maskierten elektronischen Münzdatensatzes stellt nicht den Besitz von Geld dar. Vielmehr gleicht dies dem Überprüfen der Echtheit des analogen Zahlungsmittels. Die Überwachungsinstanz enthält auch Markierungen über durchgeführte und geplante Verarbeitungen des maskierten elektronischen Münzdatensatzes. Aus den Markierungen zu den Verarbeitungen wird ein Status des jeweiligen maskierten elektronischen Münzdatensatzes abgeleitet, der angibt, ob der entsprechende (unmaskierte) elektronische Münzdatensatz gültig, d.h. zahlungsbereit ist. Daher wird ein Empfänger eines elektronischen Münzdatensatzes zunächst einen maskierten elektronischen Münzdatensatz erzeugen und sich durch die Überwachungsinstanz die Gültigkeit der maskierten elektronischen Münzdatensatz authentifizieren lassen. Ein großer Vorteil dieser erfindungsgemäßen Lösung ist, dass das digitale Geld auf Endgeräte, Händler, Banken und andere Nutzer des Systems verteilt wird, aber kein digitales Geld oder weitere Metadaten bei der Überwachungsinstanz - also einer gemeinsamen Instanz - gespeichert wird.

Die vorgeschlagene Lösung kann in bestehende Zahlsysteme und Infrastrukturen eingebunden werden. Insbesondere können eine Kombination aus analogen Zahlungsvorgängen mit Geldscheinen und Münzen und digitale Zahlungsvorgänge gemäß der vorliegenden Lösung vorliegen. So kann ein Bezahlvorgang mit Banknoten und/ oder Münzen erfolgen, das Wechselgeld bzw. Rückgeld liegt aber als elektronischer Münzdatensatz vor. Zur Transaktion können beispielsweise ATMs mit entsprechender Konfiguration, insbesondere mit geeigneter Kommunikationsschnittstelle, und/ oder mobile Endgeräte vorgesehen sein. Weiterhin ist ein Umtausch von elektronischem Münzdatensatz in Banknoten bzw. Münzen denkbar.

Die vorliegend aufgeführten Schritte des Erstellens, Umschaltens, Aufteilens, Verbindens und Deaktivierens werden jeweils durch einen entsprechenden Erstell-, Umschalt-, Aufteil-, Verbinden- bzw. Deaktivier-Befehl ausgelöst.

Die Aufgabe wird zudem durch eine Überwachungseinheit gelöst, die eingerichtet ist zum Empfangen eines maskierten elektronischen Münzdatensatzes und zum Registrieren des maskierten elektronischen Münzdatensatzes.

Der maskierte elektronische Münzdatensatz ist in einem erstem Maskierungsmodus oder einem zweiten Maskierungsmodus oder einem dritten Maskierungsmodus maskiert. Bevorzugt ist der maskierte elektronische Münzdatensatz gemäß einem Maskierungsschritt aus dem vorhergehend beschriebenen Verfahren maskiert. Die Überwachungseinheit ist zudem eingerichtet zum Registrieren eines Modifizierens eines Münzdatensatzes gemäß dem vorhergehend beschriebenen Verfahren.

## KURZE ZUSAMMENFASSUNG DER FIGUREN

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.
Es zeigen:

Fig. 1 ein Ausführungsbeispiel eines Bezahlsystems gemäß der Erfindung;

Fig.2 ein Ausführungsbeispiel einer Überwachungsinstanz;

Fig.3 ein Ausführungsbeispiel eines Bezahlsystems gemäß der Erfindung zum Aufteilen und Umschalten von elektronischen Münzdatensätzen;

Fig.4 ein Ausführungsbeispiel eines Bezahlsystems gemäß der Erfindung zum Verbinden von elektronischen Münzdatensätzen;

Fig.5 ein Ausführungsbeispiel eines Verfahrensablaufdiagramms eines erfindungsgemäßen Verfahrens und entsprechenden Verarbeitungsschritte eines Münzdatensatzes;

Fig.6 ein Ausführungsbeispiel eines Verfahrensablaufdiagramms eines erfindungsgemäßen Verfahrens und entsprechenden Verarbeitungsschritte eines Münzdatensatzes;

Fig.7 ein weiteres Ausführungsbeispiel eines Verfahrensablaufdiagramms eines erfindungsgemäßen Verfahrens;

Fig. 8 ein Ausführungsbeispiel eines erfindungsgemäßen Geräts;

Fig. 9 ein weiteres Ausführungsbeispiel eines Verfahrensablaufdiagramms eines erfindungsgemäßen Verfahrens gemäß einem vierten Maskierungsmodus;

Fig. 10 eine schematische Darstellung des Verfahrens gemäß Fig. 9;

Fig. 11 ein weiteres Ausführungsbeispiel eines Verfahrensablaufdiagramms eines erfindungsgemäßen Verfahrens;

Fig. 12 ein weiteres Ausführungsbeispiel eines erfindungsgemäßen Verfahrens; und

Fig. 13 ein Verfahrensablaufdiagramm des in Fig. 12 dargestellten erfindungsgemäßen Verfahrens.

## FIGURENBESCHREIBUNG

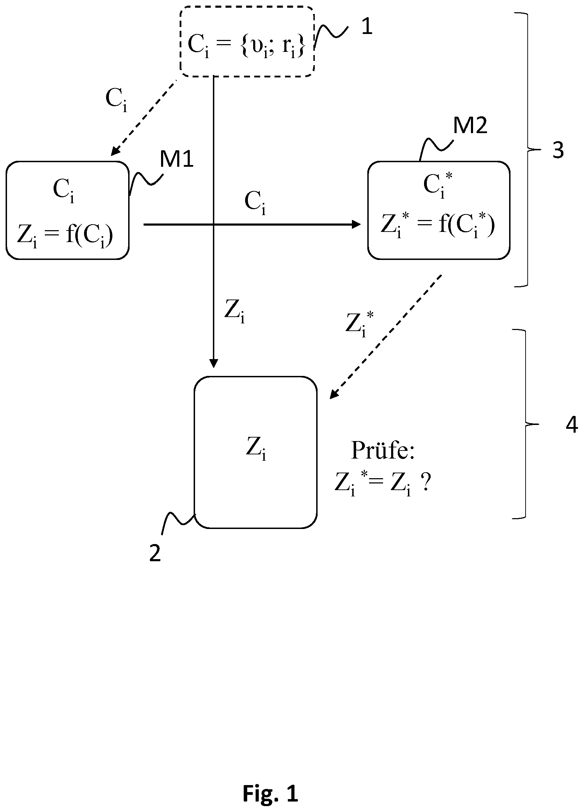

Fig. 1 zeigt ein Ausführungsbeispiel eines Bezahlsystems mit Endgeräten M1 und M2 gemäß der Erfindung. Die Endgeräte M1 und M2 können dabei auch Geräte sein.
Dabei wird in einer Herausgeberinstanz 1, beispielsweise einer Zentralbank, ein elektronischer Münzdatensatz Ci erzeugt. Zu dem elektronischen Münzdatensatz Ci wird ein maskierter elektronische Münzdatensatz $Z_i$ erzeugt und in einem "Verschleierten-elektronischen-Datensatz-Ledger" registriert. Als Ledger wird im Rahmen dieser Erfindung eine Liste, ein Verzeichnis, vorzugsweise eine Datenbankstruktur verstanden. Der elektronische Münzdatensatz Ci wird an ein erstes Endgerät M1 ausgegeben.
Beispielsweise wurde dazu als Verschleierungsbetrag $r_i$ eine echte Zufallszahl erzeugt. Diese Verschleierungsbetrag $r_i$ wird mit einem monetären Betrag $v_i$ verknüpft und bildet sodann einen erfindungsgemäßen i-ten elektronischen Münzdatensatz:

$$C_i = \{v_i;\ r_i\} \qquad (1)$$

Ein gültiger elektronischer Münzdatensatz kann zur Bezahlung eingesetzt werden. Der Besitzer der beiden Werte $v_i$ und $r_i$ ist daher im Besitz des digitalen Geldes. Das digitale Geld ist aber definiert durch ein Paar bestehend aus einem gültigen elektronischen Münzdatensatz und einem entsprechenden maskierten elektronischen Münzdatensatz $Z_i$. Der maskierte elektronische Münzdatensatz Zi wird durch Anwenden einer Einwegfunktion f (Ci) gemäß Gleichung (2) erhalten:

$$Z_i = f(C_i) \qquad (2)$$

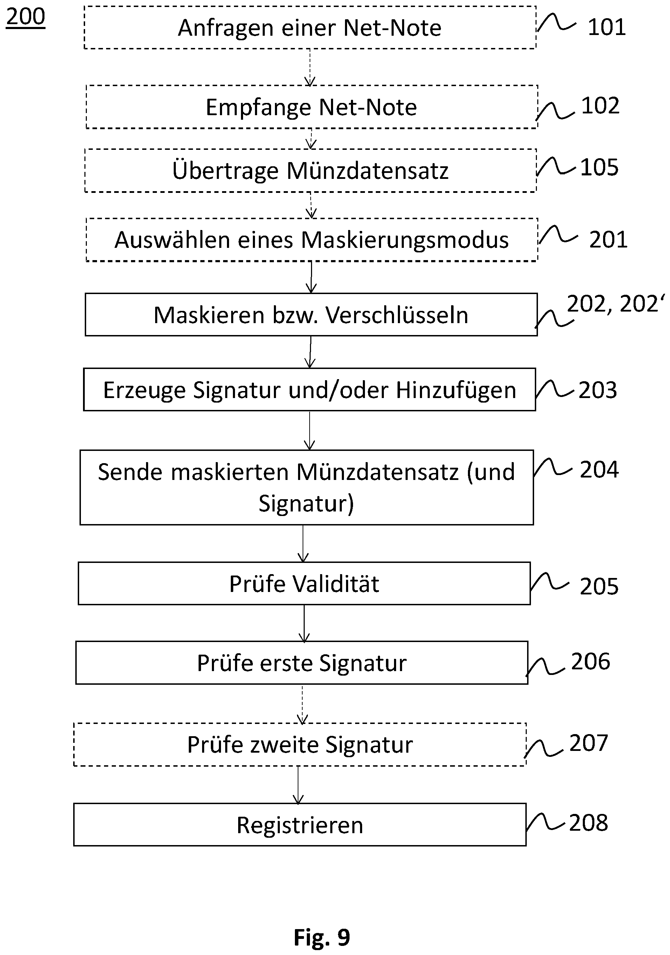

Die Einwegfunktion f(Ci) ist beispielsweise homomorph. Der maskierte elektronische Münzdatensatz ist beispielsweise ein vollständig elektronischer maskierter Münzdatensatz, ein quasimaskierter elektronischer Münzdatensatz oder ein teilbetragsmaskierter elektronischer Münzdatensatz, wie in Bezug auf Fig. 9 und folgende noch detailliert ausgeführt wird.

Diese Funktion f (Ci) ist insbesondere für einen vollständig maskierten elektronischen Münzdatensatz einen unvollständig maskierten elektronischen Münzdatensatz und einen teilweise maskierten elektronischen Münzdatensatz öffentlich, d.h. jeder Systemteilnehmer am Bezahlsystem kann diese Funktion aufrufen und verwenden. Diese Funktion f (Ci) ist gemäß Gleichung (3) oder Gleichung (3a) beispielsweise definiert:

$$Z_i = v_i \cdot H + r_i \cdot G \qquad (3)$$

$$Z_i = r_i \cdot G \qquad (3a)$$

wobei H und G Generatorpunkte einer Gruppe, in der das diskrete Logarithmusproblem schwer ist, mit den Generatoren G und H, für die der diskrete Logarithmus der jeweils anderen Basis unbekannt ist. Beispielsweise ist G (Gleichung (3), (3a)) als auch H (Gleichung (3)) jeweils ein Generatorpunkt einer elliptischen Kurvenverschlüsselung, ECC, - also private Schlüssel der ECC, sind. Im Fall von Gleichung (3) müssen diese Generatorpunkte G und H in der Art gewählt werden, dass der Zusammenhang von G und H nicht öffentlich bekannt ist, sodass bei:

$$G = n \cdot H \qquad (4)$$

die Verknüpfung n praktisch nicht auffindbar sein darf, um zu verhindern, dass der monetäre Betrag $v_i$ manipuliert wird und trotzdem ein gültiges Zi berechnet werden könnte. Die Gleichung (3) ist ein "Pederson-Commitment für ECC", das sicherstellt, dass der monetäre Betrag $v_i$ einer Überwachungsinstanz 2 zugestanden, also "commited", werden kann, ohne diesen der Überwachungsinstanz 2 zu offenbaren. Der öffentlichen und entfernten Überwachungsinstanz 2 wird daher nur der maskierte Münzdatensatz Zi zugesendet (offenbart).

Auch wenn im vorliegenden Beispiel eine Verschlüsselung basierend auf elliptischen Kurven beschrieben ist bzw. wird, so wäre auch ein anderes kryptographische Verfahren denkbar, welches auf einem diskreten logarithmischen Verfahren beruht und auf Gleichung (3a) basiert.

Bei Anwendung der Gleichung (3a) wird eine Einwegfunktion nur auf einen Teil des Münzdatensatzes C, hier der Verschleierungsbetrag r (für einen quasimaskierten Münzdatensatz) oder einen ersten monetären Betragsteil des monetären Betrags (für einen teilbetragsmaskierten Münzdatensatz), angewendet.

Der maskierte Verschleierungsbetrag kann auch als R bezeichnet werden.

Die Gleichung (3) ermöglicht durch die Entropie des Verschleierungsbetrags $r_i$, dass auch bei kleinem Wertebereich für monetäre Beträge $v_i$ ein kryptografisch starkes Zi erhalten wird. Somit ist ein einfacher Brute-Force-Angriff durch bloßes Schätzen von monetären Beträgen $v_i$ praktisch nicht möglich.

Die Gleichungen (3) und (3a) verwenden Einwegfunktionen, das heißt, dass die Berechnung von Zi aus Ci einfach ist, da ein effizienter Algorithmus existiert, wohingegen die Berechnung von Ci ausgehend von Zi sehr schwer ist, da kein in polynomialer Zeit lösbarer Algorithmus existiert.

Zudem ist die Gleichung (3) homomorph für Addition und Subtraktion, das heißt es gilt:

$$Z_i + Z_j = (v_i \cdot H + r_i \cdot G) + (v_j \cdot H + r_j \cdot G) = (v_i + v_j) \cdot H + (r_i + r_j) \cdot G \qquad (5)$$

Somit können Additions-Operationen und Subtraktions-Operationen sowohl in der Direkttransaktionsschicht 3 also auch parallel in der Überwachungsschicht 4 ausgeführt werden, ohne dass die Überwachungsschicht 4 Kenntnis von den elektronischen Münzdatensätzen Ci hat. Die homomorphe Eigenschaft der Gleichung (3) ermöglicht eine Überwachung von gültigen und ungültigen elektronischen Münzdatensätzen Ci auf alleiniger Basis der maskierten Münzdatensätze Zi zu führen und sicherzustellen, dass kein neuer monetärer Betrag $v_j$ geschaffen wurde.

Durch diese homomorphe Eigenschaft kann der Münzdatensatz Ci gemäß Gleichung (1) aufgeteilt werden in:

$$C_i = C_j + C_k = \{v_j;\ r_j\} + \{v_k;\ r_k\} \tag{6}$$

wobei gilt:

$$v_i = v_j + v_k \tag{7}$$

$$r_i = r_j + r_k \tag{8}$$

Für die entsprechenden maskierten Münzdatensätze gilt:

$$Z_i = Z_j + Z_k \tag{9}$$

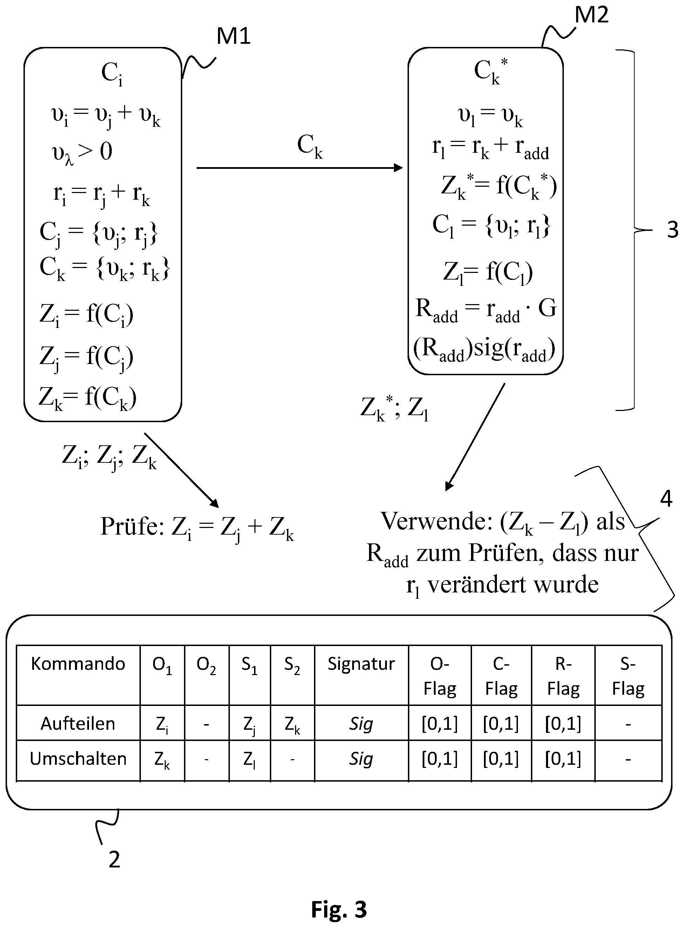

Mit Gleichung (9) kann beispielsweise auf einfache Weise eine "Aufteilen"-Verarbeitung bzw. ein "Aufteilen"-Verarbeitungsschritt eines Münzdatensatzes gemäß Fig. 3 geprüft werden, ohne dass die Überwachungsinstanz 2 Kenntnis von $C_i$, $C_j$, $C_k$ hat. Insbesondere wird die Bedingung der Gleichung (9) geprüft, um aufgeteilte Münzdatensätze $C_j$ und $C_k$ für gültig zu erklären und den Münzdatensatz $C_i$ für ungültig zu erklären. Ein derartiges Aufteilen eines elektronischen Münzdatensatzes Ci ist in Fig. 3 gezeigt.

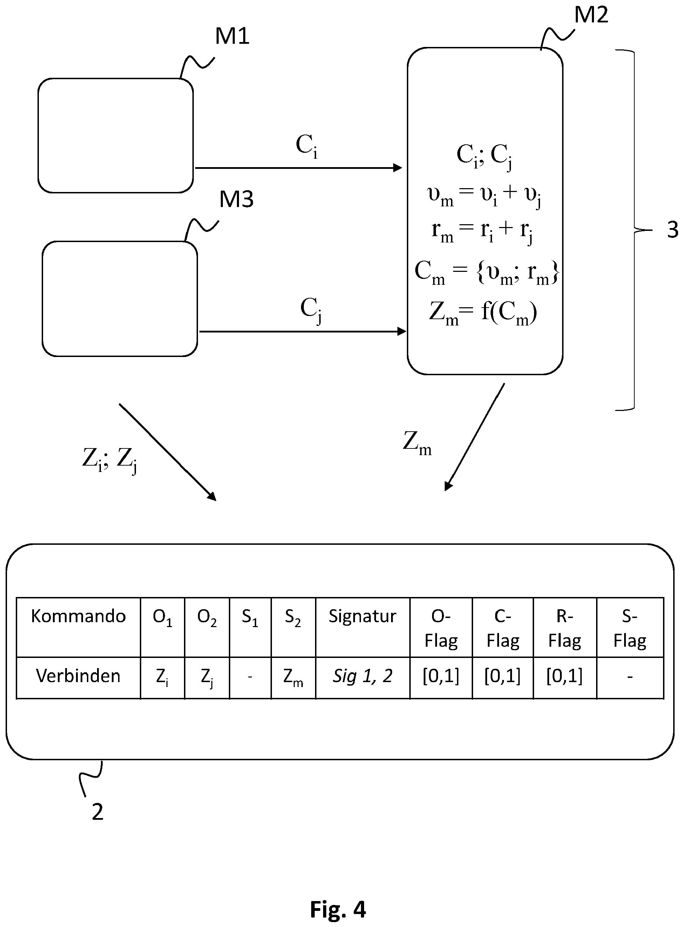

Auf die gleiche Weise können elektronische Münzdatensätze auch zusammengefügt (verbunden) werden, siehe dazu Fig. 4 und die Erläuterungen dazu.

Zusätzlich gilt es zu prüfen, ob (nicht erlaubte) negative monetäre Beträge registriert werden. Ein Besitzer eines elektronischen Münzdatensatzes Ci muss dabei der Überwachungsinstanz 2 nachweisen können, dass alle monetären Beträge $v_i$ in einer Verarbeitungs-Operation innerhalb eines Wertebereichs von [0, ..., $2^n$-1] liegen, ohne der Überwachungsinstanz 2 dabei die monetären Beträge $v_i$ mitzuteilen. Diese Bereichsnachweise werden auch "Range-Proofs" genannt. Als Bereichsnachweise werden bevorzugt Ringsignaturen (engl. ring signature) verwendet. Für das vorliegende Ausführungsbeispiel werden sowohl der monetäre Betrag $v$ als auch der Verschleierungsbetrag r eines elektronischen Münzdatensatzes C in Bitdarstellung aufgelöst. Es gilt:

$$v_i = \sum a_j \cdot 2^j \text{ für } 0 \leq j < n \text{ und } a_j \text{ „element" } \{0;\ 1\} \tag{9a}$$

sowie

$$r_i = \sum b_j \cdot 2^j \text{ für } 0 \leq j < n \text{ und } b_j \text{ „element" } \{0;\ 1\} \tag{9b}$$

Für jedes Bit wird vorzugsweise eine Ringsignatur mit

$$C_{ij} = a_j \cdot H + b_j \cdot G \tag{9c}$$

und

$$C_{ij} - a_j \cdot H \tag{9d}$$

durchgeführt, wobei in einer Ausgestaltung vorgesehen sein kann, nur für bestimmte Bits eine Ringsignatur durchzuführen.

In Fig. 1 wird ein elektronischer Münzdatensatz Ci von der Herausgeberinstanz 1 erzeugt und mittels der Gleichung (3) oder der Gleichung (3a) ein maskierter elektronischer Münzdatensatz Zi von der Herausgeberinstanz 1 errechnet und dieser in der Überwachungsinstanz 2 registriert.

Im Anschluss überträgt das erste Endgerät M1, das den elektronischen Münzdatensatz Ci an ein zweites Endgerät M2 übertragen kann oder einen der Verarbeitungs-Schritte (Umschalten, Verbinden, Aufteilen) ausführen kann. Die Übertragung erfolgt beispielsweise drahtlos über WLAN, NFC oder Bluetooth. Die Übertragung kann durch kryptografische Verschlüsselungsverfahren zusätzlich abgesichert sein, indem beispielsweise ein Sitzungsschlüssel ausgehandelt wird oder eine PKI-Infrastruktur angewendet wird.

Im zweiten Endgerät M2 wird der übertragene elektronische Münzdatensatz Ci als Ci* erhalten. Mit dem Erhalt des elektronischen Münzdatensatzes Ci* ist das zweite Endgerät M2 im Besitz des digitalen Geldes, den der elektronische Münzdatensatz Ci* repräsentiert. Wenn sich beide Endgeräte gegenseitig vertrauen, sind keine weiteren Schritte notwendig, um das Verfahren zu beenden. Allerdings ist dem Endgerät M2 nicht bekannt, ob der elektronische Münzdatensatz Ci* tatsächlich gültig ist. Zudem könnte das Endgerät M1 den elektronischen Münzdatensatz Ci auch noch einem dritten Endgerät (nicht dargestellt) übertragen. Um dies zu verhindern sind weitere bevorzugte Schritte im Verfahren vorgesehen.

Zum Prüfen der Validität des erhaltenen elektronischen Münzdatensatzes Ci* wird im zweiten Endgerät M2 mit der - öffentlichen - Einwegfunktion aus Gleichung (3) oder Gleichung (3a) der maskierte übertragene elektronische Münzdatensatz $Z_i^*$ errechnet. Der maskierte übertragene elektronische Münzdatensatz $Z_i^*$ wird dann an die Überwachungsinstanz 2 übertragen und dort gesucht. Bei Übereinstimmung mit einem registrierten und gültigen maskierten elektronischen Münzdatensatz wird dem zweiten Endgerät M2 die Validität des erhaltenen Münzdatensatzes $C_i^*$ angezeigt und es gilt, dass der erhaltene elektronische Münzdatensatz Ci* gleich dem registrierten elektronischen Münzdatensatz Ci ist. Mit der Prüfung auf Validität kann in einer Ausgestaltung festgestellt werden, dass der erhaltene elektronische Münzdatensatz Ci* noch gültig ist, d.h., dass er nicht bereits durch einen anderen Verarbeitungsschritt oder bei einer anderen Transaktion bereits verwendet wurde und/ oder einer weiteren Veränderung unterworfen war.

Bevorzugt findet danach ein Umschalten des erhaltenen elektronischen Münzdatensatzes statt.

Es gilt für das erfindungsgemäße Verfahren, dass die alleinige Kenntnis eines (vollständig, unvollständig, quasi- oder teil-) maskierten elektronischen Münzdatensatzes nicht dazu berechtigt, das digitale Geld auszugeben. Die alleinige Kenntnis des elektronischen Münzdatensatzes Ci berechtigt aber zum Bezahlen, d.h. eine Transaktion erfolgreich durchzuführen, insbesondere wenn der Münzdatensatz Ci gültig ist. Es herrscht eine eineindeutige Beziehung zwischen den elektronischen Münzdatensätzen Ci und den entsprechenden maskierten elektronischen Münzdatensätzen. Die maskierten elektronischen Münzdatensätze werden in der Überwachungsinstanz 2, beispielsweise einer öffentlichen dezentralen Datenbank, registriert. Durch dieses Registrieren wird zunächst die Gültigkeit des elektronischen Münzdatensatzes Ci prüfbar, beispielsweise ob neue monetäre Beträge (illegaler Weise) erschaffen wurden.

Ein Hauptunterscheidungsmerkmal gegenüber konventionellen Lösungen ist, dass die maskierten elektronischen Münzdatensätze in einer Überwachungsschicht 4 gespeichert werden und alle Verarbeitungen an dem elektronischen Münzdatensatz dort registriert werden, wohingegen die tatsächliche Übertragung des digitalen Geldes in einer (geheimen, d.h. einer der Öffentlichkeit nicht bekannten) Direkttransaktionsschicht 3 erfolgt.

Um ein mehrfaches Ausgeben zu verhindern oder um ein flexibleres Übertragen zu gewährleisten, können die elektronischen Münzdatensätze nunmehr im erfindungsgemäßen Verfahren verarbeitet werden. In der nachfolgenden Tabelle 1 sind die einzelnen Operationen aufgelistet, wobei mit dem angegebenen Befehl auch ein entsprechender Verarbeitungsschritt ausgeführt wird:

*Tabelle 1 - Anzahl von Operationen, die pro Verarbeitung eines Münzdatensatzes im Endgerät bzw. Herausgeberinstanz durchführbar sind;*

| Befehl bzw. Schritt | Signatur erstellen | Zufallszahl erstellen | Maskierung erstellen | Bereichsnachweis erstellen |
|---|---|---|---|---|
| Erzeugen | 1 | 1 | 1 | 0 oder 1 |
| Deaktivieren | 1 | 0 | 1 | 0 oder 1 |
| Aufteilen | 0 | 1 | 3 | 0 oder 1 |
| Verbinden | 0 | 0 | 3 | 1 |
| Umschalten | 0 | 1 | 2 | 1 |

Weitere Operationen, die in Tabelle 1 nicht aufgeführt sind, können benötigt werden. Anstelle der angeführten Implementierung sind auch andere Umsetzungen denkbar, die andere Operationen implizieren. Die Tabelle 1 zeigt, dass für jeden Münzdatensatz, jede der Verarbeitungen "Erstellen", "Deaktivieren", "Aufteilen", "Verbinden" und "Umschalten" verschiedene Operationen "Signatur erstellen"; "Zufallszahl erstellen"; "Maskierung erstellen"; "Bereichsprüfung" vorgesehen sein können, wobei jede der Verarbeitungs-Operation in der Überwachungsinstanz 2 registriert und dort in unveränderlicher Form an eine Liste vorheriger Verarbeitungs-Operationen für maskierte elektronische Münzdatensätze angehängt wird. Die Operationen der Verarbeitungen "Erstellen" und "Deaktivieren" eines elektronischen Münzdatensatzes werden nur an sicheren Orten und/ oder nur von ausgewählten Instanzen, beispielsweise der Herausgeberinstanz 1, ausgeführt, während die Operationen aller übrigen Verarbeitungen auf den Endgeräten M1 bis M3 ausgeführt werden können.

Die Anzahl der Operationen für die einzelnen Verarbeitungen ist in der Tabelle 1 mit "0", "1" oder "2" gekennzeichnet. Die Anzahl "0" zeigt dabei an, dass das Endgerät bzw. die Herausgeberinstanz 1 diese Operation für diese Verarbeitung des elektronischen Münzdatensatzes nicht durchführen muss. Die Anzahl "1" zeigt dabei an, dass das Endgerät bzw. die Herausgeberinstanz 1 diese Operation für diese Verarbeitung des elektronischen Münzdatensatzes einmal durchführen können muss. Die Anzahl "2" zeigt dabei an, dass das Endgerät bzw. die Herausgeberinstanz 1 diese Operation zweimal für diese Verarbeitung des elektronischen Münzdatensatzes durchführen können muss.

Grundsätzlich kann in einer Ausgestaltung auch vorgesehen sein, dass eine Bereichsprüfung durch die Herausgeberinstanz 1 auch beim Erzeugen und/ oder Löschen durchgeführt wird.

In der nachfolgenden Tabelle 2 sind für die einzelnen Verarbeitungen die für die Überwachungsinstanz 2 benötigten Operationen aufgelistet:

*Tabelle 2 - Anzahl von Operationen, die pro Verarbeitung eines Münzdatensatzes in der Überwachungsinstanz durchführbar sind;*

| Befehl bzw. Schritt | Signatur vom Herausgeber prüfen | Gültigkeit des maskierten elektronischen Münzdatensatzes prüfen | Bereichsnachweis nachvollziehen | homomorphe Eigenschaften der maskierten elektronischen Münzdatensätze nachvollziehen, d.h. Addieren oder Substrahieren |
|---|---|---|---|---|
| Erzeugen | 1 | 0 | 0 oder 1 | 0 |
| Deaktivieren | 1 | 1 | 0 oder 1 | 0 |
| Aufteilen | 0 | 1 | 2 oder mehr | 1 |
| Verbinden | 0 | 2 oder mehr | 1 | 1 |
| Umschalten | 0 | 1 | 1 | 0 |

Weitere Operationen, die in Tabelle 2 nicht aufgeführt sind, können benötigt werden. Anstelle der angeführten Implementierung sind andere Umsetzungen denkbar, die andere Operationen implizieren. Alle Operationen der Tabelle 2 können in der Überwachungsinstanz 2 durchgeführt werden, die als vertrauenswürdige Instanz, beispielsweise als dezentraler Server, insbesondere Distributed-Trusted-Server, für eine ausreichende Integrität der elektronischen Münzdatensätze sorgt.

Die Tabelle 3 zeigt die für die Systemteilnehmer im Bezahlsystem der Fig. 1 bevorzugt zu installierenden Komponenten:

*Tabelle 3 - Bevorzugte Einheiten in den Systemkomponenten*

| Befehl bzw. Schritt | Herausgeberinstanz | Endgerät | Überwachungsinstanz |
|---|---|---|---|
| Zufallszahlgenerator (hohe Sicherheit) | Ja | - | - |
| Zufallsgenerator (deterministisch) | - | Ja | - |
| PKI zum Signieren | Ja | - | - |
| PKI zur Signaturprüfung | - | (Ja) | Ja |
| Lesezugriff auf Datenbank | Ja | Ja | Ja |
| Schreibzugriff auf Datenbank | Ja | Ja | Ja |
| Deaktivieren des elektronischen Münzdatensatzes | Ja | Ja | - |
| Transportverschlüsselung | Ja | Ja | - |

(fortgesetzt)

| Befehl bzw. Schritt | Herausgeberinstanz | Endgerät | Überwachungsinstanz |
|---|---|---|---|
| Sicherer Speicher | (Ja) | Ja | -/Ja |
| Maskierungs-Einheit | Ja | Ja | - |
| Bereichsnachweis | - | Ja | - |
| Bereichsnachweis prüfen | - | - | Ja |
| Datenbank Software | - | - | Ja |

Tabelle 3 zeigt eine Übersicht über die bevorzugt zu verwendenden Komponenten in jedem Systemteilnehmer, also der Herausgeberinstanz 1, einem Endgerät M1 und der Überwachungsinstanz 2. Das Endgerät M1 kann als ein Wallet für elektronische Münzdatensätze Ci, d.h. als elektronische Geldbörse, also ein Datenspeicher des Endgeräts M1, in dem eine Vielzahl von Münzdatensätzen Ci hinterlegt sein können, ausgebildet sein und beispielsweise in Form einer Applikation auf einem Smartphone oder IT-System eines Händlers, einer Geschäftsbank oder eines anderen Marktteilnehmers implementiert sein und einen elektronischen Münzdatensatz senden oder empfangen. Somit sind die Komponenten in dem Endgerät, so wie sie in Tabelle 3 gezeigt sind, als Software implementiert. Es wird davon ausgegangen, dass die Überwachungsinstanz 2 eine Datenbank ist, die von einer Reihe vertrauenswürdiger Marktteilnehmer betrieben wird. In einer Ausgestaltung ist die Überwachungsinstanz 2 eine DLT.

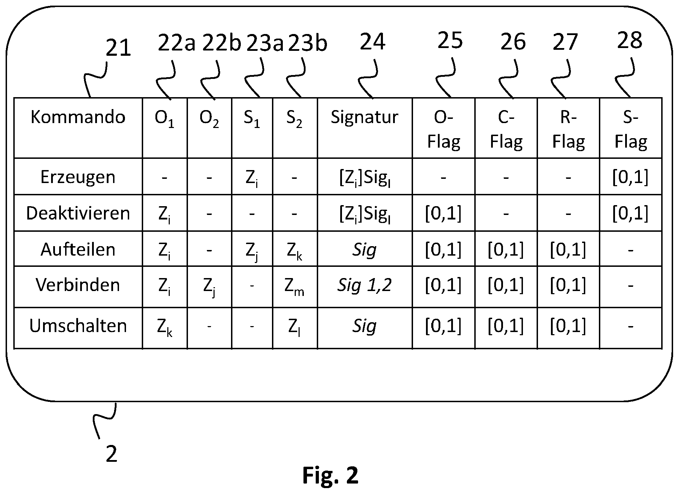

Fig. 2 zeigt ein Ausführungsbeispiel einer Überwachungsinstanz 2 der Fig. 1. In der Fig. 2 ist eine beispielhafte Datenbank in Form einer Tabelle dargestellt, in der die maskierten elektronischen Münzdatensätze (hier der Einfachheit halber die vollständig maskierten elektronischen Münzdatensätze $Z_i$) und ggf. ihre Verarbeitungen registriert sind. Die Überwachungsinstanz 2 ist bevorzugt lokal entfernt von den Endgeräten M1 bis M3 angeordnet und ist beispielsweise in einer Server-Architektur untergebracht.

Jede Verarbeitungs-Operation für eine Verarbeitung (Erstellen, Deaktivieren, Aufteilen, Verbinden und Umschalten) wird dabei in der Überwachungsinstanz 2 registriert und dort in unveränderlicher Form an eine Liste vorheriger Verarbeitung-Operationen für maskierte elektronische Münzdatensätze angehängt. Die einzelnen Operationen bzw. deren Prüfergebnis, also quasi die Zwischenergebnisse einer Verarbeitung, werden in der Überwachungsinstanz 2 festgehalten.

Die Verarbeitungen "Erstellen" und "Deaktivieren", die die Existenz des monetären Betrags $\upsilon_i$, an sich betreffen, also die Schaffung und die Vernichtung von Geld bedeuten, bedürfen einer zusätzlichen Genehmigung durch die Herausgeberinstanz 1, um in der Überwachungsinstanz 2 registriert (also protokolliert) zu werden. Die übrigen Verarbeitungsoperationen (Aufteilen, Verbinden, Umschalten) bedürfen keiner Autorisierung durch die Herausgeberinstanz 1 oder durch den Befehlsinitiator (= Zahler, bspw. das erste Endgerät M1).

Eine Registrierung der jeweiligen Verarbeitung in der Überwachungsinstanz 2 wird beispielsweise durch entsprechende Listeneinträge in der Datenbank gemäß Fig. 2 realisiert. Jeder Listeneintrag hat dabei weitere Markierungen 25 bis 28, die die Zwischenergebnisse der jeweiligen Verarbeitung dokumentiert, die von der Überwachungsinstanz 2 durchgeführt werden müssen. Bevorzugt werden die Markierungen 25 bis 28 als Hilfestellung benutzt und nach Abschluss der Befehle von der Überwachungsinstanz verworfen. Was bleibt sind Markierungen 29 bis 32 über die Gültigkeit der (maskierten) elektronischen Münzdatensätze aus den Spalten 22a, 22b, 23a und/oder 23b. Diese Markierungen sind bei eingehen eines Verarbeitung-Befehls beispielsweise im Zustand "-" und werden nach erfolgreichem Absolvieren aller Prüfungen auf den Zustand "1" gesetzt und bei mindestens einer gescheiterten Prüfung auf den Zustand "0" gesetzt. Eine mögliche Struktur für einen Listeneintrag eines Münzdatensatzes umfasst beispielsweise zwei Spalten 22a, 22b für einen Vorgänger-Münzdatensatz (O1, O2), zwei Spalten 23a, 23b für einen Nachfolger-Münzdatensatz (S1, S2), eine Signatur-Spalte 24 für Herausgeberinstanz(en) 1, und vier Markierungsspalten 25 bis 28. Jeder der Einträge in den Spalten 25 bis 28 weist drei alternative Zustände "-", "1" oder "0" auf. Die Spalte 25 (O-Flag) zeigt an, ob eine Gültigkeitsprüfung bezüglich eines elektronischen Münzdatensatzes in Spalte 22a/b erfolgreich war, wobei Zustand "1" bedeutet, dass eine Validitäts-Prüfung ergab, dass der elektronische Münzdatensatz der Spalte 22a/b gültig ist und der Zustand "0" anzeigt, dass eine Validitäts-Prüfung ergab, dass der elektronische Münzdatensatz der Spalte 22a/b ungültig und der Zustand "-" anzeigt, dass eine Validitäts-Prüfung noch nicht abgeschlossen ist. Die Spalte 26 (C-Flag) zeigt an, ob die Berechnung des maskierten elektronischen Münzdatensatzes erfolgreich war, wobei Zustand "1" bedeutet, dass eine Berechnung erfolgreich war und der Zustand "0" gibt an, dass Berechnung nicht erfolgreich war und der Zustand "-" anzeigt, dass eine Validitäts-Prüfung noch nicht abgeschlossen ist.

Die in Spalte 26 durchzuführende Berechnung für vollständig maskierte Münzdatensätze basierend auf Gleichung (3) lautet beispielsweise:

$$(Z_{O1} + Z_{O2}) - (Z_{S1} + Z_{S2}) == 0 \qquad (10)$$

Die Spalte 27 (R-Flag) zeigt an, ob eine Prüfung der Bereichsnachweise oder des Bereichsnachweises erfolgreich war, wobei Zustand "1" bedeutet, dass eine Validitäts-Prüfung ergab, dass die Bereichsnachweise oder der Bereichsnachweis nachzuvollziehen sind oder ist und der Zustand "0" anzeigt, dass eine Validitäts-Prüfung ergab, dass die Bereichsnachweise oder der Bereichsnachweis nicht nachvollzogen werden konnten oder konnte und der Zustand "-" anzeigt, dass eine Validitäts-Prüfung noch nicht abgeschlossen ist, erfolgreich war.

Die Spalte 28 (S-Flag) zeigt an, ob eine Signatur des elektronischen Münzdatensatzes mit der Signatur der Spalte 24 übereinstimmt, wobei Zustand "1" bedeutet, dass eine Validitäts-Prüfung ergab, dass die Signatur als die der Herausgeberinstanz identifiziert werden konnte und der Zustand "0" anzeigt, dass eine Validitäts-Prüfung ergab, dass die Signatur nicht als die der Herausgeberinstanz identifiziert werden konnte und der Zustand "-" anzeigt, dass eine Validitäts-Prüfung noch nicht abgeschlossen ist.

Eine Änderung des Status eines der Markierungen (auch als "Flag" bezeichnet) bedarf der Genehmigung durch die Überwachungsinstanz 2 und muss sodann unveränderlich in der Überwachungsinstanz 2 gespeichert werden. Eine Verarbeitung ist endgültig, wenn und nur wenn die erforderlichen Markierungen 25 bis 28 durch die Überwachungsinstanz 2 validiert wurden, d.h. nach der entsprechenden Prüfung vom Zustand "0" in den Zustand "1" oder den Zustand "1" gewechselt wurden.

Um festzustellen, ob ein maskierter elektronischer Münzdatensatz gültig ist, sucht die Überwachungsinstanz 2 nach der letzten Änderung, die den maskierten elektronischen Münzdatensatz betrifft. Es gilt, dass der maskierte elektronische Münzdatensatz gültig ist, wenn und nur wenn der maskierte elektronische Münzdatensatz für seine letzte Verarbeitung in einer der Nachfolger-Spalten 23a, 23b aufgeführt ist und diese letzte Verarbeitung die entsprechende endgültige Markierung 25 bis 28 aufweist. Es gilt auch, dass der maskierte elektronische Münzdatensatz gültig ist, wenn und nur wenn der maskierte elektronische Münzdatensatz für seine letzte Verarbeitung in einer der Vorgänger-Spalten 22a, 22b aufgeführt ist und diese letzte Verarbeitung fehlgeschlagen ist, also zumindest einer der entsprechend geforderten Zustände der Markierungen 25 bis 28 auf "0" gesetzt ist.

Es gilt zudem, dass der maskierte elektronische Münzdatensatz für alle übrigen Fälle nicht gültig ist, beispielsweise, wenn der maskierte elektronische Münzdatensatz nicht in der Überwachungsinstanz 2 gefunden wird oder wenn die letzte Verarbeitung des maskierten elektronischen Münzdatensatzes in einer der Nachfolger-Spalten 23a, 23b aufgeführt ist, diese letzte Verarbeitung aber nie endgültig wurde oder wenn die letzte Verarbeitung des maskierten elektronischen Münzdatensatzes in einer der Vorgänger-Spalten 22a, 22b ist und diese letzte Verarbeitung endgültig ist.

Die Prüfungen durch die Überwachungsinstanz 2, um zu prüfen, ob eine Verarbeitung endgültig ist, werden durch die Spalten 25 bis 28 abgebildet: Der Zustand in der Spalte 25 zeigt an, ob der/die maskierten elektronischen Münzdatensätze gemäß Vorgänger-Spalten 22a, 22b gültig sind. Der Zustand in der Spalte 26 gibt an, ob die Berechnung des maskierten elektronischen Münzdatensatzes gemäß Gleichung (10) stimmt. Der Zustand in der Spalte 27 gibt an, ob die Bereichsnachweise für die maskierten elektronischen Münzdatensätze erfolgreich geprüft werden konnten. Der Zustand in Spalte 28 zeigt an, ob die Signatur in der Spalte 24 des maskierten elektronischen Münzdatensatzes eine gültige Signatur der Herausgeberinstanz 1 ist.

Der Zustand "0" in einer Spalte 25 bis 28 zeigt dabei an, dass die Prüfung nicht erfolgreich war. Der Zustand "1" in einer Spalte 25 bis 28 zeigt dabei an, dass die Prüfung erfolgreich war. Der Zustand "-" in einer Spalte 25 bis 28 zeigt dabei an, dass keine Prüfung erfolgt ist. Die Zustände können auch einen anderen Wert aufweisen, solange eindeutig zwischen Erfolg/Misserfolg einer Prüfung unterschieden werden kann und ersichtlich ist, ob eine bestimmte Prüfung durchgeführt wurde.

Beispielhaft sind fünf verschiedene Verarbeitungen definiert, die hier im Einzelnen erläutert werden. Dabei wird auf den entsprechenden Listeneintrag in Fig. 2 verwiesen.

Eine Verarbeitung ist beispielsweise "Erzeugen" eines elektronischen Münzdatensatzes Ci. Das Erzeugen in der Direkttransaktionsschicht 3 durch die Herausgeberinstanz 1 beinhaltet das Wählen eines monetären Betrags $v_i$ und das Erstellen eines Verschleierungsbetrags $r_i$, wie mit Gleichung (1) bereits beschrieben wurde. Wie in Fig. 2 gezeigt, bedarf es bei der Verarbeitung "Erzeugen" keiner Eintragungen/Markierungen in den Spalten 22a, 22b, 23b und 25 bis 27. In der Nachfolger-Spalte 23a wird der maskierte elektronische Münzdatensatz $Z_i$ registriert. Diese Registrierung erfolgt bevorzugt vor dem Übertragen an ein Endgerät M1 bis M3, insbesondere oder bereits beim Generieren durch die Herausgeberinstanz 1, wobei in beiden Fällen dazu die Gleichung (3) oder die Gleichung (3a) ausgeführt werden muss. Der maskierte elektronische Münzdatensatz $Z_i$ ist beim Erstellen von der Herausgeberinstanz 1 signiert, diese Signatur ist in der Spalte 24 eingetragen, um sicherzustellen, dass der elektronische Münzdatensatz Ci tatsächlich von einer Herausgeberinstanz 1 erstellt wurde, wobei auch andere Verfahren dafür in Frage kommen. Stimmt die Signatur eines erhaltenen Zi mit der Signatur in Spalte 24 überein, so wird die Markierung in Spalte 28 gesetzt (von "0" auf "1"). Die Markierungen gemäß Spalte 25 bis 27 benötigen keine Statusänderung und können ignoriert werden. Der Bereichsnachweis wird nicht benötigt, da die Überwachungsinstanz 2 darauf vertraut, dass die Herausgeberinstanz 1 keine negativen monetären Beträge ausgibt. In einer alternativen Ausführung kann er aber von der Herausgeberinstanz 1 im Erstellen-Befehl mitgesendet werden und von der Überwachungsinstanz 2 geprüft werden.

Eine Verarbeitung ist beispielsweise "Deaktivieren". Das Deaktivieren, also das Geldvernichten (DESTROY), bewirkt, dass der maskierte elektronische Münzdatensatz Zi nach erfolgreichem Ausführen des Deaktivieren-Befehls durch die Herausgeberinstanz 1 ungültig wird. Man kann also den zu deaktivierenden (maskierten) elektronischen Münzdatensatz in der Überwachungsschicht 4 also nicht mehr weiterverarbeiten. Um Verwirrung zu vermeiden, sollten die entsprechenden (unmaskierten) elektronischen Münzdatensätze Ci auch in der Direkttransaktionsschicht 3 deaktiviert werden. Beim "Deaktivieren" wird die Vorgängerspalte 22a mit dem elektronischen Münzdatensatz Zi beschrieben, aber keine Nachfolgerspalte 23a, 23b besetzt. Der maskierte elektronische Münzdatensatz Zi ist beim Deaktivieren daraufhin zu prüfen, ob die Signatur mit der Signatur gemäß Spalte 24 übereinstimmt, um sicherzustellen, dass der elektronische Münzdatensatz Ci tatsächlich von einer Herausgeberinstanz 1 erstellt wurde, wobei wieder andere Mittel für diese Prüfung verwendet werden können. Kann das signierte Zi, das im Deaktivieren-Befehl mitgesendet wird, als von der Herausgeberinstanz 1 signiert bestätigt werden oder als gültig signiert bestätigt werden, wird die Markierung 28 gesetzt (von "0" auf "1"). Die Markierungen gemäß Spalte 26 bis 27 benötigen keine Statusänderung und können ignoriert werden. Die Markierungen gemäß Spalte 25 und 28 werden nach entsprechender Prüfung gesetzt.

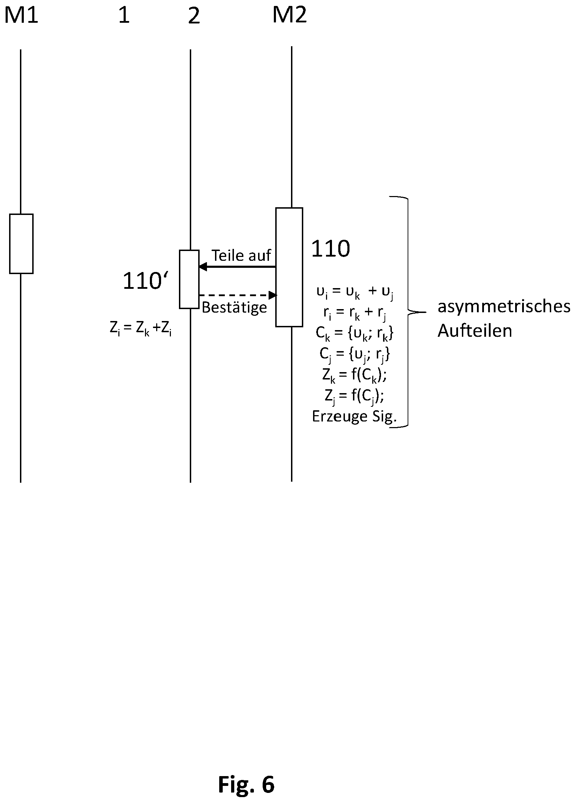

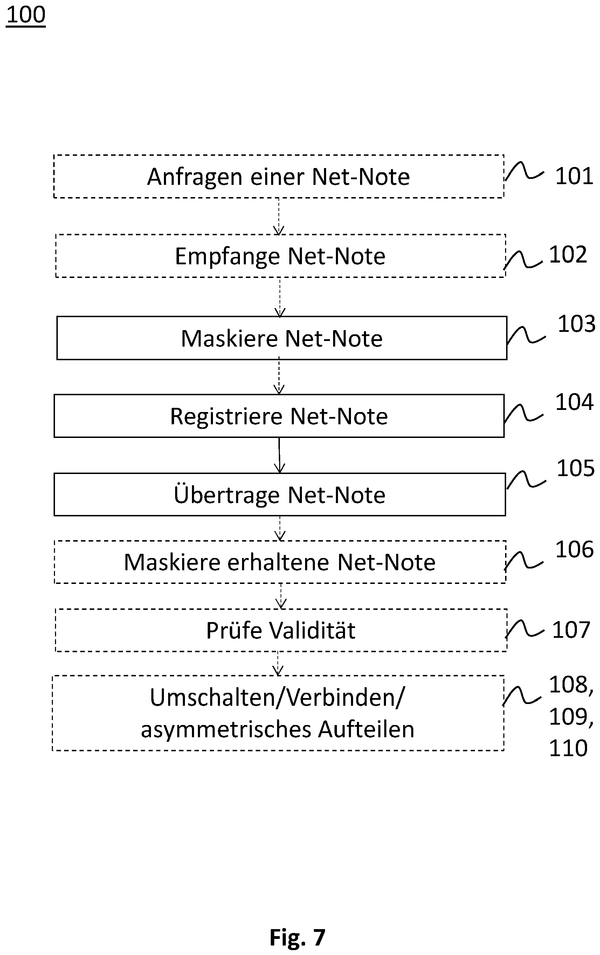

Eine Verarbeitung ist beispielsweise das "Aufteilen". Das Aufteilen, also das Teilen eines elektronischen Münzdatensatzes Zi in eine Anzahl n, beispielsweise 2, von elektronischen Münzteildatensätzen $Z_j$ und $Z_k$ erfolgt zunächst in der Direkttransaktionsschicht 3, so wie es in Fig. 3, 5 bis 7 und auch Fig. 9 bis 11 noch gezeigt wird, wobei die monetären Beträge $\upsilon_j$ und des Verschleierungsbetrags $r_j$ generiert werden. $v_k$ und $r_k$ ergeben sich durch Gleichungen (7) und (8). In der Überwachungsinstanz 2 werden die Markierungen 25 bis 27 gesetzt, die Vorgängerspalte 22a wird mit dem elektronischen Münzdatensatz Zi beschrieben, Nachfolgerspalte 23a wird mit $Z_j$ und Nachfolgerspalte 23b wird mit $Z_k$ beschrieben. Die gemäß Spalten 25 bis 27 benötigten Statusänderungen erfolgen nach der entsprechenden Prüfung durch die Überwachungsinstanz 2 und dokumentieren das jeweilige Prüfungsergebnis. Die Markierung gemäß Spalte 28 wird ignoriert. In der Spalte 24 kann eine Signatur des aufgeteilten - mit Gleichung (3a) maskierten - Münzdatensatzes eingetragen werden.

Eine Verarbeitung ist beispielsweise "Verbinden". Das Verbinden, also das Zusammenfügen zweier elektronischer Münzdatensätze $Z_i$ und $Z_j$ zu einem elektronischen Münzdatensatz $Z_m$ erfolgt zunächst in der Direkttransaktionsschicht 3, so wie es in Fig. 4 noch gezeigt wird, wobei der monetäre Betrag $\upsilon_m$ und der Verschleierungsbetrag $r_m$ berechnet werden. In der Überwachungsinstanz 2 werden die Markierungen 25 bis 27 gesetzt, die Vorgängerspalte 22a wird mit dem elektronischen Münzdatensatz Zi beschrieben, Vorgängerspalte 22b wird mit $Z_j$ und Nachfolgerspalte 23b wird mit $Z_m$ beschrieben. Die Markierungen in den Spalten 25 bis 27 benötigen Statusänderungen und die Überwachungsinstanz 2 führt die entsprechenden Prüfungen durch. Ein Bereichsnachweis muss erbracht werden, um zu zeigen, dass kein neues Geld generiert wurde. Die Markierung gemäß Spalte 28 wird ignoriert. In der Spalte 24 kann eine erste Signatur und eine zweite Signatur der zu verbindenden - mit Gleichung (3a) maskierten - Münzdatensätze eingetragen werden.

Eine Verarbeitung ist beispielsweise "Umschalten". Das Umschalten ist dann nötig, wenn ein elektronischer Münzdatensatz auf ein anderes Endgerät übertragen wurde und ein erneutes Ausgeben durch das übertragende Endgerät (hier M1) ausgeschlossen werden soll. Beim Umschalten, auch "switch" genannt, wird der vom ersten Endgerät M1 erhaltene elektronische Münzdatensatz $C_k$ gegen einen neuen elektronischen Münzdatensatz Ci mit gleichem monetärem Betrag ausgetauscht. Der neue elektronische Münzdatensatz Ci wird vom zweiten Endgerät M2 generiert. Dieses Umschalten ist notwendig, um die vom ersten Endgerät M1 erhaltenen elektronischen Münzdatensatz $C_k$ zu invalidieren (ungültig machen), wodurch ein erneutes Ausgeben des gleichen elektronischen Münzdatensatzes $C_k$ vermieden wird. Denn, solange der elektronische Münzdatensatz $C_k$ nicht umgeschaltet ist, kann - da das erste Endgerät M1 in Kenntnis des elektronischen Münzdatensatzes $C_k$ ist - das erste Endgerät M1 diesen elektronischen Münzdatensatz $C_k$ an ein drittes Endgerät M3 weitergeben. Das Umschalten erfolgt beispielsweise durch Hinzufügen eines neuen Verschleierungsbetrags $r_{add}$ zum Verschleierungsbetrag $r_k$ des erhaltenen elektronischen Münzdatensatz $C_k$, wodurch ein Verschleierungsbetrag n erhalten wird, den nur das zweite Endgerät M2 kennt. Dies kann auch in der Überwachungsinstanz 2 erfolgen. Um zu beweisen, dass ein neuer Verschleierungsbetrag $r_{add}$ zum Verschleierungsbetrag $r_k$ des maskierten erhaltenen elektronischen Münzdatensatzes $Z_k$ hinzugefügt wurde, der monetäre Betrag aber gleichgeblieben ist, und also Gleichung (11):

$$\upsilon_k = \upsilon_l \qquad\qquad (11)$$

gilt, so muss das zweite Endgerät M2 nachweisen können, dass sich $Z_l$-$Z_k$ als skalares Vielfaches von G also als $r_{add}$*G darstellen lässt. Das heißt, dass nur ein Verschleierungsbetrag $r_{add}$ erzeugt wurde und der monetäre Betrag von Zi gleich dem monetären Betrag von $Z_k$ ist, also $Z_l$=$Z_k$+ $r_{add}$*G. Dies erfolgt durch das Erzeugen einer Signatur mit dem öffentlichen Schlüssel $Z_l$-$Z_k$=$r_{add}$*G. Diese Signatur wird in der Überwachungsschicht 4 verwendet, um die Gültigkeit des umzuschaltenden elektronischen Münzdatensatzes zu bestätigen.

Die Modifikationen "Aufteilen" und "Verbinden" an einem elektronischen Münzdatensatz können auch von einem Endgerät M1 an ein anderes Endgerät M2, M3 delegiert werden, beispielsweise wenn eine Kommunikationsverbindung zur Überwachungsinstanz 2 nicht vorhanden ist.

In Fig. 3 ist ein Ausführungsbeispiel eines Bezahlsystems gemäß der Erfindung zum "Aufteilen", "Verbinden" und "Umschalten" von elektronischen Münzdatensätzen C gezeigt. In Fig. 3 hat das erste Endgerät M1 den Münzdatensatz Ci erhalten und möchte nun eine Bezahltransaktion nicht mit dem gesamten monetären Betrag $v_i$, sondern nur mit einem Teilbetrag $v_k$ durchführen. Dazu wird der Münzdatensatz Ci aufgeteilt. Dazu wird zunächst der monetäre Betrag geteilt:

$$v_i = v_j + v_k \qquad (12)$$

Dabei muss jeder der erhaltenen Beträge $v_j$, $v_k$, größer 0 sein, denn negative monetäre Beträge sind nicht zulässig.

Zudem werden neue Verschleierungsbeträge abgeleitet:

$$r_i = r_j + r_k \qquad (13)$$

Bei einem Aufteilen werden maskierte Münzdatensätze $Z_j$ und $Z_k$ gemäß Gleichung (3) aus den Münzdatensätzen $C_j$ und $C_k$ erhalten und in der Überwachungsinstanz 2 registriert. Für das Aufteilen werden die Vorgängerspalte 22a mit dem Münzdatensatz Zi, die Nachfolgerspalte 23a mit $Z_j$ und die Nachfolgerspalte 23b mit $Z_k$ beschrieben. Zusätzliche Informationen für den Bereichsnachweis (zero-knowledge-proof) sind zu generieren. Die Markierungen in den Spalten 25 bis 27 benötigen Statusänderung und die Überwachungsinstanz 2 führt die entsprechenden Prüfungen durch. Die Markierung gemäß Spalte 28 wird ignoriert.

Dann wird ein Münzteildatensatz, hier $C_k$, vom ersten Endgerät M1 an das zweite Endgerät M2 übertragen. Um ein doppeltes Ausgeben zu verhindern, ist eine Umschalt-Operation sinnvoll, um den vom ersten Endgerät M1 erhaltenen elektronischen Münzdatensatz $C_k$ gegen einen neuen elektronischen Münzdatensatz Ci mit gleichem monetären Betrag auszutauschen. Der neue elektronische Münzdatensatz Ci wird vom zweiten Endgerät M2 generiert. Dabei wird der monetäre Betrag des Münzdatensatzes Ci übernommen und nicht verändert, siehe Gleichung (11).

Dann wird gemäß Gleichung (14) ein neuer Verschleierungsbetrag $r_{add}$ zum Verschleierungsbetrag $r_k$ des erhaltenen elektronischen Münzdatensatz $C_k$ hinzugefügt,

$$r_l = r_k + r_{add} \qquad (14)$$

wodurch ein Verschleierungsbetrag n erhalten wird, die nur das zweite Endgerät M2 kennt. Um zu beweisen, dass nur ein neuer Verschleierungsbetrag $r_{add}$ zum Verschleierungsbetrag $r_k$ des erhaltenen elektronischen Münzdatensatz $Z_k$ hinzugefügt wurde, der monetäre Betrag aber gleichgeblieben ist ($v_k = v_l$), muss das zweite Endgerät M2 nachweisen können, dass sich $Z_l$-$Z_k$ als Vielfaches von G darstellen lässt. Dies erfolgt mittels öffentlicher Signatur $R_{add}$ gemäß Gleichung (15):

$$R_{add} = r_{add} \cdot G \qquad (15)$$
$$= Z_l\text{-}Z_k = (v_l\text{-}v_k)*H + (r_k + r_{add}\text{-}r_k)*G$$

wobei G der Generatorpunkt der ECC ist. Dann wird der umzuschaltende Münzdatensatz Ci maskiert mittels der Gleichung (3) oder der Gleichung (3a), um den maskierten Münzdatensatz Zi zu erhalten. In der Überwachungsinstanz 2 kann dann die private Signatur $r_{add}$ genutzt werden um beispielsweise den maskierten umzuschaltenden elektronischen Münzdatensatz Zi zu signieren, was als Beweis gilt, dass das zweite Endgerät M2 nur ein Verschleierungsbetrag $r_{add}$ zum maskierten elektronischen Münzdatensatz hinzugefügt hat und keinen zusätzlichen monetären Wert, d.h. $v_l = v_k$.

Der Beweis lautet für Maskierungen mittels Gleichung (3) wie folgt:

$$Z_k = v_k \cdot H + r_k \cdot G \qquad (16)$$
$$Z_l = v_l \cdot H + r_l \cdot G = v_k \cdot H + (r_k + r_{add}) \cdot G$$
$$Z_l - Z_k = (r_k + r_{add} - r_k) \cdot G$$
$$= r_{add} \cdot G$$

Für eine Maskierung mittels der Gleichung (3a) wird eine Signatur über dem monetären Betrag $v_k$, dem Verschleierungsbetrag $r_k$ und dem maskierten Münzdatensatzelement (bspw. dem maskierten Verschleierungsbetrag R oder dem maskierten ersten Betragsteil) erzeugt. So kann die Signatur durch Neuberechnen der Maskierung in der Überwachungsinstanz 4 validiert werden, um die Echtheit und das Vorhandensein/Besitz des Münzdatensatzes C beweisen zu können.

Fig. 4 zeigt ein Ausführungsbeispiel eines Bezahlsystems gemäß der Erfindung zum Verbinden von elektronischen Münzdatensätzen. Dabei werden im zweiten Endgerät M2 die beiden Münzdatensätze Ci und C$_j$ erhalten. In Anlehnung an das Aufteilen gemäß Fig. 3 wird nun ein neuer Münzdatensatz $Z_m$ erhalten, indem sowohl die monetären Beträge als auch der Verschleierungsbetrag der beiden Münzdatensätze Ci und C$_j$ addiert werden. Dann wird der erhaltene zu verbindende Münzdatensatz $C_m$ mittels der Gleichung (3) oder der Gleichung (3a) maskiert und der maskierte Münzdatensatz $Z_m$ wird in der Überwachungsinstanz registriert.

Für Maskierungen mittels der Gleichung (3a) wird eine erste Signatur über den monetären Betrag $v_i$, dem Verschleierungsbetrag $r_i$ und dem maskierten Münzdatensatz erzeugt und es wird eine zweite Signatur über den monetären Betrag $v_j$, dem Verschleierungsbetrag $r_j$ und dem maskierten Münzdatensatz $Z_j$ erzeugt. Beide Signaturen können durch jeweiliges Neuberechnen der Maskierung in der Überwachungsinstanz 4 validiert werden, um die Echtheit und das Vorhandensein/Besitz des Münzdatensatzes C beweisen zu können. Die erste Signatur kann auch mit der zweiten Signatur verknüpft werden, um eine gemeinsame Signatur zu bilden.

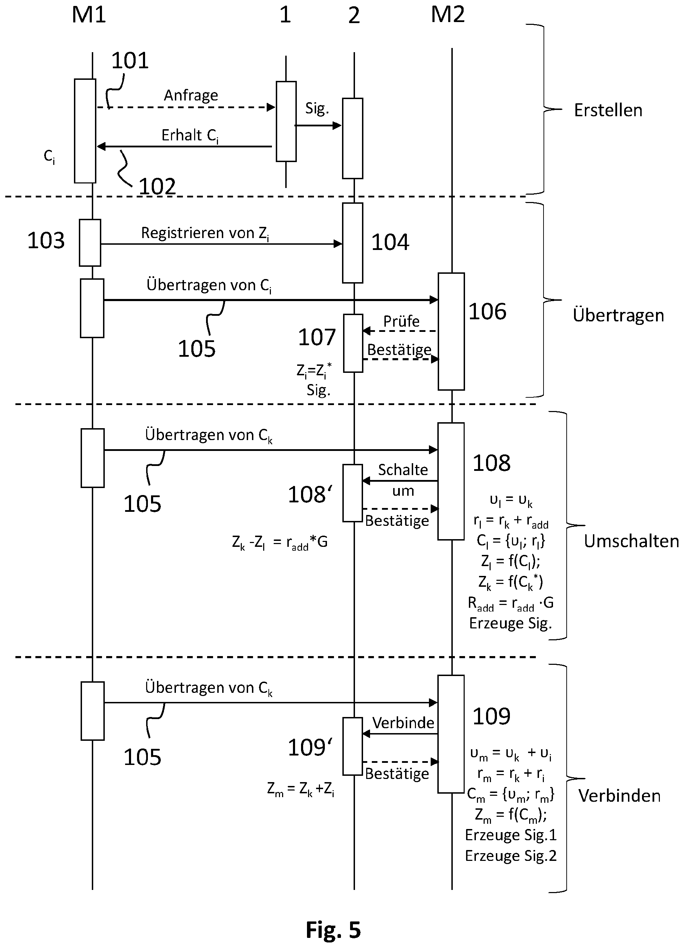

Fig. 5 bis 7 ist jeweils ein Ausführungsbeispiel eines Verfahrensablaufdiagramms eines erfindungsgemäßen Verfahrens 100. Nachfolgend werden die Figuren 5 bis 7 gemeinsam erläutert. In den optionalen Schritten 101 und 102 wird ein Münzdatensatz angefragt und seitens der Herausgeberinstanz 1 dem ersten Endgerät M1 nach Erstellen des elektronischen Münzdatensatzes bereitgestellt. Ein signierter maskierter elektronischer Münzdatensatz wird im Schritt 103 an die Überwachungsinstanz 2 gesendet. Im Schritt 103 erfolgt ein Maskieren des erhaltenen elektronischen Münzdatensatzes C$_i$ gemäß der Gleichung (3) und wie in Fig. 1 erläutert. Dann wird im Schritt 104 der maskierte elektronische Münzdatensatz $Z_i$ in der Überwachungsinstanz 2 registriert. Optional kann M1 den erhaltenen elektronischen Münzdatensatz umschalten. Im Schritt 105 erfolgt das Übertragen des Münzdatensatzes Ci in der Direkttransaktionsschicht 3 an das zweite Endgerät M2. In den optionalen Schritten 106 und 107 erfolgt eine Validitätsprüfung mit vorheriger Maskierung, bei der im Gutfall die Überwachungsinstanz 2 die Gültigkeit des Münzdatensatzes Zi bzw. Ci bestätigt wird.

Im Schritt 108 erfolgt das Umschalten eines erhaltenen Münzdatensatzes $C_k$ (es könnte natürlich auch der erhaltene Münzdatensatz Ci umgeschaltet werden) auf einen neuen Münzdatensatz Ci, wodurch der Münzdatensatz $C_k$ ungültig wird und ein Doppeltausgeben verhindert wird. Dazu wird der monetäre Betrag $v_k$ des übertragenen Münzdatensatzes $C_k$ als "neuer" monetärer Betrag $v_l$ verwendet. Zudem wird, wie bereits mit Gleichungen (14) bis (17) erläutert, der Verschleierungsbetrag n erstellt. Der zusätzliche Verschleierungsbetrag $r_{add}$ wird verwendet, um zu beweisen, dass kein neues Geld (in Form eines höheren monetären Betrags) von dem zweiten Endgerät M2 generiert wurde. Dann wird unter anderem der maskierte umzuschaltende Münzdatensatz Zi an die Überwachungsinstanz 2 gesendet und das Umschalten von $C_k$ auf Ci beauftragt.

Im Schritt 108' erfolgt die entsprechende Prüfung in der Überwachungsinstanz 2. Dabei wird $Z_k$ in die Spalte 22a gemäß Tabelle in Fig. 2 eingetragen und in Spalte 23b der umzuschreibende Münzdatensatz $Z_l$. Es erfolgt sodann eine Prüfung in der Überwachungsinstanz 2, ob $Z_k$ (noch) gültig ist, also ob die letzte Verarbeitung von $Z_k$ in einer der Spalten 23a/b eingetragen ist (als Beweis dafür, dass $Z_k$ nicht weiter aufgeteilt oder deaktiviert oder verbunden wurde) und ob eine Prüfung für die letzte Verarbeitung fehlgeschlagen ist. Zudem wird Ziin die Spalte 23b eingetragen und die Markierungen in den Spalten 25, 26, 27 werden zunächst auf "0" gesetzt. Nun erfolgt eine Prüfung, ob Zi gültig ist, wobei dabei die Prüfung gemäß Gleichungen (16) und (17) verwendet werden können. Im Gutfall wird die Markierung in Spalte 25 auf "1" gesetzt, ansonsten auf "0". Nun erfolgt eine Prüfung, die Berechnung gemäß Gleichung (10) ergibt, dass $Z_k$ und Zi gültig sind und entsprechend wird die Markierung in Spalte 26 gesetzt. Weiterhin wird geprüft, ob die Bereiche schlüssig sind, sodann wird die Markierung in Spalte 27 gesetzt. Wenn alle drei Prüfungen erfolgreich waren, und dies entsprechend unveränderlich in der Überwachungsinstanz 2 festgehalten wurde, gilt der Münzdatensatz als umgeschaltet. D.h. der Münzdatensatz $C_k$ ist nicht mehr gültig und ab sofort ist der Münzdatensatz Ci gültig. Ein Doppeltausgeben ist nicht mehr möglich, wenn ein drittes Endgerät M3 die Validität des (doppelt ausgegebenen) Münzdatensatz an der Überwachungsinstanz 2 erfragt.

Im Schritt 109 erfolgt ein Verbinden von zwei Münzdatensätzen $C_k$ und Ci auf einen neuen Münzdatensatz $C_m$, wodurch die Münzdatensätze $C_k$, Ci ungültig werden und ein Doppeltausgeben verhindert wird. Dazu wird der

monetäre Betrag $\upsilon_m$ aus den beiden monetären Beträgen $\upsilon_k$ und $\upsilon_i$ gebildet. Dazu wird der Verschleierungsbetrag $r_m$ aus den beiden Verschleierungsbeträgen $r_k$ und $r_i$ gebildet. Zudem wird mittels Gleichung (3) der maskierte zu verbindende Münzdatensatz erhalten und dieser (mit anderen Informationen zusammen) an die Überwachungsinstanz 2 gesendet und das Verbinden als Verarbeitung erbeten.

Im Schritt 109' erfolgt die entsprechende Prüfung in der Überwachungsinstanz 2. Dabei wird $Z_m$ in die Spalte 23b gemäß Tabelle in Fig. 2 eingetragen, was auch gleich einer Umschreibung. Es erfolgt sodann eine Prüfung in der Überwachungsinstanz 2, ob $Z_k$ und Zi (noch) gültig sind, also ob die letzte Verarbeitung von $Z_k$ oder Zi in einer der Spalten 23a/b eingetragen ist (als Beweis dafür, dass $Z_k$ und Zi nicht weiter aufgeteilt oder deaktiviert oder verbunden wurden) und ob eine Prüfung für die letzte Verarbeitung fehlgeschlagen ist. Zudem werden die Markierungen in den Spalten 25, 26, 27 zunächst auf "0" gesetzt. Nun erfolgt eine Prüfung, ob $Z_m$ gültig ist, wobei dabei die Prüfung gemäß Gleichungen (16) und (17) verwendet werden können. Im Gutfall wird die Markierung in Spalte 25 auf "1" gesetzt, ansonsten auf "0". Nun erfolgt eine Prüfung, die Berechnung gemäß Gleichung (10) ergibt, dass $Z_i$ plus $Z_k$ gleich $Z_m$ ist und entsprechend wird die Markierung in Spalte 26 gesetzt. Weiterhin wird geprüft, ob die Bereiche schlüssig sind, sodann wird die Markierung in Spalte 27 gesetzt.

Im Schritt 110' erfolgt die entsprechende Prüfung in der Überwachungsinstanz 2. Dabei werden $Z_j$ und $Z_k$ in die Spalten 23a/b gemäß Tabelle in Fig. 2 eingetragen. Es erfolgt sodann eine Prüfung in der Überwachungsinstanz 2, ob Zi (noch) gültig ist, also ob die letzte Verarbeitung von Zi in einer der Spalten 23a/b eingetragen ist (als Beweis dafür, dass Zi nicht weiter aufgeteilt oder deaktiviert oder verbunden wurde) und ob eine Prüfung für die letzte Verarbeitung fehlgeschlagen ist. Zudem werden die Markierungen in den Spalten 25, 26, 27 zunächst auf "0" gesetzt. Nun erfolgt eine Prüfung, ob $Z_j$ und $Z_k$ gültig sind, wobei dabei die Prüfung gemäß Gleichungen (16) und (17) verwendet werden können. Im Gutfall wird die Markierung in Spalte 25 auf "1" gesetzt. Nun erfolgt eine Prüfung, die Berechnung gemäß Gleichung (10) ergibt, dass Zi gleich $Z_k$ plus $Z_j$ ist und entsprechend wird die Markierung in Spalte 26 gesetzt. Weiterhin wird geprüft, ob die Bereiche schlüssig sind, sodann wird die Markierung in Spalte 27 gesetzt.

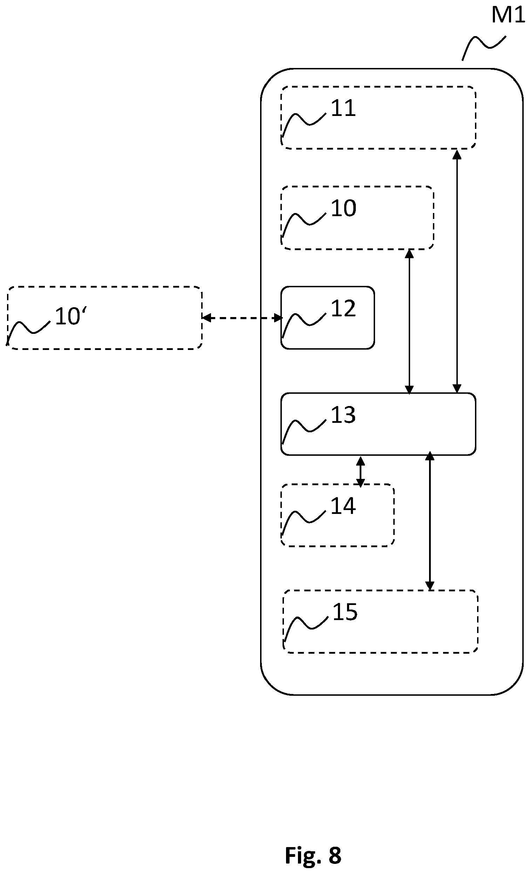

In Fig. 8 ist ein Ausführungsbeispiel eines erfindungsgemäßen Geräts M1 gezeigt. Das Gerät M1 kann elektronische Münzdatensätze Ci in einem Datenspeicher 10, 10' ablegen. Dabei können die elektronischen Münzdatensätze Ci auf dem Datenspeicher 10 des Geräts M1 liegen oder in einem externen Datenspeicher 10' verfügbar sein. Bei Verwenden eines externen Datenspeichers 10' könnten die elektronischen Münzdatensätze Ci in einem Online-Speicher abgelegt sein, beispielsweise einem Datenspeicher 10' eines Anbieters für digitale Geldbörsen. Zusätzlich könnten auch private Datenspeicher, bspw. ein Network-Attached-Storage, NAS in einem privaten Netzwerk verwendet werden.

In einem Fall ist der elektronische Münzdatensatz Ci als ein Ausdruck auf Papier dargestellt. Dabei kann der elektronische Münzdatensatz durch einen QR-Code, ein Bild eines QR-Codes dargestellt werden, oder aber auch eine Datei oder eine Zeichenfolge (ASCII) sein.

Das Gerät M1 hat mindestens eine Schnittstelle 12 als Kommunikationskanal zum Ausgeben des Münzdatensatzes Ci zur Verfügung. Diese Schnittstelle 12 ist beispielsweise eine optische Schnittstelle, beispielsweise zum Darstellen des Münzdatensatzes Ci auf einem Anzeigeeinheit (Display), oder einen Drucker zum Ausdrucken des elektronischen Münzdatensatzes Ci als Papier-Ausdruck. Diese Schnittstelle 12 kann auch eine digitale Kommunikationsschnittstelle, beispielsweise für Nahfeldkommunikation, wie NFC, Bluetooth, oder eine Internetfähige Schnittstelle, wie TCP, IP, UDP, HTTP oder ein Zugriff auf eine Chipkarte als Sicherheitselement sein. Diese Schnittstelle 12 ist beispielsweise eine Datenschnittstelle, sodass der Münzdatensatz Ci über eine Applikation, beispielsweise einem Instant-Messenger-Dienst oder als Datei oder als Zeichenfolge zwischen Geräten übertragen wird.

Zudem ist die Schnittstelle 12 oder eine weitere Schnittstelle (nicht dargestellt) des Geräts M1 dazu eingerichtet, mit der Überwachungsinstanz 2 gemäß der Beschreibung in den Figuren 1 bis 6 zu interagieren. Das Gerät M1 ist dazu bevorzugt onlinefähig.

Darüber hinaus kann das Gerät M1 auch eine Schnittstelle zum Empfang von elektronischen Münzdatensätzen aufweisen. Diese Schnittstelle ist eingerichtet visuell präsentierte Münzdatensätze, beispielsweise mittels Erfassungsmodul wie Kamera oder Scanner, oder digital präsentierte Münzdatensätze, empfangen via NFC, Bluetooth, TCP, IP, UDP, HTTP oder mittels einer Applikation präsentierte Münzdatensätze zu empfangen.

Das Gerät M1 umfasst auch eine Recheneinheit 13, die das oben beschriebene Verfahren zum Maskieren von Münzdatensätzen und die Verarbeitungen an Münzdatensätzen durchführen kann.

Das Gerät M1 ist onlinefähig und kann bevorzugt mittels eines Standorterkennungs-Moduls 15 erkennen, wenn es mit einem WLAN verbunden ist. Optional kann ein spezifisches WLAN Netz als bevorzugt markiert sein (=Standortzone), sodass das Gerät M1 besondere Funktionen nur ausführt, wenn es in diesem WLAN Netz angemeldet ist. Alternativ erkennt das Standorterkennungs-Modul 15, wenn das Gerät M1 in vordefinierten GPS-Koordinaten inklusive eines definierten Radius ist und führt die besonderen Funktionen entsprechend der so definierten Standortzone durch. Diese Standortzone kann entweder manuell in das Gerät M1 oder via andere Einheiten/Module in das Gerät M1 eingebracht werden. Die besonderen Funktionen, die das Gerät M1 bei Erkennen der Standortzone durchführt, sind insbesondere das Übertragen von elektronischen Münzdatensätzen von/zum externen Datenspeicher 10 von/zu einem Tresormodul 14 und ggf. das Übertragen maskierter Münzdatensätze Z an die Überwachungsinstanz 2, beispielsweise im Rahmen von den o.g. Verarbeitungen an einem Münzdatensatz.

Im einfachsten Fall werden im Endgerät M1 alle Münzdatensätze Ci nach Erhalt automatisch zu einem Münzdatensatz verbunden (siehe Verbinden-Verarbeitung bzw. Verbinden-Schritt). Das heißt, sobald ein neuer elektronischer Münzdatensatz empfangen wird, wird ein Verbinden bzw. Umschalten-Befehl an die Überwachungsinstanz 2 gesendet. Das Gerät M1 kann elektronische Münzdatensätze auch in algorithmisch festgelegten Denominationen vorbereiten und im Datenspeicher 10, 10' vorhalten, damit auch ohne Datenverbindung zur Überwachungsinstanz 2 ein Bezahlvorgang möglich ist.

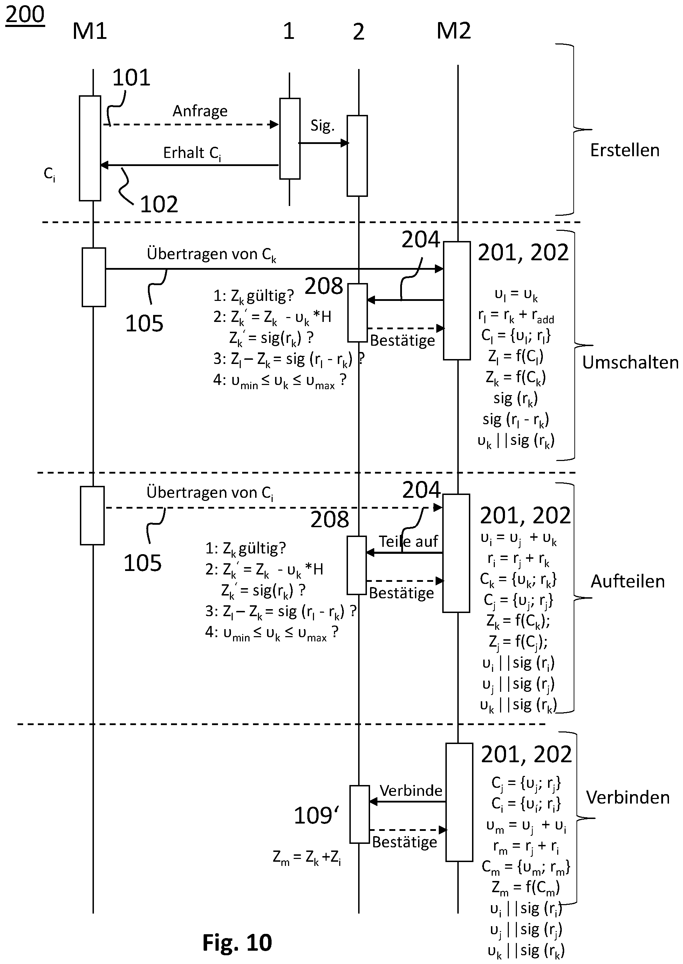

Fig. 9 und 10 zeigen jeweils ein Ausführungsbeispiel eines Verfahrensablaufdiagramms eines erfindungsgemäßen Verfahrens 200. Nachfolgend werden die Figuren 9 und 10 gemeinsam erläutert. Die zuvor getroffenen Aussagen aus dem Verfahren 100 und den einzelnen Verfahrensschritten 101 bis 110 gelten auch für dieses Verfahren 200, es sei denn, es werden hier andere Aussagen getroffen.

In den optionalen Schritten 101 und 102 wird ein Münzdatensatz angefragt und seitens der Herausgeberinstanz 1 dem ersten Endgerät M1 nach Erstellen des elektronischen Münzdatensatzes bereitgestellt, siehe auch Fig.5 bis 7. Das erste Endgerät M1 überträgt im Schritt 105 die Münze C an das zweite Endgerät. Die hier dargestellten Verfahrensschritte 201 bis 208 werden zwar in Bezug auf das zweite Endgerät M2 erläutert, könnten aber auch im ersten Endgerät M1 durchgeführt werden. Das erste Endgerät M1 überträgt im Schritt 105 die Münze $C_k$ an das zweite Endgerät.

Im Schritt 201 erfolgt das Auswählen eines Maskierungsmodus. Um ein doppeltes Ausgeben zu verhindern, ist eine Umschalt-Operation (Switch) vorgesehen, um den vom ersten Endgerät M1 erhaltenen elektronischen Münzdatensatz $C_k$ gegen einen neuen elektronischen Münzdatensatz Ci mit gleichem monetärem Betrag auszutauschen. Der neue elektronische Münzdatensatz Ci wird vom zweiten Endgerät M2 generiert. Dabei wird der monetäre Betrag $v_k$ des Münzdatensatzes $C_k$ übernommen und wird nicht verändert zum neuen monetären Betrag $v_l$, siehe Gleichung (11). Dann wird gemäß Gleichung (14) ein neuer Verschleierungsbetrag $r_{add}$ zum Verschleierungsbetrag $r_k$ des erhaltenen elektronischen Münzdatensatz $C_k$ hinzugefügt, wodurch ein Verschleierungsbetrag n erhalten wird, die nur das zweite Endgerät M2 kennt.

Die Auswahl des Maskierungsmodus erfolgt beispielsweise durch einen Benutzer des ersten Endgeräts M1 über eine entsprechende Menüsteuerung am Endgerät M1. Die Auswahl erfolgt beispielsweise aufgrund einer Systemvorgabe x im Bezahlsystem. Beispielsweise kann so, eine Leistungsfähigkeit des Bezahlsystems optimal auszunutzen, sodass ein Aufwand der Nachweisprüfung (Schritt 207) auf Basis eines aktuellen Registrier-Anfragevolumen in der Überwachungsinstanz 2 durch entsprechende Auswahl des Maskierungsmodus steuern kann. Die Auswahl kann auch auf Basis einer Endgeräte-Eigenschaft gewählt werden, beispielsweise bei fehlender Unterstützung eines der Maskierungsmodi kann eine entsprechende Vorauswahl getroffen werden.

Um nun den aufwendigen Nachweis der Gleichung (15) und (16) nicht durchführen zu müssen, wird nun gemäß Fig. 9 im optionalen Schritt 201 der vierte Maskierungsmodus gewählt. Es kann im Schritt 202 der elektronische Münzdatensatz Ci entsprechend der Gleichung (3) maskiert werden, um den vollständig maskierten elektronischen Münzdatensatz Zi gemäß zweitem Maskierungsmodus zu erhalten.

Im Schritt 203 wird optional eine erste Signatur mit dem Verschleierungsbetrag $r_k$ als Signaturschlüssel gemäß Gleichung (17) erstellt:

$$[Z_k]\ sig\ (r_k) \tag{17}$$

Zudem wird im Schritt 203 optional eine zweite Signatur mit der Differenz der Verschleierungsbeträge $r_k$ und $r_l$ als Signaturschlüssel gemäß Gleichung (18) erstellt:

$$[Z_k]sig\ (r_l - r_k) \tag{18}$$

Im Schritt 203 kann der monetäre Betrag $v_k$ des empfangenen elektronischen Münzdatensatz $C_k$ zur ersten Signatur hinzugefügt werden, hier beispielhaft logisch verknüpft gemäß Gleichung (19) oder als Konkatenation gemäß Gleichung (19a):

$$v_k\ ||\ sig\ (r_k) \tag{19}$$

$$v_k\ \circ\ sig\ (r_k) \tag{19a}$$

Das Umschalten (Modifizieren) erfolgt bevorzugt vor dem Senden-Schritt 204. Der im Schritt 204 an die Überwachungsinstanz 2 gesendete entsprechende unvollständig maskierte elektronische Münzdatensatz wird zusammen mit zumindest auch dem unmaskierten Münzdatensatzelement aus Gleichung (19) bzw. Gleichung (19a) und ggf. der zweiten Signatur aus Gleichung (18) versendet gemäß Gleichung (20) durch bloßes Hintereinander-Anordnen (" ; " oder als Konkatenation "°" gemäß Gleichung 20a :

$$v_k \, || \, sig \, (r_k); \; sig \, (r_l - r_k); \; Z_l \qquad (20)$$

$$v_k \, || \, sig \, (r_k) \, \circ \, sig \, (r_l - r_k) \, \circ \, Z_l \qquad (20a)$$

Wird keine Signatur im Schritt 203 erstellt, wird das unmaskierte Münzdatensatzelement - hier der monetäre Betrag $v_k$ oder der identische monetäre Betrag $v_l$ zum vollständig maskierten elektronischen Münzdatensatz Zi gemäß Gleichung (20b) hinzugefügt:

$$v_k \, \circ \, Z_l \; bzw. \; v_l \, \circ \, Z_l \qquad (20b)$$

In der Überwachungsinstanz kann durch die Auswahl des ersten Maskierungsmodus eine vereinfachte Bereichsprüfung erfolgen. Diese umfasst beispielsweise vier Prüfungen (wenn die Signaturen im Schritt 203 erzeugt werden). Die erste Prüfung ist das Prüfen der Gültigkeit (Validität) des umzuschaltenden unvollständig maskierten Münzdatensatzes. Dies erfolgt entsprechend der vorangegangen beschriebenen Art.
Die optionale zweite Prüfung gemäß Schritt 206 dient der Verifizierung der (optionalen) ersten Signatur. Dazu wird aus dem unmaskierten monetären Betrag $v_k$ der öffentliche Verifikationsschlüssel der ersten Signatur erstellt, mit:

$$Z_k{}^{'} = Z_k \, - \, v_k * H \qquad (21)$$

Mit dem in Gleichung (21) erzeugten öffentlichen Verifikationsschlüssel wird die erste Signatur geprüft:

$$Z_k{}^{'} = sig \, (r_k) \qquad (22)$$

Ist die zweite Prüfung erfolgreich, so ist nachgewiesen, dass der monetäre Betrag $v_k$ zum maskierten Münzdatensatz $Z_k$ gehört und das zweite Endgerät M2 den Verschleierungsbetrag $r_k$ kennt.
Die optionale dritte Prüfung gemäß Schritt 207 dient der Verifizierung der (optionalen) zweiten Signatur. Dazu wird die Differenz aus dem maskierten umzuschaltenden elektronischen Münzdatensatz Zi und dem maskierten erhaltenen Münzdatensatz $Z_k$ gebildet:

$$Z_l{}^{-} Z_k \; = sig \, (r_l - r_k) \qquad (23)$$

Mit dem in Gleichung (23) erzeugten öffentlichen Verifikationsschlüssel wird die zweite Signatur geprüft. Ist die dritte Prüfung erfolgreich, so ist nachgewiesen, dass die Differenz der monetären Beträge $v_k \, v_l$ null ergibt und damit nachgewiesen ist, dass kein neues/zusätzliches Geld generiert wurde.
Die vierte Prüfung ist dann eine sehr einfache Bereichsprüfung durch die Überwachungsinstanz 2:

$$v_{min} \leq v_k \leq v_{max} \qquad (24)$$

Das Prüfen des Aufteilens (als Modifizieren) eines Münzdatensatzes Ci erfolgt auf vergleichbare Weise, wie das Umschalten. Das erste Endgerät M1 überträgt beispielsweise im Schritt 105 die Münze Ci an das zweite Endgerät M2.
Im optionalen Schritt 201 erfolgt das Auswählen des Maskierungsmodus. Um die aufwendigen Nachweise der Gleichung (15) und (16) nicht durchführen zu müssen, wird beispielsweise gemäß Fig. 9 im Schritt 201 der vierte Maskierungsmodus gewählt. Anschließend wird im Schritt 202 der elektronische Münzdatensatz Ci entsprechend der Gleichung (6) und (7) aufgeteilt, um einen ersten Münzteildatensatz $C_j$ und einen zweiten Münzteildatensatz $C_k$ zu erhalten. Im Schritt 203 können dann optional drei separate erste Signatur über die Verschleierungsbeträge $r_i$, $r_j$ und $r_k$ gemäß Gleichung (17) erstellt werden. Zudem kann jeder der monetären Beträge $v_i \, v_j \, v_k$ zur entsprechenden ersten

Signatur hinzugefügt werden, beispielhaft logisch verknüpft gemäß Gleichung (19) oder als Konkatenation gemäß Gleichung (19a), sodass folgende drei erste Signaturen erhalten werden:

$$v_i \,||\, sig \ (r_i) \tag{19b}$$

$$v_j \,||\, sig \ (r_j) \tag{19c}$$

$$v_k \,||\, sig \ (r_k) \tag{19d}$$

Das Aufteilen (Modifizieren) erfolgt bevorzugt vor dem Senden-Schritt 204. Die im Schritt 204 an die Überwachungsinstanz 2 gesendete entsprechende unvollständigen maskierten elektronische Münzteildatensätze $Z_k \ Z_j$ werden zusammen mit den unmaskierten Münzdatensatzelementen aus Gleichungen (19b), (19c), (19d) bzw. entsprechender Konkatenation gemäß Gleichung (19a) versendet:

$$v_k \,||\, sig \ (r_k); \ v_i \,||\, sig \ (r_i); \ v_j \,||\, sig \ (r_j); \ Z_{j;} \ Z_k \tag{25}$$

Wird keine Signatur im Schritt 203 erstellt, wird das jeweilige unmaskierte Münzdatensatzelement - hier die monetären Beträge $v_i \ v_j \ v_k$ zum entsprechenden vollständig maskierten elektronischen Münzdatensatz $Z_i \ Z_j \ Z_k$ gemäß Gleichung (25a) hinzugefügt:

$$v_i \circ Z_i \ \ v_j \circ Z_j \ \ v_k \circ Z_k \tag{25a}$$

In der Überwachungsinstanz 2 kann durch die Auswahl des vierten Maskierungsmodus eine vereinfachte Bereichsprüfung erfolgen. Diese umfasst hier ebenfalls beispielsweise vier Prüfungen. Die erste Prüfung ist das Prüfen der Gültigkeit (Validität) des umzuschaltenden unvollständig maskierten Münzdatensatzes. Dies erfolgt entsprechend der vorangegangen beschriebenen Art.

Die optionale zweite Prüfung gemäß Schritt 206 dient der Verifizierung der (optionalen) ersten Signatur über dem Verschleierungsbetrag $r_i$ des ungeteilten Münzdatensatz $C_i$. Die zweite Prüfung erfolgt gemäß Gleichungen (21) und (22). Ist die zweite Prüfung erfolgreich, so ist nachgewiesen, dass der monetäre Betrag $v_i$ zum maskierten Münzdatensatz $Z_i$ gehört und das zweite Endgerät M2 den Verschleierungsbetrag $r_i$ kennt.

Die dritte Prüfung gemäß Gleichung (26) dient dem Nachweis, dass kein zusätzliches Geld generiert wurde mit:

$$(Z_j + Z_k) \text{ - } Z_i == 0 \tag{26}$$

Die optionale vierte Prüfung ist dann eine Berechnung der jeweiligen öffentlichen Verifikationsschlüssel zum Prüfen der restlichen ersten Signaturen mit:

$$Z_j^{\ '} = Z_j \text{ - } v_j * H \tag{27}$$

$$Z_k^{\ '} = Z_k \text{ - } v_k * H \tag{28}$$

Mit den in Gleichungen (27) und (28) erzeugten öffentlichen Verifikationsschlüssel wird die jeweilige erste Signatur geprüft:

$$Z_k^{\ '} = sig \ (r_k) \tag{29}$$

$$Z_j^{\ '} = sig \ (r_j) \tag{30}$$

Ist die optionale vierte Prüfung erfolgreich, so ist nachgewiesen, dass der monetäre Betrag $v_k$ zum maskierten Münzdatensatz $Z_k$ gehört, dass der monetäre Betrag $v_j$ zum maskierten Münzdatensatz $Z_j$ gehört und das zweite Endgerät M2 die Verschleierungsbeträge $r_k$ und $r_j$ kennt. Schließlich kann eine sehr einfache Bereichsprüfung analog zu Gleichung (24) erfolgen.

Das Prüfen des Verbindens (als Modifizieren) von zwei Münzdatensätzen $C_i$ und $C_j$ zu einem verbundenen Münzdatensatzes $C_m$ erfolgt auf vergleichbare Weise. Im optionalen Schritt 201 erfolgt das Auswählen des Maskierungsmodus. Um die aufwendigen Nachweise der Gleichung (15) und (16) nicht durchführen zu müssen, kann gemäß Fig. 9 im Schritt 201 der zweite Maskierungsmodus gewählt werden. Anschließend wird im Schritt 202 der verbundene elektronische Münzdatensatz $C_m$ entsprechend der Gleichung (6) und (7) gebildet. Im Schritt 203 werden dann wiederum die drei separaten ersten gemäß Gleichungen (19a) bis (19c) gebildet

Das Verbinden (Modifizieren) erfolgt bevorzugt vor dem Senden-Schritt 204. Der im Schritt 204 an die Überwachungsinstanz 2 gesendete entsprechende unvollständige maskierte verbundene elektronische Münzdatensatz $Z_m$ wird zusammen mit den unmaskierten Datenelementen aus Gleichungen (19b), (19c), (19d) bzw. entsprechender Konkatenation gemäß Gleichung (19a) versendet:

$$v_k \, ||\, sig \, (r_k); \, v_i \, ||\, sig \, (r_i); \, v_j \, ||\, sig \, (r_j); \, Z_m \qquad (31)$$

Wird keine Signatur im Schritt 203 erstellt, wird das jeweilige unmaskierte Münzdatensatzelement - hier die monetären Beträge $v_m \, v_j \, v_k$ zum entsprechenden vollständig maskierten elektronischen Münzdatensatz $Z_m \, Z_j \, Z_k$ gemäß Gleichung (31a) hinzugefügt:

$$v_m \circ Z_m \; v_j \circ Z_j \; v_k \circ Z_k \qquad (31a)$$

In der Überwachungsinstanz 2 kann durch die Auswahl des zweiten Maskierungsmodus eine vereinfachte Bereichsprüfung erfolgen. Diese umfasst hier ebenfalls beispielsweise vier Prüfungen. Die erste Prüfung ist das Prüfen der Gültigkeit (Validität) des umzuschaltenden unvollständig maskierten Münzdatensatzes. Dies erfolgt entsprechend der vorangegangen beschriebenen Art.

Die optionale zweite Prüfung dient der Verifizierung der (optionalen) ersten Signatur über dem Verschleierungsbetrag $r_i$ des ungeteilten Münzdatensatz $C_i$. Die zweite Prüfung erfolgt gemäß den Gleichungen (21) und (22). Ist die zweite Prüfung erfolgreich, so ist nachgewiesen, dass der monetäre Betrag $v_i$ zum maskierten Münzdatensatz $Z_i$ gehört und das zweite Endgerät M2 den Verschleierungsbetrag $r_i$ kennt.

Die dritte Prüfung erfolgt analog zur Gleichung (26) und dient als Nachweis, dass kein zusätzliches Geld generiert wurde.

Die optionale vierte Prüfung ist dann eine Berechnung der jeweiligen öffentlichen Verifikationsschlüssel zum Prüfen der restlichen optionalen ersten Signaturen analog zu den Gleichungen (27) bis (30). Schließlich kann eine sehr einfache Bereichsprüfung analog zu Gleichung (24) erfolgen.

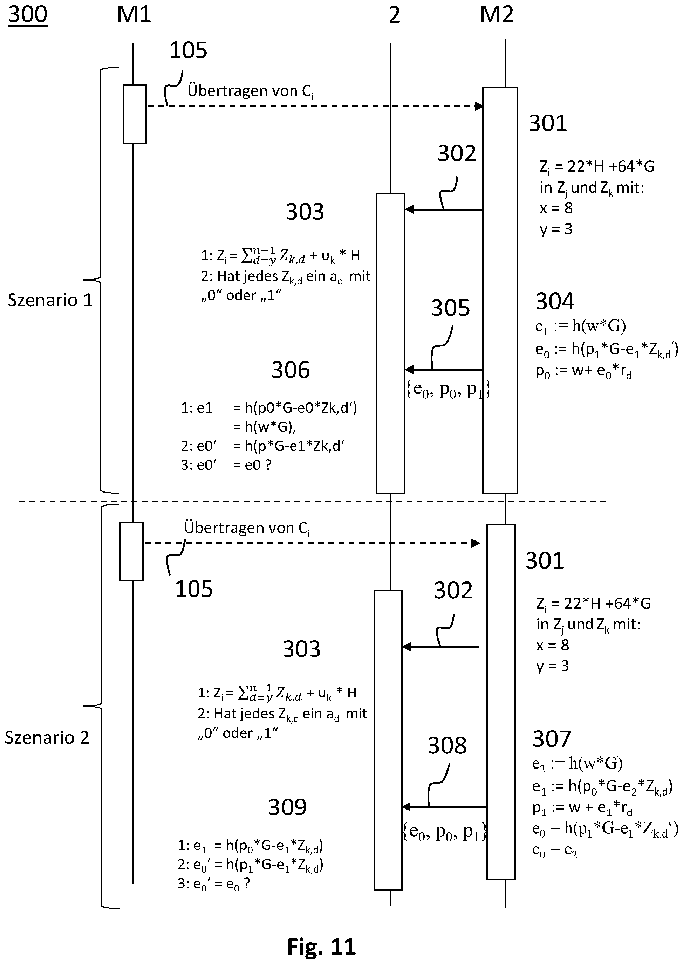

In Fig. 11 ist ein weiteres Ausführungsbeispiel eines Verfahrensablaufdiagramms eines erfindungsgemäßen Verfahrens 300 dargestellt. Das in Fig. 11 vorgestellte Verfahren kann vollständig auf eines der zuvor beschriebenen Verfahren angewendet werden. Es ist im Rahmen der vereinfachten Nachweisprüfung für alle Maskierungsmodi anwendbar.

Das zweite Endgerät M2 ist im Besitz des elektronischen Münzdatensatzes $C_i$, beispielsweise durch Übertragen im Schritt 105. Das zweite Endgerät kann nun den Münzdatensatz $C_i$ entsprechend einer der vorhergehend beschriebenen Modifizierschritte, Aufteilen, Verbinden, Umschalten verarbeiten. Um eine Bereichsprüfung für eine Überwachungsinstanz 1 zu vereinfachen, werden die folgenden Schritte durchgeführt:

Im Endgerät M2 wird nach dem Maskierenschritt (der vorhergehend beschriebenen Art) der maskierte elektronische Münzdatensatz geteilt in:

$$Z_i = Z_j + Z_k = (v_j * H) + (v_k * 2^y * H + r_k * G) \qquad (32)$$

wobei $v_j$ kleiner als ein Vorgabewert x ist. Der Vorgabewert x ist beispielsweise systembedingt vorgeben oder wird durch ein Aushandeln zwischen zwei Teilnehmern am Bezahlsystem erhalten. Der Vorgabewert x kann als Bezahlsystemparameter fest sein oder variabel, beispielsweise zwischen Endgeräten ausgehandelt worden sein.

Eine bitweise Darstellung von x, unter der Annahme, dass

$$x = 2^y \tag{33}$$

erfolgt als ein Beispiel für eine stellenwertbasierte Aufteilung des maskierten Münzteilsatzes $Z_k$ in $Z_{k,d}$ mit der Basis 2 mit:

$$Z_k = \sum_{d=y}^{n-1} Z_{k,d} = \sum_{d=y}^{n-1} (v_{k,d} * 2^y * H + r_{k,d} * G) = \sum_{d=y}^{n-1} (a_k 2^d * H + r_k * G) \tag{34}$$

wobei $a_j \in \{0,1\}$ ist. Der Verschleierungsbetrag r wird gewählt mit:

$$r = \sum_{d=y}^{n-1} r_d \tag{35}$$

Beispiel 1: Beispielsweise ist der maskierte erhaltene elektronische Münzdatensatz Zi = 22 * H + 64 * G und der Vorgabewert x ist acht. Eine bitweise Darstellung des geldwerten Betrags $v_i$ ist 10 1 1 0 mit y = 3, siehe Schritt 301 in Fig.11.

Die bitweise Darstellung des geldwerten Betrags $v_j$ ist dann 110 (als $v_j$ = 6) und $Z_j$= 6*H, betrachtet werden die rechten y-ten Bits des geldwerten Betrags $v_i$.

Die bitweise Darstellung des geldwerten Betrags $v_k$ ist dann 10000 (als $v_k$ = 16) und $Z_j$= 6*H, wenn die y-ten Bits des geldwerten Betrags von $v_i$ gleich null gesetzt werden. Der zweite maskierte Münzteildatensatz $Z_k$ ist dann:

$$Z_k = 16*H + 64*G \tag{36}$$
$$= (0*2^3*H + 20*G) + (1*2^4*H + 44*G)$$
$$= Z_{k,3} + Z_{k,4}$$

Die Nachweisprüfung ist dann wie folgt:

Das zweite Endgerät M2 versendet den monetären Betrag $v_k$ und die Liste von $Z_{k,d}$ aus Gleichung (34) für y $\leq$ d < n zur Überwachungsinstanz 2 im Schritt 302. Die Überwachungsinstanz 2 prüft im Schritt 303, ob:

$$Z_i = \sum_{d=y}^{n-1} Z_{k,d} + v_j * H \tag{37}$$

Bei fehlgeschlagener Prüfung wird das Kommando zurückgewiesen. Bei erfolgreicher Prüfung wird nachgewiesen durch die Überwachungsinstanz 2 dass es für jedes $Z_{k,d}$ ein entsprechendes $a_d$ mit "0" oder "1" gibt, ohne dass die Werte offengelegt werden. Eine Bereichsprüfung ist erfolgreich, wenn für jedes $a_d$ ein Wert von "0" oder "1" vorliegt. Dazu wird eine Ringsignatur verwendet. Mit einer Ringsignatur kann jeder für zwei oder mehr öffentliche Schlüssel nachweisen, dass die dazu korrespondierenden privaten Schlüssel bekannt sind, nämlich:

Szenario 1: Es soll gelten:

$$Z_{k,d} = r_d * G \tag{38}$$

$$Z_{k,d}{}' := - H + r_d * G \tag{39}$$

Dafür wird im zweiten Endgerät M2 im Schritt 304 eine Zufallszahl w erstellt und daraus berechnet:

$$e_1 := h(w*G) \tag{40}$$

wobei h eine Hashwertfunktion und G der Generatorpunkt der ECC Kurve ist. Anschließend erstellt das Endgerät M2 eine zweite Zufallszahl $p_1$ und berechnet:

$$e_0 := h(p_1*G-e_1*Z_{k,d}') \tag{41}$$

$$p_0 := w + e_0*r_d \tag{42}$$

und sendet die Ringsignatur $\{e_0, p_0, p_0\}$ im Schritt 305 an die Überwachungsinstanz 2. Die Überwachungsinstanz 2 berechnet:

$$e_1 = h(p_0*G-e_0*Z_{k,d}') \tag{43}$$

Nach Ersetzen von $p_0$ mit Gleichung (39) und $Z_{k,d}$ mit (38) ergibt sich Gleichung (44):

$$e_1 = h((w+e_0*r_d)*G-e_0*r_d*G) = h(w*G), \tag{44}$$

was dem ursprünglichen $e_1$ entspricht, so wie es im zweiten Endgerät M2 definiert war. Die Überwachungsinstanz 2 berechnet:

$$e_0' = h(p*G-e_1*Z_{k,d}') \tag{45}$$

und prüft, ob $e_0 = e_0$ stimmt. Unter der Annahme, dass

$$Z_{k,d}' = x*H+r_d*G \text{ und } x \text{ ungleich } 0 \tag{46}$$

gilt:

$$e_1 = h(p_0*G-e_0*Z_{k,d)} = h(w*G-e_0*x*H) \tag{47}$$

wodurch feststeht, dass das zweite Endgerät M2 $p_1$ mit $e_0 = h(s_1*G-ei_*Z_{k,d}')$.

Szenario 2:

$$Z_{k,d} = H + r_d * G \tag{48}$$

$$Z_{k,d}' := r_d*G \tag{49}$$

Dafür wird im zweiten Endgerät M2 im Schritt 307 eine Zufallszahl w erstellt und berechnet:

$$e_2 := h(w*G) \tag{50}$$

wobei h eine Hashwertfunktion und G der Generatorpunkt der ECC Kurve ist. Anschließend erstellt das Endgerät M2 eine zweite Zufallszahl $p_0$ und berechnet:

$$e1 := h(p_0 \ast G\text{-}e_2 \ast Z_{k,d}) \qquad (51)$$

$$p_1 := w + e_1 \ast r_d \qquad (52)$$

Das Endgerät M2 berechnet im Schritt 307 auch:

$$e_0 = h(p_1 \ast G\text{-}e_1 \ast Z_{k,d}') \qquad (53)$$

Es ergibt sich

$$e_0 = h((w+e_1 \ast r_d) \ast G\text{-}e_1 \ast r_d \ast G) = h(w \ast G) = e_2 \qquad (54)$$

Das Endgerät M2 sendet die Ringsignatur $\{e_0, p_0, p_1\}$ zur Überwachungsinstanz 2 im Schritt 308. Die Überwachungsinstanz 2 berechnet im Schritt 309:

$$e_1 = h(p_0 \ast G\text{-}e_1 \ast Z_{k,d}) \qquad (55)$$

$$e_0' = h(p_1 \ast G\text{-}e_1 \ast Z_{k,d})$$

und prüft, ob $e_0' = e_0$ stimmt. Unter der Annahme, dass

$$Z_{k,d}' = x \ast H + r_d \ast G \text{ mit x ungleich 0} \qquad (56)$$

gilt:

$$e_0 = h(p_1 \ast G\text{-}e_1 \ast Z_{k,d}') \qquad (57)$$
$$= h(w+e_1 \ast r_d) \ast G\text{-}e_1 \ast r_d \ast G\text{-}e_1 \ast x \ast H)$$
$$= h(k \ast G\text{-}e_1 \ast x \ast H) = e_2$$

wodurch feststeht, dass das zweite Endgerät M2 $p_0$ mit

$$e_1 = h(p_0 \ast G - e_2 \ast Z_{k,d}) \qquad (58)$$
$$= h(p_0 - e_2 \ast r_d) \ast G - e_2 \ast H)$$

finden muss.

Beispiel 2 wird figürlich nicht dargestellt und zeigt exemplarisch ein Beispiel, in dem der Stellenwert eine beliebige Basis hat, also entgegen dem Beispiel 1 keine Basis 2 hat. Unter der Annahme der Gleichung (34) gilt dann: Eine stellwertweise Darstellung von x, unter der Annahme, dass b ein beliebige Basis ist

$$x = b^y \qquad (59)$$

erfolgt als ein Beispiel für eine stellenwertbasierte Aufteilung des maskierten Münzteilsatzes $Z_k$ in $Z_{k,d}$ mit:

$$Z_k = \sum_{d=y}^{n-1} Z_{k,d} = \sum_{d=y}^{n-1} (v_{2,d} \ast b^y \ast H + r_{2,d} \ast G) = \sum_{d=y}^{n-1} (a_d b^d \ast H + r_d \ast G) \qquad (60)$$

wobei $a_j \in \{0, \ldots, b\}$ ist. Der Verschleierungsbetrag r wird gewählt mit:

$$r = \sum_{d=y}^{n-1} r_d \qquad (61)$$

Beispiel 2: Beispielsweise ist der maskierte erhaltene elektronische Münzdatensatz wiederum Zi = 22 * H + 64 * G (in Analogie zu Schritt 301), aber hier ist der Vorgabewert x = 9. Eine ternäre Darstellung des geldwerten Betrags $\upsilon_i$ ist 2 1 1 mit y = 2.

Die ternäre Darstellung des geldwerten Betrags $\upsilon_j$ ist dann 0 11 (als $\upsilon_j$ = 4) und $Z_j$= 4*H, betrachtet werden die rechten y-ten Bits des geldwerten Betrags $\upsilon_i$.

Die ternäre Darstellung des geldwerten Betrags $\upsilon_k$ ist dann 200 (als $\upsilon_k$ = 18), wenn die y-ten Stellen des geldwerten Betrags von $\upsilon_i$ gleich null gesetzt werden. Der zweite maskierte Münzteildatensatz $Z_k$ ist dann:

$$Z_k = 18*H + 64*G \qquad (62)$$
$$= (2*3^2*H + 64*G)$$
$$= Z_{k,2}$$

Die Nachweisprüfung ist dann wie folgt. Das zweite Endgerät M2 versendet (in Analogie zu Schritt 302) den monetären Betrag $\upsilon_k$ und die Liste von $Z_{k,d}$ aus Gleichung (34) für y $\leq$ d < n zur Überwachungsinstanz 2. Die Überwachungsinstanz 2 prüft (in Analogie zu Schritt 303) entsprechend der Gleichung (37).

Bei fehlgeschlagener Prüfung wird das Kommando zurückgewiesen. Bei erfolgreicher Prüfung wird nachgewiesen durch die Überwachungsinstanz 2, dass es für jedes $Z_{k,d}$ ein entsprechendes $a_d$ mit "0 oder n" im Bereich von "0 < n < b" gibt, ohne dass die Werte offengelegt werden. Eine Bereichsprüfung ist erfolgreich, wenn für jedes $a_d$ ein Wert von 0 < n < b vorliegt. Dazu wird eine Ringsignatur verwendet. Mit einer Ringsignatur kann jeder für zwei oder mehr öffentliche Schlüssel nachweisen, dass einer der dazu korrespondierenden privaten Schlüssel bekannt sind, nämlich. Ringsignaturen sind in MAXWELL et.al. "Borromean Ring Signatures", vom 14. Juni 2015, abrufbar unter:https://github.com/Blockstream/borromean_paper/raw/master/borromean_draft_0.01_8c3f9e7.pdf beschrieben und es wird für das Erstellen und Anwenden und Prüfen der Ringsignaturen auf die gesamte Offenbarung in MAXWELL et.al. "Borromean Ring Signatures" Bezug genommen.

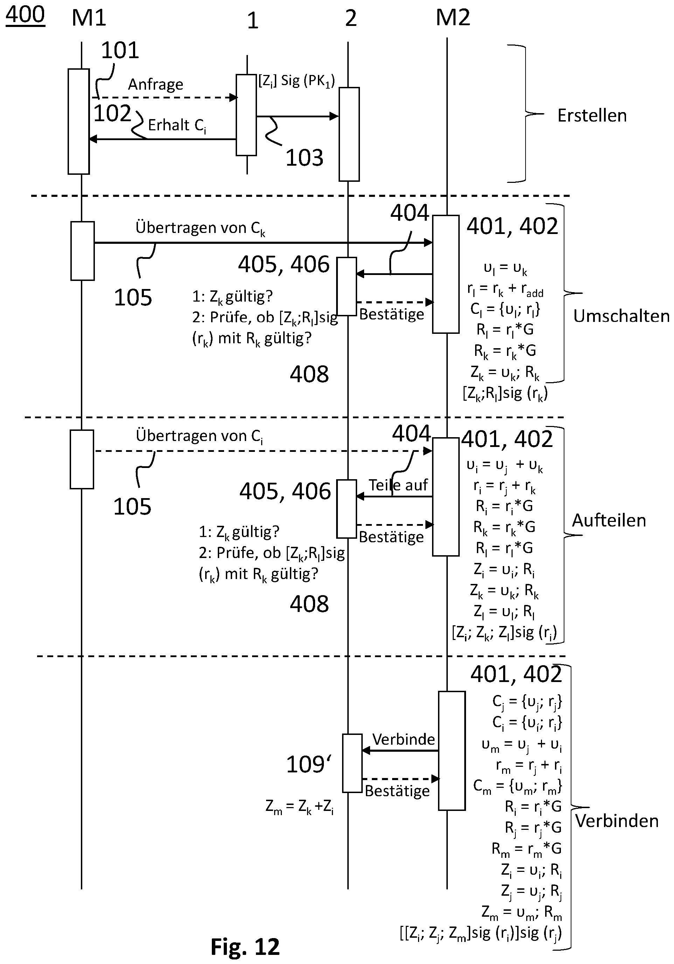

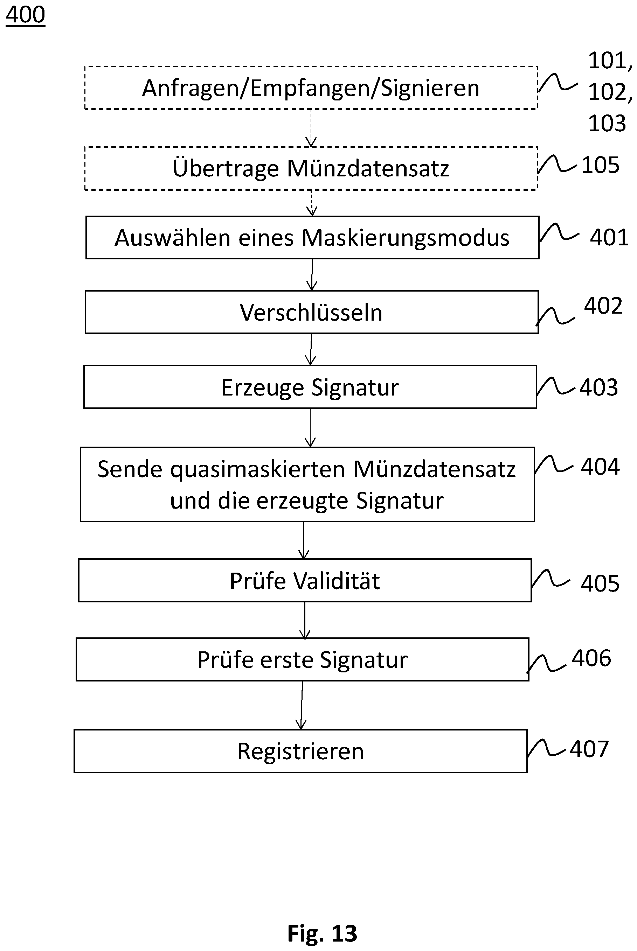

In Figuren 12 und 13 ist ein weiteres Ausführungsbeispiel eines erfindungsgemäßen Verfahrens 400 gezeigt, das den ersten Maskierungsmodus betrifft. Figuren 12 und 13 werden zusammen beschrieben. Die zuvor getroffenen Aussagen aus dem Verfahren 100, 200 und 300 und den einzelnen Verfahrensschritten gelten auch für dieses Verfahren 400, es sei denn, es werden hier andere Aussagen getroffen.

Zunächst wird das Erstellen eines Münzdatensatzes für das Verfahren 400 beschrieben. In den Schritten 101 und 102 wird ein Münzdatensatz angefragt und seitens der Herausgeberinstanz 1 dem ersten Endgerät M1 nach Erstellen des elektronischen Münzdatensatzes bereitgestellt, siehe auch Fig.5 bis 7. Der elektronische Münzdatensatz Ci hat beispielsweise die Struktur gemäß Gleichung (1). Die Herausgeberinstanz 1 berechnet zu dem elektronischen Münzdatensatz Ci einen quasimaskierten Münzdatensatz Zi gemäß Gleichung (3a), der die Struktur gemäß Gleichung (63) hat:

$$Z_i = \{v_i ; R_i\} \qquad (63)$$

, wobei der Wert Ri gemäß der Gleichung (64) definiert ist:

$$R_i = r_i \cdot G \qquad (64)$$

G ist - wie G der Gleichung (3) - ein Generatorpunkt einer elliptischen Kurvenverschlüsselung, ECC, - also ein privater Schlüssel der ECC. Die Herausgeberinstanz 1 signiert gemäß Gleichung (65) den quasi-maskierten Münzdatensatz Zi unter Verwendung eines privaten Signaturschlüssels $PK_1$ der Herausgeberinstanz 1:

$$[v_i ; R_i] sig (PK_1) \qquad (65)$$

Der signierte quasimaskierte elektronische Münzdatensatz wird im Schritt 103 an die Überwachungsinstanz 2 gesendet.

Für das Umschalten eines Münzdatensatzes $C_k$ wird wie folgt vorgegangen. Das erste Endgerät M1 überträgt im Schritt 105 die Münze $C_k$ an das zweite Endgerät M2. Die hier dargestellten Verfahrensschritte 401 bis 407 werden zwar in Bezug auf das zweite Endgerät M2 erläutert, könnten aber auch im ersten Endgerät M1 durchgeführt werden.

Im Schritt 401, der dem Schritt 201 des Verfahrens 200 entspricht, erfolgt (optional) das Auswählen eines Maskierungsmodus. Um ein doppeltes Ausgeben zu verhindern, ist eine Umschalt-Operation (Switch) vorgesehen, um den vom ersten Endgerät M1 erhaltenen elektronischen Münzdatensatz $C_k$ gegen einen neuen elektronischen Münzdatensatz Ci mit gleichem monetärem Betrag auszutauschen. Der neue elektronische Münzdatensatz Ci wird vom zweiten Endgerät M2 generiert. Dabei wird der monetäre Betrag $v_k$ des Münzdatensatzes $C_k$ übernommen und wird nicht verändert zum neuen monetären Betrag $v_l$ siehe auch Gleichung (11). Dann wird gemäß Gleichung (14) ein neuer Verschleierungsbetrag $r_{add}$ zum Verschleierungsbetrag $r_k$ des erhaltenen elektronischen Münzdatensatz $C_k$ hinzugefügt, wodurch ein Verschleierungsbetrag n erhalten wird, den nur das zweite Endgerät M2 kennt.

Die Auswahl gemäß Schritt 401 erfolgt beispielsweise durch einen Benutzer des ersten Endgeräts M1 über eine entsprechende Menüsteuerung am Endgerät M1. Die Auswahl erfolgt beispielsweise aufgrund einer Systemvorgabe anhand des Vorgabewertes x im Bezahlsystem BZ. Beispielsweise kann so, eine Leistungsfähigkeit des Bezahlsystems BZ optimal ausgenutzt werden, sodass ein Aufwand der Nachweisprüfung (siehe auch Schritt 207) auf Basis eines aktuellen Registrier-Anfragevolumen in der Überwachungsinstanz 2 durch entsprechende Auswahl des Maskierungsmodus gesteuert werden kann. Die Auswahl kann auch auf Basis einer Endgeräte-Eigenschaft gewählt werden, beispielsweise bei fehlender Unterstützung eines der Maskierungsmodi kann eine entsprechende Vorauswahl getroffen werden.

Um den aufwendigen Nachweis der Gleichung (15) und (16) nicht durchführen zu müssen, wird nun gemäß Fig. 12 im Schritt 401 der dritte Maskierungsmodus zum Erhalten eines quasimaskierten elektronischen Münzdatensatzes gewählt. Anschließend wird im Schritt 402 der elektronische Münzdatensatz $C_k$ entsprechend der Gleichungen (63), (64) maskiert, um den quasimaskierten elektronischen Münzdatensatz $Z_k$ zu erhalten. Zudem wird der Verschleierungsbetrag gemäß Gleichung (64) verschlüsselt.

Dann wird im Schritt 403 eine erste Signatur gemäß Gleichung (66) erstellt:

$$[Z_k;R_l]sig\ (r_k) \qquad\qquad (66)$$

Diese erste Signatur wird über den im Schritt 402 erstellten quasi-maskierten elektronischen Münzdatensatz $Z_k$ und den im Schritt 402 erstellten verschlüsselten Verschleierungsbetrag Ri mit dem Verschleierungsbetrag $r_l$ als Signaturschlüssel der ersten Signatur erzeugt.

Das Umschalten (als Modifizieren) erfolgt bevorzugt vor dem Sende-Schritt 204. Der im Schritt 404 an die Überwachungsinstanz 2 gesendete quasi-maskierte elektronische Münzdatensatz Zi wird zusammen mit der in Gleichung (66) erzeugten Signatur versendet.

In der Überwachungsinstanz 2 kann eine vereinfachte Bereichsprüfung erfolgen. Diese umfasst zwei Prüfungen. Die erste Prüfung gemäß Schritt 405 ist das Prüfen der Gültigkeit (Validität) des umzuschaltenden quasi-maskierten Münzdatensatzes. Dies erfolgt entsprechend der vorangegangen beschriebenen Art.

Die zweite Prüfung gemäß Schritt 406 dient der Verifizierung der ersten Signatur. Dazu wird der verschlüsselte Verschleierungsbetrag Ri des quasi-maskierten Münzdatensatzes $Z_l$ als öffentlicher Verifikationsschlüssel der ersten Signatur verwendet und geprüft, ob die im Schritt 404 mit übertragene erste Signatur gemäß Gleichung (66) gültig ist. Sind beide Prüfungen erfolgreich, gilt der Münzdatensatz Ci als gültig und eine Registrierung durch die Überwachungsinstanz 2 erfolgt im Schritt 407.

Das Prüfen des Aufteilens (als Modifizieren) eines Münzdatensatzes Ci erfolgt auf vergleichbare Weise, wie das Umschalten. Das erste Endgerät M1 überträgt beispielsweise im Schritt 105 die Münze Ci an das zweite Endgerät M2.

Im Schritt 401 erfolgt das Auswählen des Maskierungsmodus. Um die aufwendigen Nachweise der Gleichung (15) und (16) nicht durchführen zu müssen, wird nun im Schritt 401 der dritte Maskierungsmodus gewählt. Anschließend wird im Schritt 402 der elektronische Münzdatensatz Ci entsprechend der Gleichung (6) und (7) aufgeteilt, um einen ersten Münzteildatensatz $C_j$ und einen zweiten Münzteildatensatz $C_k$ zu erhalten. Zudem werden die Verschleierungsbeträge $r_i$, $r_k$, n mittels der Gleichung (64) zu Ri, $R_k$ und Ri verschlüsselt.

Dann wird im Schritt 403 eine erste Signatur gemäß Gleichung (67) erstellt:

$$[Z_i;\ Z_k;\ Z_l]sig\ (r_i) \qquad\qquad (67)$$

Das Aufteilen (Modifizieren) erfolgt bevorzugt vor dem Senden-Schritt 404. Die im Schritt 404 an die Überwachungsinstanz 2 gesendeten quasimaskierten elektronischen Münzteildatensätze $Z_k$ $Z_j$ werden zusammen mit der ersten Signatur aus Gleichung (67) bzw. entsprechender Konkatenation (vgl. Gleichung (19a)) versendet:

$$[Z_i;\ Z_k;\ Z_l]sig\ (r_i);\ Z_{j;}\ Z_k \qquad (68)$$

In der Überwachungsinstanz 2 kann nun eine vereinfachte Bereichsprüfung erfolgen. Diese umfasst hier vier Prüfungen. Die erste Prüfung ist das Prüfen der Gültigkeit (Validität) des umzuschaltenden unvollständig maskierten Münzdatensatzes. Dies erfolgt entsprechend der vorangegangen beschriebenen Art.

Die zweite Prüfung gemäß Schritt 406 dient der Verifizierung der ersten Signatur. Dazu wird der verschlüsselte Verschleierungsbetrag Ri des quasimaskierten Münzdatensatzes $Z_i$ als öffentlicher Verifikationsschlüssel der ersten Signatur verwendet und geprüft, ob die im Schritt 404 mit übertragene erste Signatur gemäß Gleichung (67) gültig ist.

Die dritte Prüfung gemäß Gleichung (69) dient dem Nachweis, dass kein zusätzliches Geld generiert wurde mit:

$$v_i == v_k + v_l \qquad (69)$$

Die vierte Prüfung ist dann eine Bereichsprüfung in der Überwachungsinstanz 2 mit:

$$v_{min} \le v_k \le v_{max} \qquad (70)$$

$$v_{min} \le v_l \le v_{max} \qquad (71)$$

Sind alle vier Prüfung erfolgreich, wird der quasimaskierte Münzdatensatz Zi ungültig und die Münzteildatensätze $Z_k$ und Zi gültig und entsprechendes in der Überwachungsinstanz registriert.

Das Prüfen des Verbindens (als Modifizieren) von zwei Münzdatensätzen Ci und $C_j$ zu einem verbundenen Münzdatensatzes $C_m$ erfolgt auf vergleichbare Weise. Im Schritt 401 erfolgt das Auswählen des Maskierungsmodus. Um die aufwendigen Nachweise der Gleichung (15) und (16) nicht durchführen zu müssen, wird im Schritt 401 der dritte Maskierungsmodus gewählt. Entsprechend der Gleichungen (63), (64) werden die Verschleierungsbeträge $r_i$, $r_j$, $r_m$ mittels der Gleichung (64) zu $R_i$, $R_j$ und $R_m$ verschlüsselt, um Zi, $Z_j$ und $Z_m$ zu erhalten. Dann wird im Schritt 403 eine erste Signatur gemäß Gleichung (72) erstellt:

$$[Z_i;\ Z_j;\ Z_m]sig\ (r_i) \qquad (72)$$

Dann wird im Schritt 403 die erste Signatur gemäß Gleichung (72) erneut signiert:

$$[[Z_i;\ Z_j;\ Z_m]sig\ (r_i)]sig(r_j) \qquad (73)$$

Das Verbinden (Modifizieren) erfolgt bevorzugt vor dem Senden-Schritt 404. Der im Schritt 404 an die Überwachungsinstanz 2 gesendete quasimaskierte elektronischen Münzteildatensatz $Z_m$ wird zusammen mit der Signatur aus Gleichung (74) bzw. entsprechender Konkatenation (vgl. Gleichung (19a)) versendet:

$$[[Z_i;\ Z_j;\ Z_m]sig\ (r_i)]sig(r_j);\ Z_m \qquad (74)$$

In der Überwachungsinstanz 2 kann nun eine vereinfachte Bereichsprüfung erfolgen. Diese umfasst hier vier Prüfungen. Die erste Prüfung ist das Prüfen der Gültigkeit (Validität) des umzuschaltenden unvollständig maskierten Münzdatensatzes. Dies erfolgt entsprechend der vorangegangen beschriebenen Art.

Die zweite Prüfung gemäß Schritt 406 dient der Verifizierung der Signatur aus Gleichung (73) und der ersten Signatur aus Gleichung (72). Dazu wird der verschlüsselte Verschleierungsbetrag $R_i$ des quasimaskierten Münzdatensatzes Zibzw. der verschlüsselte Verschleierungsbetrag $R_j$ des quasimaskierten Münzdatensatzes $Z_j$ jeweils als öffentlicher Verifikationsschlüssel verwendet und geprüft, ob die im Schritt 404 mit übertragene(n) Signatur(n) gemäß Gleichungen (72) und (73) gültig sind.

Die dritte Prüfung gemäß Gleichung (75) dient dem Nachweis, dass kein zusätzliches Geld generiert wurde mit:

$$v_m == v_i + v_j \qquad (75)$$

Die vierte Prüfung ist dann eine Bereichsprüfung in der Überwachungsinstanz 2 mit:

$$v_{min} \leq v_m \leq v_{max} \qquad (76)$$

Sind alle vier Prüfung erfolgreich, werden quasimaskierten Münzdatensätze Zi und $Z_j$ ungültig und der Münzdatensatz $Z_m$ gültig und entsprechendes in der Überwachungsinstanz 2 registriert.

Das Löschen eines Münzdatensatzes im Verfahren 400 ist in Fig. 12 und 13 nicht dargestellt. Zum Löschen sendet das Endgerät ein entsprechendes Löschen-Kommando an die Überwachungsinstanz 2. In der Überwachungsinstanz 2 wird die gemäß Gleichung (65) erstellte Signatur der Herausgeberinstanz 1 geprüft und bei Übereinstimmung erfolgt ein Ungültigmachen in der Überwachungsinstanz 2.

Im Rahmen der Erfindung können alle beschriebenen und/oder gezeichneten und/oder beanspruchten Elemente beliebig miteinander kombiniert werden.

BEZUGSZEICHENLISTE

| | |
|---|---|
| 1 | Herausgeberinstanz oder Bank |
| 2 | Überwachungsinstanz |
| 21 | Befehls-Eintrag |
| 22a, b | Eintrag eines zu verarbeitenden elektronischen Münzdatensatzes (Vorgänger) |
| 23a, b | Eintrag eines verarbeiteten elektronischen Münzdatensatzes (Nachfolger) |
| 24 | Signatur-Eintrag |
| 25 | Markierung der Gültigkeitsprüfung |
| 26 | Markierung der Berechnungsprüfung |
| 27 | Markierung der Bereichsnachweisprüfung |
| 28 | Markierung der Signatur-Prüfung |
| 3 | Direkttransaktionsschicht |
| 4 | Überwachungsschicht |
| 5 | Applikation gemeinsame Geldbörse |
| 10, | 10' Datenspeicher |
| 11 | Anzeige |
| 12 | Schnittstelle |
| 13 | Recheneinheit |
| 14 | Tresormodul |
| 15 | Standorterkennungs-Modul |
| M1 | erstes Endgerät |
| M2 | zweites Endgerät |
| M3 | drittes Endgerät |
| Ci | elektronischer Münzdatensatz |
| $C_j$, $C_k$ | aufgeteilter elektronischer Münzteildatensatz, |
| Ci | umzuschaltender elektronischer Münzdatensatz |
| $C_m$ | zu verbindendender/verbundener elektronischer Münzdatensatz |
| $Z_i$ | maskierter elektronischer Münzdatensatz |
| $Z_j$, $Z_k$ | maskierter aufgeteilter elektronischer Münzteildatensatz |
| Zi | maskierter umzuschaltender elektronischer Münzdatensatz |
| $Z_m$ | maskierter zu verbindender elektronischer Münzdatensatz |
| $v_i$, | Monetärer Betrag |
| $v_j$, $v_j$ | Aufgeteilter monetärer Betrag |
| $v_l$, | Monetärer Betrag eines umzuschaltenden/umgeschalteten elektr. Münzdatensatzes |
| $v_m$, | Monetärer Betrag eines zu verbindenden/verbundenen elektr. Münzdatensatz |
| $r_i$ | Verschleierungsbetrag, Zufallszahl |
| $r_j$, $r_j$ | Verschleierungsbetrag eines aufgeteilten elektronischen Münzdatensatzes |
| $r_m$ | Verschleierungsbetrag eines zu verbindenden/verbundenen elektronischen Münzdatensatzes |

Ci*          übertragener elektronischer Münzdatensatz

$C_j^*$, $C_k^*$      übertragener aufgeteilter elektronischer Münzteildatensatz,

$Z_i^*$          maskierter übertragener elektronischer Münzdatensatz

$Z_j^*$, $Z_k^*$      maskierter übertragener aufgeteilter elektronischer Münzdatensatz

R          maskierter Verschleierungsbetrag

f(C)         (Homomorphe) Einwegfunktion

$[Z_i]Sig$      Signatur der Herausgeberinstanz

Sig         öffentlicher Verifikationsschlüssel der Signatur

sig          privater Signaturschlüssel der Signatur

w          Zufallszahl

e, p         Element der Ringsignatur

x          Vorgabewert

101-108     Verfahrensschritte gemäß einem Ausführungsbeispiel

201-208     Verfahrensschritte gemäß einem Ausführungsbeispiel

301-309     Verfahrensschritte gemäß einem Ausführungsbeispiel

401-407     Verfahrensschritte gemäß einem Ausführungsbeispiel

**Patentansprüche**

1. Ein Verfahren zum Übertragen von elektronischen Münzdatensätzen ($C_i$, $C_j$, $C_k$, $C_m$, $C_i$) zwischen Endgeräten (M1, M2, M3) zum Bezahlen in einem Bezahlsystem, wobei ein erstes Endgerät (M1) zumindest einen elektronischen Münzdatensatz ($C_i$, $C_j$, $C_k$) aufweist, wobei der zumindest eine elektronische Münzdatensatz (Ci, $C_j$, $C_k$) einen monetären Betrag ($\upsilon_i$, $\upsilon_j$, $\upsilon_k$) und einen Verschleierungsbetrag ($r_i$, $r_j$, $r_k$) als Münzdatensatzelemente aufweist, mit den Schritten:

   - Maskieren (202) eines ersten Münzdatensatzelements des elektronischen Münzdatensatzes (Ci, $C_j$, $C_k$), bevorzugt im ersten Endgerät (M1), durch Anwenden einer Einwegfunktion, die beispielsweise homomorph ist, auf das erste Münzdatensatzelement des elektronischen Münzdatensatzes (Ci, $C_j$, $C_k$) zum Erhalten eines maskierten ersten elektronischen Münzdatensatzelements;

   **gekennzeichnet durch**

   - Hinzufügen eines zweiten, unmaskierten Münzdatensatzelements des elektronischen Münzdatensatzes (Ci, $C_j$, $C_k$) zu dem maskierten ersten elektronischen Münzdatensatzelement im ersten Endgerät (M1) zum Erhalten eines quasi-maskierten elektronischen Münzdatensatzes ($Z_j$, $Z_j$, $Z_k$);
   - Senden (207) des quasi-maskierten elektronischen Münzdatensatzes ($Z_j$, $Z_j$, $Z_k$) an eine Überwachungsinstanz (2) zum Registrieren des elektronischen Münzdatensatzes (Ci, $C_j$, $C_k$); und
   - direktes Übertragen des elektronischen Münzdatensatz (Ci, $C_j$, $C_k$) von dem ersten Endgerät (M1) an ein zweites Endgerät (M2, M3).

2. Das Verfahren nach Anspruch 1, wobei das erste Münzdatensatzelement der Verschleierungsbetrag ($r_i$, $r_j$, $r_k$) des elektronischen Münzdatensatzes (Ci, $C_j$, $C_k$) ist.

3. Das Verfahren nach einem der vorhergehenden Ansprüche, wobei das zweite Münzdatensatzelement:

   - der monetäre Betrag ($\upsilon_i$, $\upsilon_j$, $\upsilon_k$) des elektronischen Münzdatensatzes (Ci, $C_j$, $C_k$) ist, wodurch ein betragsteiloffener maskierter elektronischer Münzdatensatz als der quasi-maskierte elektronische Münzdatensatz erhalten wird, oder
   - ein höherwertiger Betragsanteil des stellenweise in den höherwertigen und einen niederwertigen Betragsanteil aufgeteilten monetären Betrages des elektronischen Münzdatensatzes ist, wodurch ein nur hinsichtlich des höherwertigen Betragsanteils betragsteiloffener elektronischer Münzdatensatz als der quasi-maskierte elektronische Münzdatensatz erhalten wird.

4. Das Verfahren nach einem der vorhergehenden Ansprüche, wobei das Verfahren weiter umfasst:

   - Festlegen (201) eines Maskierungsmodus aus zumindest zwei Maskierungsmodi, wobei in einem ersten Maskierungsmodus der quasi-maskierte elektronische Münzdatensatz ($Z_j$, $Z_j$, $Z_k$) gesendet (207) wird und wobei in einem zweiten Maskierungsmodus der elektronische Münzdatensatz (Ci, $C_j$, $C_k$), bevorzugt im ersten Endgerät (M1), durch Anwenden einer Einwegfunktion (f(C)), die beispielsweise homomorph ist, auf den elektronischen Münzdatensatz (Ci, $C_j$, $C_k$) zum Erhalten eines vollständig maskierten elektronischen Münzdatensatzes ($Z_j$, $Z_j$, $Z_k$) maskiert wird und der vollständig maskierte elektronische Münzdatensatz ($Z_j$, $Z_j$, $Z_k$) gesendet (207) wird.

5. Das Verfahren nach einem der vorhergehenden Ansprüche mit den weiteren Verfahrensschritten:

- Erzeugen einer Signatur unter Verwendung des Verschleierungsbetrags ($r_i$, $r_j$, $r_k$) des elektronischen Münzdatensatzes (Ci, $C_j$, $C_k$); und
- Hinzufügen der Signatur zu dem quasi-maskierten elektronischen Münzdatensatz ($Z_j$, $Z_j$, $Z_k$) oder zu dem vollständig maskierten elektronischen Münzdatensatz oder dem teilbetragsmaskierten elektronischen Münzdatensatz,
- wobei in der Überwachungsinstanz (2) der vollständig maskierten elektronischen Münzdatensatz oder der teilbetragsmaskierte elektronische Münzdatensatz oder der quasimaskierte elektronische Münzdatensatz mit der Signatur registriert wird.

6. Das Verfahren nach einem der Ansprüche 1 bis 5, mit den weiteren Verfahrensschritten:

- Erzeugen einer Signatur unter Verwendung des Verschleierungsbetrags ($r_i$, $r_j$, $r_k$) des elektronischen Münzdatensatzes (Ci, $C_j$, $C_k$); und
- Senden der Signatur zusammen mit dem quasi-maskierten elektronischen Münzdatensatz ($Z_j$, $Z_j$, $Z_k$) oder dem teilbetragsmaskierten elektronischen Münzdatensatz,
- wobei in der Überwachungsinstanz (2) nur der teilbetragsmaskierte elektronische Münzdatensatz oder der quasimaskierte elektronische Münzdatensatz registriert wird.

7. Das Verfahren nach einem der vorhergehenden Ansprüche, wobei die Überwachungsinstanz (2) nur teilbetragsmaskierte oder quasi-maskierte elektronische Münzdatensatz registriert; und/oder nur elektronische Münzdatensätze (Ci, $C_j$, $C_k$) registriert, die zumindest für einen Betragsanteil betragsoffen sind.

8. Das Verfahren nach einem der vorhergehenden Ansprüche mit den weiteren Verfahrensschritten:

- Umschalten des elektronischen Münzdatensatzes (Ci, $C_j$, $C_k$) unter Generieren eines umzuschaltenden elektronischen Münzdatensatzes (Ci), bevorzugt im ersten Endgerät (M1), aus dem elektronischen Münzdatensatzes (Ci, $C_j$, $C_k$), wobei ein Verschleierungsbetrag ($r_l$) für den umzuschaltenden elektronischen Münzdatensatz (Ci) unter Verwendung des Verschleierungsbetrags ($r_i$, $r_j$, $r_k$) des elektronischen Münzdatensatzes (Ci, $C_j$, $C_k$), bevorzugt im ersten Endgerät (M1), erzeugt wird; und der monetäre Betrag ($\upsilon_i$, $\upsilon_j$, $\upsilon_k$) des elektronischen Münzdatensatzes (Ci, $C_j$, $C_k$) als ein monetärer Betrag ($\upsilon_l$) für den umzuschaltenden elektronischen Münzdatensatz (Ci) verwendet wird; und/ oder
- Aufteilen des elektronischen Münzdatensatzes ($C_j$) in einen ersten elektronischen Münzteildatensatz ($C_j$) und einen zweiten elektronischen Münzteildatensatz ($C_k$), bevorzugt im ersten Endgerät (M1), wobei der monetäre Betrag ($\upsilon_i$) in wenigstens einen ersten monetären Betrag ($\upsilon_j$) und einen zweiten monetären Betrag ($\upsilon_k$) aufgeteilt wird; und/ oder
- Verbinden eines ersten und eines zweiten elektronischen Münzdatensatzes (Ci, $C_j$) zu einem verbundenen elektronischen Münzdatensatzes ($C_m$) im ersten Endgerät (M1) mit den Schritten:

   ▪ Berechnen eines Verschleierungsbetrags ($r_m$) für den zu verbindenden elektronischen Münzdatensatz ($C_m$) durch Bilden der Summe aus den jeweiligen Verschleierungsbeträgen des ersten und des zweiten elektronischen Münzdatensatzes ($r_i$, $r_j$); und
   ▪ Berechnen des monetären Betrags ($\upsilon_m$) für den zu verbindenden elektronischen Münzdatensatz ($C_m$) durch Bilden der Summe aus den jeweiligen monetären Beträgen ($\upsilon_i$, $\upsilon_j$) des ersten und des zweiten elektronischen Münzdatensatzes (Ci, $C_j$);

- wobei das Maskieren des elektronischen Münzdatensatzes (Ci, $C_j$, $C_k$) im MaskierenSchritt des ersten, zweiten oder dritten Maskierungsmodus das Maskieren des umzuschaltenden Münzdatensatzes (Ci), des ersten und/ oder zweiten Münzteildatensatzes ($C_j$, $C_k$) und/ oder des verbundenen Münzdatensatzes ($C_m$) umfasst oder wobei das Maskieren des Datensatzelementes, bevorzugt des Verschleierungsbetrags ($r_i$, $r_j$, $r_k$), des elektronischen Münzdatensatzes, das Maskieren des Datensatzelementes, bevorzugt des Verschleierungsbetrags (n), des umzuschaltenden Münzdatensatzes (Ci), des Datensatzelementes, bevorzugt des Verschleierungsbetrags

($r_j$), des ersten und/oder des Datensatzelementes, bevorzugt des Verschleierungsbetrags ($r_k$), des zweiten Münzteildatensatzes ($C_j$, $C_k$) und/oder des Datensatzelementes, bevorzugt des Verschleierungsbetrags ($r_m$), des verbundenen Münzdatensatzes ($C_m$) umfasst, und

- Senden des vollständig maskierten elektronischen Münzdatensatzes ($Z_j$, $Z_j$, $Z_k$, Zi, $Z_m$) oder des quasimaskierten elektronischen Münzdatensatzes oder des teilbetragsmaskierten elektronischen Münzdatensatzes an die Überwachungsinstanz (2), bevorzugt vom ersten Endgerät (M1), an die Überwachungsinstanz (2) zum Prüfen (107) der Validität des elektronischen Münzdatensatzes ($C_i$, $C_j$, $C_k$, $C_i$, $C_m$) durch die Überwachungsinstanz (2).

**9.** Das Verfahren nach Anspruch 8,
wobei nach dem Schritt des Umschaltens der Registrieren-Schritt in der Überwachungsinstanz (2) für den ersten Maskierungsmodus umfasst:

- Empfangen des quasi-maskierten umzuschaltenden elektronischen Münzdatensatzes ($Z_i$) in der Überwachungsinstanz (2);
- Prüfen des quasi-maskierten elektronischen Münzdatensatzes auf Validität in der Überwachungsinstanz (2);
- Prüfen einer, dem quasi-maskierten elektronischen Münzdatensatz hinzugefügten Signatur unter Verwendung des verschlüsselten Verschleierungsbetrags ($R_i$, $R_j$, $R_k$) des elektronischen Münzdatensatzes (Ci, $C_j$, $C_k$) in der Überwachungsinstanz (2); und
- Registrieren des quasi-maskierten umzuschaltenden elektronischen Münzdatensatzes in der Überwachungsinstanz (2), wenn die beiden Prüfen-Schritte erfolgreich sind, wodurch der umzuschaltende elektronische Münzdatensatz (Ci) als gültig gilt;

oder wobei nach dem Schritt des Aufteilens der Registrieren-Schritt in der Überwachungsinstanz (2) für den ersten Maskierungsmodus umfasst:

- Empfangen der quasi-maskierten elektronischen Münzteildatensätze in der Überwachungsinstanz (2);
- Prüfen des quasi-maskierten elektronischen Münzdatensatzes auf Validität in der Überwachungsinstanz;
- Prüfen einer, den quasi-maskierten elektronischen Münzteildatensätzen hinzugefügten Signatur unter Verwendung des maskierten Verschleierungsbetrags ($R_i$) in der Überwachungsinstanz (2);
- Prüfen, ob der monetäre Betrag ($\upsilon_i$) des elektronischen Münzdatensatzes ($C_i$) gleich der Summe aus ersten und zweiten monetären Betrag ($\upsilon_j$, $\upsilon_k$) der elektronischen Münzteildatensätze ($C_j$, $C_k$) ist;
- Registrieren der quasi-maskierten elektronischen Münzteildatensätze in der Überwachungsinstanz (2), wenn die drei Prüfen-Schritte erfolgreich sind, wodurch die elektronischen Münzteildatensätze ($C_j$, $C_k$) als gültig gelten und der aufzuteilende elektronische Münzdatensatz als ungültig.

oder wobei nach dem Schritt des Verbindens der Registrieren-Schritt in der Überwachungsinstanz (2) für den ersten Maskierungsmodus umfasst:

- Empfangen des quasi-maskierten verbundenen elektronischen Münzdatensatz in der Überwachungsinstanz (2);
- Prüfen der quasi-maskierten ersten und zweiten elektronischen Münzdatensätze auf Validität in der Überwachungsinstanz (2);
- Prüfen zweier, den zu verbindenden quasi-maskierten verbundenen elektronischen Münzdatensätzen hinzugefügten Signaturen unter Verwendung der jeweiligen maskierten Münzdatensatzelemente, bevorzugt der maskierten Verschleierungsbeträge ($R_j$) in der Überwachungsinstanz (2);
- Prüfen, ob der monetäre Betrag ($\upsilon_m$) des verbundenen elektronischen Münzdatensatzes ($C_m$) gleich der Summe aus dem ersten und dem zweiten monetären Betrag ($\upsilon_i$, $\upsilon_j$) der ersten und zweiten elektronischen Münzdatensätze (Ci, $C_j$) ist;

Registrieren des quasi-maskierten verbundenen elektronischen Münzdatensatzes in der Überwachungsinstanz (2) wenn die drei Prüfen-Schritte erfolgreich sind, wodurch der verbundene elektronische Münzdatensatz ($C_m$) als gültig gilt und die zwei zu verbindenden elektronischen Münzdatensätze als ungültig.

**10.** Das Verfahren nach einem der Ansprüche 6 bis 9,

wobei die hinzugefügte Signatur eine erste Signatur ist und ein privater Signaturschlüssel zum Erzeugen der ersten Signatur der Verschleierungsbetrag ($r_i$, $r_j$, $r_k$) des elektronischen Münzdatensatzes (Ci, $C_j$, $C_k$) ist; und/oder

wobei die hinzugefügte Signatur eine zweite Signatur ist und ein privater Signaturschlüssel zum Erzeugen der zweiten Signatur aus einer Differenz aus dem Verschleierungsbetrag ($r_i$, $r_j$, $r_k$) des elektronischen Münzdatensatzes ($C_i$, $C_j$, $C_k$) und dem Verschleierungsbetrag (n) für den umzuschaltenden elektronischen Münzdatensatz (Ci) gebildet wird.

11. Das Verfahren nach Anspruch 10, wobei ein öffentlicher Verifikationsschlüssel zum Prüfen der ersten Signatur aus einer Differenz aus dem maskierten elektronischen Münzdatensatz ($Z_i$) und einem Anwenden der kryptografischen Verschlüsselungsfunktion auf den monetären Betrag ($r_i$, $r_j$, $r_k$) des elektronischen Münzdatensatzes (Ci, $C_j$, $C_k$) gebildet wird.

12. Das Verfahren nach Anspruch 10, wobei ein öffentlicher Verifikationsschlüssel zum Prüfen der zweiten Signatur aus einer Differenz aus dem unvollständig maskierten elektronischen Münzdatensatz ($Z_l$) und dem maskierten elektronischen Münzdatensatz ($Z_i$) gebildet wird.

13. Das Verfahren nach einem der vorhergehenden Ansprüche, wobei der zumindest eine elektronische Münzdatensatzes (Ci, $C_j$, $C_k$) von einer Herausgeberinstanz (1) erzeugt wurde, wobei die Herausgeberinstanz (1) einen vollständig maskierten oder teilbetragsmaskierten oder quasi-maskierten elektronischen Münzdatensatz mit ihrer Signatur ($[Z_i]Sig_l$) signiert und wobei diese Signatur ($[Z_i]Sig_l$) in der Überwachungsinstanz (2) hinterlegt wird.

14. Ein Bezahlsystem zum Austausch von monetären Beträgen, wobei das Bezahlsystem umfasst:

   - eine Überwachungsschicht (4) mit einer Datenbank in der vollständig maskierte elektronische Münzdatensätze oder teilbetragsmaskierte elektronische Münzdatensätze oder quasi-maskierte elektronische Münzdatensätze abgelegt sind; und
   - eine Direkttransaktionsschicht (3) mit zumindest zwei Endgeräten (M1, M2, M3), welche ausgebildet ist, das Verfahren (100) nach einem der vorhergehenden Ansprüche 1 bis 13 durchzuführen.

15. Währungssystem, umfassend eine Herausgeberinstanz (1), eine Überwachungsinstanz (2), ein erstes Endgerät (M1) und ein zweites Endgerät (M2, M3), wobei eine Herausgeberinstanz ausgebildet ist, einen elektronischen Münzdatensatzes ($C_i$) zu erstellen, wobei ein vollständig maskierter elektronische Münzdatensatz oder ein teilbetragsmaskierter elektronischer Münzdatensatz oder ein quasi-maskierter elektronischer Münzdatensatz ausgebildet ist, nachweisbar durch die Herausgeberinstanz (1) erstellt zu sein, wobei die Überwachungsinstanz (2) zum Ausführen eines Registrierschritts nach einem der Ansprüche 1 bis 13 ausgebildet ist und das erste und zweite Endgerät (M1, M2, M3) zum Durchführen eines Verfahrens nach einem der Ansprüche 1 bis 13 ausgebildet sind.

**Claims**

1. Method for transferring electronic coin data sets ($C_i$, $C_j$, $C_k$, $C_m$, $C_l$) between terminals (M1, M2, M3) for payment in a payment system, wherein a first terminal (M1) has at least one electronic coin data set ($C_i$, $C_j$, $C_k$), wherein the at least one electronic coin data set ($C_i$, $C_j$, $C_k$) has a monetary amount ($\upsilon_i$, $\upsilon_j$, $\upsilon_k$) and an obfuscation amount ($r_i$, $r_j$, $r_k$) as coin data set elements, comprising the following steps:

   - masking (202) a first coin data set element of the electronic coin data set ($C_i$, $C_j$, $C_k$), preferably in the first terminal (M1), by applying a one-way function, which is homomorphic, for example, to the first coin data set element of the electronic coin data set ($C_i$, $C_j$, $C_k$) in order to obtain a masked first electronic coin data set element;

   **characterized by**

   - adding a second, unmasked coin data set element of the electronic coin data set ($C_i$, $C_j$, $C_k$) to the masked first electronic coin data set element in the first terminal (M1) in order to obtain a quasi-masked electronic coin data set ($Z_i$, $Z_j$, $Z_k$) ;
   - transmitting (207) the quasi-masked electronic coin data set ($Z_i$, $Z_j$, $Z_k$) to a monitoring entity (2) for registering the electronic coin data set ($C_i$, $C_j$, $C_k$); and
   - directly transferring the electronic coin data set ($C_i$, $C_j$, $C_k$) from the first terminal (M1) to a second terminal (M2, M3).

2. Method according to Claim 1, wherein the first coin data set element is the obfuscation amount ($r_i$, $r_j$, $r_k$) of the

electronic coin data set ($C_i$, $C_j$, $C_k$).

3. Method according to either of the preceding claims, wherein the second coin data set element:

    - is the monetary amount ($\upsilon_i$, $\upsilon_j$, $\upsilon_k$) of the electronic coin data set ($C_i$, $C_j$, $C_k$), whereby an amount-part-open masked electronic coin data set is obtained as the quasi-masked electronic coin data set, or
    - is a higher-value amount portion of the monetary amount of the electronic coin data set split at places into the higher-value and a lower-value amount portion, whereby an electronic coin data set which is amount-part-open only with respect to the higher-value amount portion is obtained as the quasi-masked electronic coin data set.

4. Method according to any of the preceding claims, wherein the method further comprises:

    - defining (201) a masking mode from at least two masking modes, wherein in a first masking mode the quasi-masked electronic coin data set ($Z_j$, $Z_j$, $Z_k$) is transmitted (207), and wherein in a second masking mode the electronic coin data set ($C_i$, $C_j$, $C_k$), preferably in the first terminal (M1), is masked by applying a one-way function ($f(C)$), which is homomorphic, for example, to the electronic coin data set ($C_i$, $C_j$, $C_k$) in order to obtain a fully masked electronic coin data set ($Z_j$, $Z_j$, $Z_k$) and the fully masked electronic coin data set ($Z_j$, $Z_j$, $Z_k$) is transmitted (207) .

5. Method according to any of the preceding claims comprising the following further method steps:

    - generating a signature using the obfuscation amount ($r_i$, $r_j$, $r_k$) of the electronic coin data set ($C_i$, $C_j$, $C_k$) ; and
    - adding the signature to the quasi-masked electronic coin data set ($Z_j$, $Z_j$, $Z_k$) or to the fully masked electronic coin data set or to the part-amount-masked electronic coin data set,
    - wherein in the monitoring entity (2) the fully masked electronic coin data set or the part-amount-masked electronic coin data set or the quasi-masked electronic coin data set is registered with the signature.

6. Method according to any of Claims 1 to 5, comprising the following further method steps:

    - generating a signature using the obfuscation amount ($r_i$, $r_j$, $r_k$) of the electronic coin data set ($C_i$, $C_j$, $C_k$) ; and
    - transmitting the signature together with the quasi-masked electronic coin data set ($Z_j$, $Z_j$, $Z_k$) or the part-amount-masked electronic coin data set,
    - wherein in the monitoring entity (2) only the part-amount-masked electronic coin data set or the quasi-masked electronic coin data set is registered.

7. Method according to any of the preceding claims, wherein the monitoring entity (2) registers only part-amount-masked or quasi-masked electronic coin data sets; and/or registers only electronic coin data sets ($C_i$, $C_j$, $C_k$) which are amount-open at least for an amount portion.

8. Method according to any of the preceding claims comprising the following further method steps:

    - switching the electronic coin data set ($C_i$, $C_j$, $C_k$) by way of generating an electronic coin data set (Ci) to be switched, preferably in the first terminal (M1), from the electronic coin data set (Ci, $C_j$, $C_k$), wherein an obfuscation amount ($r_l$) for the electronic coin data set (Ci) to be switched is generated using the obfuscation amount ($r_i$, $r_j$, $r_k$) of the electronic coin data set ($C_i$, $C_j$, $C_k$), preferably in the first terminal (M1); and the monetary amount ($\upsilon_i$, $\upsilon_j$, $\upsilon_k$) of the electronic coin data set ($C_i$, $C_j$, $C_k$) is used as a monetary amount ($\upsilon_l$) for the electronic coin data set (Ci) to be switched; and/or
    - splitting the electronic coin data set ($C_j$) into a first partial electronic coin data set ($C_j$) and a second partial electronic coin data set ($C_k$), preferably in the first terminal (M1), wherein the monetary amount ($\upsilon_i$) is split into at least a first monetary amount ($\upsilon_j$) and a second monetary amount ($\upsilon_k$) ; and/or
    - merging a first and a second electronic coin data set ($C_i$, $C_j$) to form a merged electronic coin data set ($C_m$) in the first terminal (M1), comprising the following steps:

        - calculating an obfuscation amount ($r_m$) for the electronic coin data set ($C_m$) to be merged by forming the sum of the respective obfuscation amounts of the first and second electronic coin data sets ($r_i$, $r_j$); and
        - calculating the monetary amount ($\upsilon_m$) for the electronic coin data set ($C_m$) to be merged by forming the sum of the respective monetary amounts ($\upsilon_i$, $\upsilon_j$) of the first and second electronic coin data set ($C_i$, $C_j$);

- wherein masking the electronic coin data set ($C_i$, $C_j$, $C_k$) in the masking step of the first, second or third masking mode comprises masking the coin data set (Ci) to be switched, the first and/or second partial coin data set ($C_j$, $C_k$) and/or the merged coin data set ($C_m$), or wherein masking the data set element, preferably the obfuscation amount ($r_i$, $r_j$, $r_k$), of the electronic coin data set comprises masking the data set element, preferably the obfuscation amount ($r_l$), of the coin data set (Ci) to be switched, the data set element, preferably the obfuscation amount ($r_j$), the first and/or the second data set element, preferably the obfuscation amount ($r_k$), of the second partial coin data set ($C_j$, $C_k$) and/or the data set element, preferably the obfuscation amount ($r_m$), of the merged coin data set ($C_m$), and

- transmitting the fully masked electronic coin data set ($Z_j$, $Z_j$, $Z_k$, Zi, $Z_m$) or the quasi-masked electronic coin data set or the part-amount-masked electronic coin data set to the monitoring entity (2), preferably from the first terminal (M1), to the monitoring entity (2) for checking (107) the validity of the electronic coin data set ($C_i$, $C_j$, $C_k$, Ci, $C_m$) by means of the monitoring entity (2) .

9. Method according to Claim 8,
   wherein after the switching step, the registering step in the monitoring entity (2) for the first masking mode comprises:

   - receiving the quasi-masked electronic coin data set ($Z_l$) to be switched in the monitoring entity (2);
   - checking the quasi-masked electronic coin data set for validity in the monitoring entity (2);
   - checking a signature added to the quasi-masked electronic coin data set using the encrypted obfuscation amount ($R_i$, $R_j$, $R_k$) of the electronic coin data set ($C_i$, $C_j$, $C_k$) in the monitoring entity (2); and
   - registering the quasi-masked electronic coin data set to be switched in the monitoring entity (2) if the two checking steps are successful, whereby the electronic coin data set (Ci) to be switched is deemed to be valid;

   or wherein after the splitting step, the registering step in the monitoring entity (2) for the first masking mode comprises:

   - receiving the quasi-masked partial electronic coin data sets in the monitoring entity (2);
   - checking the quasi-masked electronic coin data set for validity in the monitoring entity;
   - checking a signature added to the quasi-masked partial electronic coin data sets using the masked obfuscation amount ($R_i$) in the monitoring entity (2);
   - checking whether the monetary amount ($v_i$) of the electronic coin data set ($C_i$) is equal to the sum of the first and second monetary amounts ($v_j$, $v_k$) of the partial electronic coin data sets ($C_j$, $C_k$);
   - registering the quasi-masked partial electronic coin data sets in the monitoring entity (2) if the three checking steps are successful, whereby the partial electronic coin data sets ($C_j$, $C_k$) are deemed to be valid and the electronic coin data set to be split is deemed to be invalid;

   or wherein after the merging step, the registering step in the monitoring entity (2) for the first masking mode comprises:

   - receiving the quasi-masked merged electronic coin data set in the monitoring entity (2);
   - checking the quasi-masked first and second electronic coin data sets for validity in the monitoring entity (2);
   - checking two signatures added to the quasi-masked merged electronic coin data sets to be merged using the respective masked coin data set elements, preferably the masked obfuscation amounts ($R_j$), in the monitoring entity (2) ;
   - checking whether the monetary amount ($v_m$) of the merged electronic coin data set ($C_m$) is equal to the sum of the first and the second monetary amounts ($v_i$, $v_j$) of the first and second electronic coin data sets ($C_i$, $C_j$);
   - registering the quasi-masked merged electronic coin data set in the monitoring entity (2) if the three checking steps are successful, whereby the merged electronic coin data set ($C_m$) is deemed to be valid and the two electronic coin data sets to be merged are deemed to be invalid.

10. Method according to any of Claims 6 to 9,

    wherein the added signature is a first signature and is a private signature key for generating the first signature of the obfuscation amount ($r_i$, $r_j$, $r_k$) of the electronic coin data set ($C_i$, $C_j$, $C_k$); and/or
    wherein the added signature is a second signature and a private signature key for generating the second signature is formed from a difference between the obfuscation amount ($r_i$, $r_j$, $r_k$) of the electronic coin data set ($C_i$, $C_j$, $C_k$) and the obfuscation amount ($r_l$) for the electronic coin data set (Ci) to be switched.

11. Method according to Claim 10, wherein a public verification key for checking the first signature is formed from a difference of the masked electronic coin data set ($Z_i$) and applying the cryptographic encryption function to the

monetary amount ($r_i$, $r_j$, $r_k$) of the electronic coin data set ($C_i$, $C_j$, $C_k$) .

12. Method according to Claim 10, wherein a public verification key for checking the second signature is formed from a difference between the incompletely masked electronic coin data set ($Z_l$) and the masked electronic coin data set ($Z_i$).

13. Method according to any of the preceding claims, wherein the at least one electronic coin data set ($C_i$, $C_j$, $C_k$) was generated by an issuing entity (1), wherein the issuing entity (1) signs a fully masked or part-amount-masked or quasi-masked electronic coin data set with its signature ($[Z_i]Sig_I$), and wherein this signature ($[Z_i]Sig_I$) is stored in the monitoring entity (2).

14. Payment system for exchanging monetary amounts, wherein the payment system comprises:

   - a monitoring layer (4) with a database in which fully masked electronic coin data sets or part-amount-masked electronic coin data sets or quasi-masked electronic coin data sets are stored; and
   - a direct transaction layer (3) with at least two terminals (M1, M2, M3), which is designed to carry out the method (100) according to any of the preceding Claims 1 to 13.

15. Currency system, comprising an issuing entity (1), a monitoring entity (2), a first terminal (M1) and a second terminal (M2, M3), wherein an issuing entity is designed to create an electronic coin data set ($C_i$), wherein a fully masked electronic coin data set or a part-amount-masked electronic coin data set or a quasi-masked electronic coin data set is designed to be verifiably created by the issuing entity (1), wherein the monitoring entity (2) is designed for performing a registering step according to any of Claims 1 to 13 and the first and second terminals (M1, M2, M3) are designed for carrying out a method according to any of Claims 1 to 13.

**Revendications**

1. Procédé de transmission d'ensembles de données monétiques électroniques ($C_i$, $C_j$, $C_k$, $C_m$, $C_l$) entre des terminaux (MI, M2, M3) pour payer dans un système de paiement, un premier terminal (M1) comportant au moins un ensemble de données monétique électronique ($C_i$, $C_j$, $C_k$), l'au moins un ensemble de données monétique électronique ($C_i$, $C_j$, $C_k$) comportant un montant monétaire ($\upsilon_i$ $\upsilon_j$, $\upsilon_k$) et un montant de dissimulation ($r_i$, $r_j$, $r_k$) comme éléments d'ensemble de données monétique, ledit procédé comprenant les étapes suivantes :

   - masquer (202) un premier élément d'ensemble de données monétique de l'ensemble de données monétique électronique ($C_i$, $C_j$, $C_k$), de préférence dans le premier terminal (M1), par application d'une fonction unidirectionnelle, qui est par exemple homomorphe, au premier élément d'ensemble de données monétique de l'ensemble de données monétique électronique ($C_i$, $C_j$, $C_k$) afin d'obtenir un premier élément d'ensemble de données monétique électronique masqué ;

   **caractérisé par** les étapes suivantes

   - ajouter un deuxième élément d'ensemble de données monétique non masqué de l'ensemble de données monétique électronique ($C_i$, $C_j$, $C_k$) au premier élément d'ensemble de données monétique électronique masqué dans le premier terminal (M1) afin d'obtenir un ensemble de données monétique électronique quasi-masqué ($Z_j$, $Z_j$, $Z_k$) ;
   - envoyer (207) l'ensemble de données monétique électronique quasi-masqué ($Z_j$, $Z_j$, $Z_k$) à une instance de surveillance (2) afin d'enregistrer l'ensemble de données monétique électronique ($C_i$, $C_j$, $C_k$); et
   - transmettre directement l'ensemble de données monétique électronique ($C_i$, $C_j$, $C_k$) du premier terminal (M1) à un deuxième terminal (M2, M3).

2. Procédé selon la revendication 1, le premier élément d'ensemble de données monétique étant le montant de dissimulation ($r_i$, $r_j$, $r_k$) de l'ensemble de données monétique électronique ($C_i$, $C_j$, $C_k$) .

3. Procédé selon l'une des revendications précédentes, le deuxième élément d'ensemble de données monétique :

   - étant le montant monétaire ($\upsilon_i$, $\upsilon_j$, $\upsilon_k$) de l'ensemble de données monétique électronique ($C_i$, $C_j$, $C_k$), ce qui permet d'obtenir un ensemble de données monétique électronique masqué à montant partiellement ouvert comme ensemble de données monétique électronique quasi-masqué, ou
- une partie de montant de valeur supérieure du montant monétaire de l'ensemble de données monétique électronique, qui est divisé par endroits en le montant de valeur supérieure et en une partie de montant de valeur inférieure, ce qui permet d'obtenir un ensemble de données monétique électronique à montant partiellement ouvert, uniquement en ce qui concerne la partie de montant de valeur supérieure, comme ensemble de données monétique électronique quasi-masqué.

4. Procédé selon l'une des revendications précédentes, le procédé comprenant en outre l'étape suivante :

- définir (201) un mode de masquage parmi au moins deux modes de masquage, l'ensemble de données monétique électronique quasi-masqué ($Z_j$, $Z_j$, $Z_k$) étant envoyé (207) dans un premier mode de masquage et l'ensemble de données monétique électronique (Ci, $C_j$, $C_k$) étant masqué dans un deuxième mode de masquage, de préférence dans le premier terminal (M1), par application d'une fonction unidirectionnelle (f(C)), qui est par exemple homomorphe, à l'ensemble de données monétique électronique (Ci, $C_j$, $C_k$) afin d'obtenir un ensemble de données monétique électronique entièrement masqué ($Z_j$, $Z_j$, $Z_k$) et l'ensemble de données monétique électronique entièrement masqué ($Z_j$, $Z_j$, $Z_k$) étant envoyé (207).

5. Procédé selon l'une des revendications précédentes comprenant les autres étapes de procédé suivantes :

- générer une signature à l'aide du montant de dissimulation ($r_i$, $r_j$, $r_k$) de l'ensemble de données monétique électronique (Ci, $C_j$, $C_k$) ; et
- ajouter la signature à l'ensemble de données monétique électronique quasi-masqué ($Z_j$, $Z_j$, $Z_k$) ou à l'ensemble de données monétique électronique entièrement masqué ou à l'ensemble de données monétique électronique masqué à montant partiellement masqué,
- l'ensemble de données monétique électronique entièrement masqué ou l'ensemble de données monétique électronique à montant partiellement masqué ou l'ensemble de données monétique électronique quasi-masqué étant enregistré avec la signature dans l'instance de surveillance (2).

6. Procédé selon l'une des revendications 1 à 5, comprenant les autres étapes de procédé suivantes :

- générer une signature à l'aide du montant de dissimulation ($r_i$, rj, $r_k$) de l'ensemble de données monétique électronique (Ci, $C_j$, $C_k$) ; et
- envoyer la signature conjointement avec l'ensemble de données monétique électronique quasi-masqué ($Z_j$, $Z_j$, $Z_k$) ou l'ensemble de données monétique électronique à montant partiellement masqué,
- seul l'ensemble de données monétique électronique à montant partiellement masqué ou l'ensemble de données monétique électronique quasi-masqué étant enregistré dans l'instance de surveillance (2).

7. Procédé selon l'une des revendications précédentes, l'instance de surveillance (2) enregistrant uniquement des ensembles de données monétiques électroniques à montant partiellement masqué ou quasi-masqués ; et/ou uniquement des ensembles de données monétiques électroniques (Ci, $C_j$, $C_k$) sont enregistrés qui sont à montant ouvert au moins pour une partie de montant.

8. Procédé selon l'une des revendications précédentes comprenant les autres étapes de procédé suivantes :

- commuter l'ensemble de données monétique électronique (Ci, $C_j$, $C_k$) par génération d'un ensemble de données monétique électronique (Ci) à commuter, de préférence dans le premier terminal (M1), à partir de l'ensemble de données monétique électronique (Ci, $C_j$, $C_k$),

un montant de dissimulation ($r_i$) destiné à l'ensemble de données monétique électronique (Ci) à commuter étant généré à l'aide du montant de dissimulation ($r_i$, $r_j$, $r_k$) de l'ensemble de données monétique électronique (Ci, $C_j$, $C_k$), de préférence dans le premier terminal (M1) ; et le montant monétaire ($\upsilon_i$, $\upsilon_j$, $\upsilon_k$) de l'ensemble de données monétique électronique (Ci, $C_j$, $C_k$) étant utilisé comme montant monétaire ($\upsilon_l$) destiné à l'ensemble de données électronique monétique (Ci) à commuter ; et/ou

- diviser l'ensemble de données monétique électronique ($C_j$) en une première partie d'ensemble de données monétique électronique ($C_j$) et une deuxième partie d'ensemble de données monétique électronique ($C_k$), de préférence dans le premier terminal (M1), le montant monétaire ($\upsilon_i$) étant divisé en au moins un premier montant monétaire ($\upsilon_j$) et un deuxième montant monétaire ($\upsilon_k$) ; et/ou

- relier un premier et un deuxième ensemble de données monétique électronique (Ci, $C_j$) pour former un ensemble de données monétique électronique relié ($C_m$) dans le premier terminal (M1) avec les étapes suivantes :

■ calculer un montant de dissimulation ($r_m$) destiné à l'ensemble de données monétique électronique à relier ($C_m$) par formation de la somme des montants de dissimulation respectifs des premier et deuxième ensemble de données monétique électroniques ($r_i$, $r_j$) ; et
■ calculer le montant monétaire ($\upsilon_m$) destiné à l'ensemble de données monétique électronique à relier ($C_m$) par formation de la somme des montants monétaires respectifs ($v_i$, $\upsilon_j$) des premier et deuxième ensembles de données monétiques électroniques (Ci, $C_j$) ;

- le masquage de l'ensemble de données monétique électronique (Ci, $C_j$, $C_k$) à l'étape de masquage du premier, deuxième ou troisième mode de masquage comprenant le masquage de l'ensemble de données monétique à commuter (Ci), la première et/ou la deuxième partie d'ensemble de données monétique ($C_j$, $C_k$) et/ou l'ensemble de données monétiques relié ($C_m$) ou le masquage de l'élément d'ensemble de données, de préférence le montant de dissimulation ($r_i$, $r_j$, $r_k$) , de l'ensemble de données monétique électronique, le masquage de l'élément d'ensemble de données, de préférence du montant de dissimulation ($r_l$), de l'ensemble de données monétique à commuter (Ci), l'élément d'ensemble de données, de préférence le montant de dissimulation ($r_j$), le premier et/ou l'élément d'ensemble de données, de préférence le montant de dissimulation ($r_k$), la deuxième partie d'ensemble de données monétique ($C_j$, $C_k$) et/ ou l'élément d'ensemble de données, de préférence le montant de dissimulation ($r_m$), de l'ensemble de données monétique relié ($C_m$), et
- envoyer l'ensemble de données monétique électronique entièrement masqué ($Z_j$, $Z_j$, $Z_k$, $Z_l$, $Z_m$) ou l'ensemble de données monétique électronique quasi-masqué ou l'ensemble de données monétique électronique à montant partiellement masqué à l'instance de surveillance (2), de préférence du premier terminal (M1) à l'instance de surveillance (2), afin de vérifier (107) la validité de l'ensemble de données monétique électronique (Ci, $C_j$, $C_k$, Ci, $C_m$) par le biais de l'instance de surveillance (2).

9. Procédé selon la revendication 8,
après l'étape de commutation, l'étape d'enregistrement dans l'instance de surveillance (2) pour le premier mode de masquage comprenant les étapes suivantes :

- recevoir l'ensemble de données monétique électronique quasi-masqué à commuter ($Z_l$) dans l'instance de surveillance (2) ;
- vérifier la validité de l'ensemble de données monétique électronique quasi-masqué dans l'instance de surveillance (2) ;
- vérifier une signature, ajoutée à l'ensemble de données monétique électroniques quasi-masqué, à l'aide du montant de dissimulation crypté ($R_i$, $R_j$, $R_k$) de l'ensemble de données monétique électronique (Ci, $C_j$, $C_k$) dans l'instance de surveillance (2) ; et
- enregistrer l'ensemble de données monétique électronique quasi-masqué à commuter dans l'instance de surveillance (2) si les deux étapes de vérification sont réussies, ce qui permet de valider l'ensemble de données monétique électronique à commuter ($C_l$) ;

ou après l'étape de division, l'étape d'enregistrement dans l'instance de surveillance (2) pour le premier mode de masquage comprend les étapes suivantes :

- recevoir les parties d'ensemble de données monétique électronique quasi-masqué dans l'instance de surveillance (2) ;
- vérifier la validité de l'ensemble de données monétique électronique quasi-masqué dans l'instance de surveillance ;
- vérifier une signature, ajoutée aux parties d'ensemble de données monétique électroniques quasi-masqué, à l'aide du montant de dissimulation masqué ($R_i$) dans l'instance de surveillance (2) ;
- vérifier si le montant monétaire ($\upsilon_i$) de l'ensemble de données monétique électronique ($C_i$) est égal à la somme des premier et deuxième montants monétaires ($\upsilon_j$, $\upsilon_k$) des parties d'ensemble de données monétique électronique ($C_j$, $C_k$) ;
- enregistrer les parties d'ensemble de données monétique électronique quasi-masquées dans l'instance de surveillance (2) si les trois étapes de vérification sont réussies, ce qui permet de valider les parties d'ensemble de données monétique électronique ($C_j$, $C_k$) et d'invalider l'ensemble de données monétique électronique à diviser,

ou

après l'étape de liaison, l'étape d'enregistrement dans l'instance de surveillance (2) pour le premier mode de masquage comprenant les étapes suivantes :

- recevoir l'ensemble de données monétique électronique quasi-masqué relié dans l'instance de surveillance (2) ;
- vérifier la validité des premier et deuxième ensembles de données monétiques électroniques quasi-masqués dans l'instance de surveillance (2) ;
- vérifier deux signatures, ajoutées aux ensembles de données monétiques électroniques quasi-masqués à relier, à l'aide des éléments d'ensemble de données monétiques masqués respectifs, de préférence les montants de dissimulation masqués ($R_j$) dans l'instance de surveillance (2) ;
- vérifier si le montant monétaire ($v_m$) de l'ensemble de données monétique électronique relié ($C_m$) est égal à la somme des premier et deuxième montants monétaires ($v_i$, $v_j$) des premier et deuxième ensembles de données monétiques électroniques (Ci, $C_j$) ;

enregistrer l'ensemble de données monétique électronique quasi-masqué relié dans l'instance de surveillance (2) si les trois étapes de vérification sont réussies, ce qui permet de valider l'ensemble de données monétique électronique relié ($C_m$) et d'invalider les deux ensembles de données monétiques électroniques à relier.

10. Procédé selon l'une des revendications 6 à 9,

la signature ajoutée étant une première signature et une clé de signature privée destinée à générer la première signature étant le montant de dissimulation ($r_i$, $r_j$, $r_k$) de l'ensemble de données monétique électronique (Ci, $C_j$, $C_k$) ; et/ou
la signature ajoutée étant une deuxième signature et une clé de signature privée destinée à générer la deuxième signature étant formée à partir d'une différence entre le montant de dissimulation ($r_i$, $r_j$, $r_k$) de l'ensemble de données monétique électronique (Ci, $C_j$, $C_k$) et le montant de dissimulation ($r_i$) destiné à l'ensemble de données monétique électronique à commuter (Cl) .

11. Procédé selon la revendication 10, une clé de vérification publique destinée à vérifier la première signature étant formée à partir d'une différence entre l'ensemble de données monétique électronique masqué ($Z_i$) et l'application de la fonction de cryptage cryptographique au montant monétaire ($r_i$, $r_j$, $r_k$) de l'ensemble de données monétique électronique (Ci, $C_j$, $C_k$) .

12. Procédé selon la revendication 10, une clé de vérification publique destinée à vérifier la deuxième signature étant formée à partir d'une différence entre l'ensemble de données monétique électronique incomplètement masqué ($Z_l$) et l'ensemble de données monétique électronique masqué ($Z_i$).

13. Procédé selon l'une des revendications précédentes, l'au moins un ensemble de données monétique électronique (Ci, $C_j$, $C_k$) ayant été généré par une instance émettrice (1), l'instance émettrice (1) signant un ensemble de données monétique électronique entièrement masqué ou à montant partiellement masqué ou quasi-masqué avec sa signature ($[Z_i]Sig_l$) et cette signature ($[Z_i]Sig_l$) étant stockée dans l'instance de surveillance (2).

14. Système de paiement destiné à échanger des montants monétaires, le système de paiement comprenant :

- un couche de surveillance (4) pourvue d'une base de données dans laquelle sont stockés des ensembles de données monétiques électroniques entièrement masqués ou des ensembles de données monétiques électroniques à montant partiellement masqué ou des ensembles de données monétiques électroniques quasi-masqués ; et
- une couche de transaction directe (3) pourvue d'au moins deux terminaux (M1, M2, M3), qui est conçue pour mettre en œuvre le procédé (100) selon l'une des revendications précédentes 1 à 13.

15. Système monétaire, comprenant une instance émettrice (1), une instance de surveillance (2), un premier terminal (M1) et un deuxième terminal (M2, M3), une instance émettrice étant conçue pour créer un ensemble de données monétique électronique ($C_i$), un ensemble de données monétique électronique entièrement masqué ou un ensemble de données monétique électronique à montant partiellement masqué ou un ensemble de données monétique électronique quasi-masqué étant conçu pour être créé de manière vérifiable par l'instance émettrice (1), l'instance de surveillance (2) étant conçue pour réaliser une étape d'enregistrement selon l'une des revendications 1 à 13 et les premier et deuxième terminaux (M1, M2, M3) étant conçus pour mettre en œuvre un procédé selon l'une des revendications 1 à 13.

**Fig. 1**

| Kommando | $O_1$ | $O_2$ | $S_1$ | $S_2$ | Signatur | O-Flag | C-Flag | R-Flag | S-Flag |
|---|---|---|---|---|---|---|---|---|---|
| Erzeugen | - | - | $Z_i$ | - | $[Z_i]Sig_l$ | - | - | - | [0,1] |
| Deaktivieren | $Z_i$ | - | - | - | $[Z_i]Sig_l$ | [0,1] | - | - | [0,1] |
| Aufteilen | $Z_i$ | - | $Z_j$ | $Z_k$ | *Sig* | [0,1] | [0,1] | [0,1] | - |
| Verbinden | $Z_i$ | $Z_j$ | - | $Z_m$ | *Sig 1,2* | [0,1] | [0,1] | [0,1] | - |
| Umschalten | $Z_k$ | - | - | $Z_l$ | *Sig* | [0,1] | [0,1] | [0,1] | - |

21  22a 22b 23a 23b  24  25  26  27  28

2

**Fig. 2**

**Fig. 3**

$$C_i$$

$$C_j$$

$$C_i;\ C_j$$
$$\upsilon_m = \upsilon_i + \upsilon_j$$
$$r_m = r_i + r_j$$
$$C_m = \{\upsilon_m;\ r_m\}$$
$$Z_m = f(C_m)$$

M1

M3

M2

3

$$Z_i;\ Z_j$$

$$Z_m$$

| Kommando | $O_1$ | $O_2$ | $S_1$ | $S_2$ | Signatur | O-Flag | C-Flag | R-Flag | S-Flag |
|---|---|---|---|---|---|---|---|---|---|
| Verbinden | $Z_i$ | $Z_j$ | - | $Z_m$ | *Sig 1, 2* | [0,1] | [0,1] | [0,1] | - |

2

**Fig. 4**

**Fig. 5**

M1      1      2      M2

$110'$

Teile auf

110

$Z_i = Z_k + Z_i$

Bestätige

$v_i = v_k + v_j$

$r_i = r_k + r_j$

$C_k = \{v_k; r_k\}$

$C_j = \{v_j; r_j\}$

$Z_k = f(C_k);$

$Z_j = f(C_j);$

Erzeuge Sig.

asymmetrisches
Aufteilen

**Fig. 6**

100

```
┌ ─ ─ ─ ─ ─ ─ ─ ─ ─ ─ ─ ─ ─ ─ ─ ─ ─ ─ ─ ─ ┐
│        Anfragen einer Net-Note         ╎ ∿ 101
└ ─ ─ ─ ─ ─ ─ ─ ─ ─ ─ ─ ─ ─ ─ ─ ─ ─ ─ ─ ─ ┘
                    ↓
┌ ─ ─ ─ ─ ─ ─ ─ ─ ─ ─ ─ ─ ─ ─ ─ ─ ─ ─ ─ ─ ┐
│          Empfange Net-Note             ╎ ∿ 102
└ ─ ─ ─ ─ ─ ─ ─ ─ ─ ─ ─ ─ ─ ─ ─ ─ ─ ─ ─ ─ ┘
                    ↓
┌───────────────────────────────────────┐
│          Maskiere Net-Note            │ ∿ 103
└───────────────────────────────────────┘
                    ↓
┌───────────────────────────────────────┐
│         Registriere Net-Note          │ ∿ 104
└───────────────────────────────────────┘
                    ↓
┌───────────────────────────────────────┐
│          Übertrage Net-Note           │ ∿ 105
└───────────────────────────────────────┘
                    ↓
┌ ─ ─ ─ ─ ─ ─ ─ ─ ─ ─ ─ ─ ─ ─ ─ ─ ─ ─ ─ ─ ┐
│       Maskiere erhaltene Net-Note      ╎ ∿ 106
└ ─ ─ ─ ─ ─ ─ ─ ─ ─ ─ ─ ─ ─ ─ ─ ─ ─ ─ ─ ─ ┘
                    ↓
┌ ─ ─ ─ ─ ─ ─ ─ ─ ─ ─ ─ ─ ─ ─ ─ ─ ─ ─ ─ ─ ┐
│            Prüfe Validität             ╎ ∿ 107
└ ─ ─ ─ ─ ─ ─ ─ ─ ─ ─ ─ ─ ─ ─ ─ ─ ─ ─ ─ ─ ┘
                    ↓
┌ ─ ─ ─ ─ ─ ─ ─ ─ ─ ─ ─ ─ ─ ─ ─ ─ ─ ─ ─ ─ ┐        108,
│         Umschalten/Verbinden/          ╎ ∿      109,
│        asymmetrisches Aufteilen        ╎        110
└ ─ ─ ─ ─ ─ ─ ─ ─ ─ ─ ─ ─ ─ ─ ─ ─ ─ ─ ─ ─ ┘
```

**Fig. 7**

**Fig. 8**

200

| Anfragen einer Net-Note | 101 |
| Empfange Net-Note | 102 |
| Übertrage Münzdatensatz | 105 |
| Auswählen eines Maskierungsmodus | 201 |
| Maskieren bzw. Verschlüsseln | 202, 202' |
| Erzeuge Signatur und/oder Hinzufügen | 203 |
| Sende maskierten Münzdatensatz (und Signatur) | 204 |
| Prüfe Validität | 205 |
| Prüfe erste Signatur | 206 |
| Prüfe zweite Signatur | 207 |
| Registrieren | 208 |

**Fig. 9**

**Fig. 10**

300   M1                                    2        M2

105

⌇ Übertragen von C_i
- - - - - - - - - - - - - - - - - - - - →

                                                    301

                              302
                                            Z_i = 22*H +64*G
              303                           in Z_j und Z_k mit:
                                            x = 8
  1: $Z_i = \sum_{d=y}^{n-1} Z_{k,d} + \upsilon_k * H$        y = 3
  2: Hat jedes $Z_{k,d}$ ein $a_d$ mit
     „0" oder „1"
                              305        304
                                            $e_1 := h(w*G)$
                                            $e_0 := h(p_1*G-e_1*Z_{k,d}')$
              306                           $p_0 := w+ e_0*r_d$

  1: e1    = h(p0*G-e0*Zk,d')
           = h(w*G),                    {e_0, p_0, p_1}
  2: e0'   = h(p*G-e1*Zk,d'
  3: e0'   = e0 ?

- - - - - - - - - - - - - - - - - - - - - - - - - - - - - -

              Übertragen von C_i
- - - - - - - - - - - - - - - - - - - - →

                                                    301
  105
                              302        Z_i = 22*H +64*G
                                            in Z_j und Z_k mit:
              303                           x = 8
                                            y = 3
  1: $Z_i = \sum_{d=y}^{n-1} Z_{k,d} + \upsilon_k * H$
  2: Hat jedes $Z_{k,d}$ ein $a_d$ mit
     „0" oder „1"
                              308        307
                                            $e_2 := h(w*G)$
                                            $e_1 := h(p_0*G-e_2*Z_{k,d})$
              309                           $p_1 := w + e_1*r_d$
                                            $e_0 = h(p_1*G-e_1*Z_{k,d}')$
  1: $e_1 = h(p_0*G-e_1*Z_{k,d})$         $e_0 = e_2$
  2: $e_0' = h(p_1*G-e_1*Z_{k,d})$      {e_0, p_0, p_1}
  3: $e_0' = e_0$ ?

Szenario 1

Szenario 2

**Fig. 11**

63

**Fig. 12**

## 400

```
┌ ─ ─ ─ ─ ─ ─ ─ ─ ─ ─ ─ ─ ─ ─ ─ ─ ─ ─ ─ ┐        101,
│      Anfragen/Empfangen/Signieren      │  ∿    102,
└ ─ ─ ─ ─ ─ ─ ─ ─ ─ ─ ─ ─ ─ ─ ─ ─ ─ ─ ─ ┘        103
```

┌ ─ ─ ─ ─ ─ ─ ─ ─ ─ ─ ─ ─ ─ ─ ─ ─ ─ ─ ─ ┐
│        Übertrage Münzdatensatz         │  ∿ 105
└ ─ ─ ─ ─ ─ ─ ─ ─ ─ ─ ─ ─ ─ ─ ─ ─ ─ ─ ─ ┘

| Auswählen eines Maskierungsmodus | ∿ 401

| Verschlüsseln | ∿ 402

| Erzeuge Signatur | ∿ 403

| Sende quasimaskierten Münzdatensatz und die erzeugte Signatur | ∿ 404

| Prüfe Validität | ∿ 405

| Prüfe erste Signatur | ∿ 406

| Registrieren | ∿ 407

**Fig. 13**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009038645 A1
- DE 102009034436 A1
- WO 2016200885 A1
- EP 3549082 A2
- US 20160358165 A1

**In der Beschreibung aufgeführte Nicht-Patentliteratur**

- **ISABELLE SIMPLOT-RYL.** Distributed architecture for electronic cash schemes: a survey. *International Journal of parallel, emergent and distributed systems,* 01. Juni 2009, vol. 24 (3), 243-271
- **MAXWELL.** *Borromean Ring Signatures,* 14. Juni 2015, https://github.com/Blockstream/borromean_paper/raw/master/borromean_draft_0.01_8c3f9e7.pdf